(19) Europäisches Patentamt
European Patent Office
Office européen des brevets

(11) **EP 2 262 330 A1**

(12) **EUROPEAN PATENT APPLICATION**
published in accordance with Art. 153(4) EPC

(43) Date of publication:
**15.12.2010 Bulletin 2010/50**

(21) Application number: **09722616.1**

(22) Date of filing: **19.03.2009**

(51) Int Cl.:
***H04W 52/54*** *(2009.01)* ***H04W 28/12*** *(2009.01)*
***H04W 52/24*** *(2009.01)*

(86) International application number:
**PCT/JP2009/055503**

(87) International publication number:
**WO 2009/116644 (24.09.2009 Gazette 2009/39)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **21.03.2008 CN 200810084423**

(71) Applicant: **Sharp Kabushiki Kaisha**
**Osaka-shi, Osaka 545-8522 (JP)**

(72) Inventors:
- **DING, Ming**
**Pudong, Shanghai 201203 (CN)**
- **LIU, Renmao**
**Pudong, Shanghai 201203 (CN)**
- **LIANG, Yongming**
**Pudong, Shanghai 201203 (CN)**
- **CHEN, Chen**
**Pudong, Shanghai 201203 (CN)**
- **HUANG, LEi**
**Pudong, Shanghai 201203 (CN)**

(74) Representative: **Müller - Hoffmann & Partner**
**Patentanwälte**
**Innere Wiener Strasse 17**
**81667 München (DE)**

# (54) GENERATION UNIT OF INTERFERENCE OVERLOAD INDICATOR, GENERATION METHOD OF INTERFERENCE OVERLOAD INDICATOR, GENERATION CONTROLLER OF INTERFERENCE OVERLOAD INDICATOR, GENERATION CONTROL METHOD OF INTERFERENCE OVERLOAD INDICATOR, INDICATION METHOD OF INTERFERENCE OVERLOAD, AND BASE STATION

(57) The present invention provides an interference-overload-indicator generating device, a method of generating an interference overload indicator, an interference-overload-indicator generation controller, a method of controlling interference-overload-indicator generation, and a method of indicating interference overload, and a base station utilizing these methods, each of which is used in an uplink FDMA cellular communication system.

The base station includes an interference-overload-indicator generation control sub-system (1000), an interference-overload-indicator generation sub-system (2000), and a transmitting/receiving sub-system (3000). The interference-overload-indicator generation control sub-system (1000) judges whether or not a condition to initiate interference indicator generation is satisfied, and activates the interference-overload-indicator generation sub-system (2000) only when the condition is satisfied. This makes it possible to reduce a signaling size of the interference indicator. For further reducing the signaling size, an interference indicator signaling is generated by a method such as differential coding, state coding, or a bitmap, and transmitted. According to the present invention, an interference overload indicator generation control mechanism is relatively simple and the signaling size of the interference indicator is small.

FIG. 2A

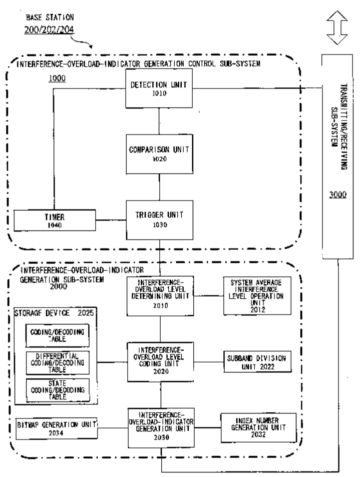


EP 2 262 330 A1

## Description

### Technical Field

The present invention relates to a generation control mechanism of an uplink interference overload indicator in a field of communications technology and design of a signaling (order) of the uplink interference overload indicator, in particular, to an interference-overload-indicator generating device, a method of generating an interference overload indicator, an interference-overload-indicator generation controller, a method of controlling interference-overload-indicator generation, a method of indicating an interference overload, and a base station each of which is used in an uplink frequency division multiplexing (FDMA) cellular communication system. The present invention describes in detail a method (mechanism) of controlling interference-overload-indicator generation and a signaling (a method of controlling generation) of the interference overload indicator, and a base station that employs the methods.

### Background Art

The 3GPP (the 3rd Generation Partner Project) organization is an international organization in a filed of mobile communications and plays an important role in standardization of the 3G cellular communications technology. In Release 6 of the 3GPP Standard, HSUPA (High-Speed Uplink Packet Access) technology is added. The HSUPA technology exercises a high-speed uplink scheduling technology at base stations, according to an OFDMA (Orthogonal Frequency Division Multiple Access) technique. Thereby, in a case where a plurality of user devices carry out uplink data transmission, each user device is allowed to use a different frequency spectrum resource. Note that the OFDMA technique belongs to an FDMA (Frequency Division Multiple Access) technique. At the same time as establishment of HSUPA-related standards, the 3GPP organization started designing EUTRA (Evolved UMTS Terrestrial Radio Access) and EUTRAN (Evolved UMTS Terrestrial Radio Access Network) in the second half of 2004. This is also called an LTE (Long Term Evolution) project. An LTE system employs an SC-OFDMA (SC-Orthogonal Frequency Division Multiple Access) technique and the high-speed resource scheduling technology at base stations. Note that the SC-OFDMA technique also belongs to the OFDMA technique.

In the LTE system, interference in a subzone of a cellular system is removed by scheduling in a frequency region of a base station. However, interference between subzones still remains. In a cellular system, generally, a service area is divided into a plurality of regular hexagonal subzones. In an uplink cellular system, a base station of a subzone allocates an uplink wireless resource (hereinafter, abbreviated as a resource) to user devices. The resource, in general, includes a time slot resource or a frequency spectrum resource. In some cases, the resource also includes a code word resource or the like. In an actual system, entire resources are used in a multiple manner in all cells. Accordingly, in a case where one resource is allocated to two user devices in two adjacent cells, co-channel interference occurs between the two user devices. Such interference becomes more prominent in a case where both the two user devices are positioned on a boundary of cells (on cell edges). Accordingly, it is required to reduce the co-channel interference between the user devices by a method for accommodating the co-channel interference.

The following technical literatures disclose a technique for an uplink FDMA cellular system. In the technique, interference between cells is reduced mainly by use of an interference indication method.

(1) Method Of Indicating Interference Overload Based On Frequency Band

A base station measures an intensity of interference that a resource receives from a user device in an adjacent base station, by using each frequency band as a unit. In a case where the interference exceeds a predetermined threshold value, the base station judges that interference overload occurs in the base station. Then, the base station ominidirectionally transmits an interference overload indicator to adjacent base stations by a trigger method, in a background communication mode. In the indicator, each frequency band is used as a unit for reporting, and the indicator explicitly indicates whether or not interference overload occurs in each frequency band. A base station having received the interference overload indicator checks a resource use condition in a past predetermined period. Then, this base station having received the interference overload indicator takes a step of, for example, lowering a transmission power (launch power) of a user device having received a frequency band corresponding to the interference overload indicator, changing allocation of a resource (resource scheduling), or the like, so that the interference is reduced (accommodated). The method of indicating an interference overload based on frequency bands is simple and flexible, and allows for quick response to interference (See Non-Patent Literature 1).

(2) Interference-Overload-Indicator Generation Control Mechanism

A typical generation control mechanism includes the followings: (i) interference in a frequency band exceeds a threshold value; (ii) average interference changes to a relatively large extent in a whole system bandwidth (a system bandwidth of, e.g., 20 MHz, 10 MHz, 5 MHz or the like of a base station); (iii) service quality of uplink data is poor; (iv) a loaded condition of a cell changes to a relatively large extent; (v) an interference overload indicator has not been transmitted for a long period of time; and the like (See Non-Patent Literature 2).

However, in the interferences-overload-indicator generation control mechanism according to the method (1), an interference overload indicator is transmitted between base stations at relatively frequent intervals and a signaling size (overhead) is relatively large. Meanwhile, the method (2) provides a plurality of interference overload indicator generation control mechanisms, however a signaling of the interference overload indicator is not discussed.

Citation List

Non-Patent Literature 1
3GPP, R1-074891, "Uplink ICIC and usage of OI for overload coordination", Nokia Siemens Networks, Nokia (November 5-9, 2007)
Non-Patent Literature 2
3GPP, R1-080751, "Uplink Inter-Cell Power Control: X2 Messages", Motorola (February 11-15, 2008)

Summary of Invention

The present invention is attained in view of problems of conventional techniques. The problems are such that an interference-indicator generation control mechanism is not sufficiently reasonable, and that a signaling size of an interference indicator is relatively large. An object of the present invention is to provide a control mechanism of generation of an interference indicator for an uplink FDMA cellular system and a signaling method of the interference indicator, and a base station using these methods.

The present invention provides a method for realizing a control mechanism of generation of an interference indicator for an uplink FDMA cellular system and for realizing a signaling of the interference indicator, and a base station using the method. In the method, first, it is determined whether or not a base station satisfies a condition for initiating generation of an interference indicator. Secondary, only in a case where the condition is satisfied, the interference indicator generation is initiated. This reduces a signaling size of the interference indicator. Further, for further reducing the signaling size, a signaling of the interference indicator is transmitted, by use of a method such as differential coding, state coding and a bitmap. According to the present invention, the interference-indicator generation control mechanism becomes relatively simple and a signaling size of the interference indicator becomes small.

The first aspect of the present invention provides an interference-overload-indicator generating device used in an uplink frequency division multiplexing cellular communication system, the interference-overload-indicator generating device including: a determination unit for determining, according to a preset condition, interference overload levels respectively corresponding to frequency spectrum resource blocks used in uplink data transmission; a coding unit for generating interference overload codes or interference overload state codes by carrying out coding or state coding of the interference overload levels respectively corresponding to the frequency spectrum resource blocks, the interference overload levels being determined by the determination unit; and an interference-overload-indicator generation unit for generating an interference overload indicator, in accordance with the interference overload codes or the interference overload state codes generated by the coding unit, the interference overload indicator reflecting the interference overload levels respectively corresponding to the frequency spectrum resource blocks. The codes here indicate signs, data bit rows such as data sequences, or data bits.

Preferably, each of the interference overload levels has a plurality of levels; and the determination unit determines, according to the preset condition, each of the interference overload levels to one of the plurality of levels.

Preferably, the preset condition is set based on at least one of a threshold value of an interference-to-noise ratio in a frequency spectrum resource block, a threshold value of an interference value, a threshold value of a satisfaction level on service quality, a loaded state, a condition where interference is received, and a number of users on a boundary of cells.

Preferably, the interference-overload-indicator generating device sets the preset condition by communication with another interference-overload-indicator generating device in the uplink frequency division multiplexing cellular communication system, and makes the preset condition available in the uplink frequency division multiplexing cellular communication system.

Preferably, the coding unit generates the interference overload codes respectively corresponding to the frequency spectrum resource blocks by carrying out coding of the interference overload levels respectively corresponding to the frequency spectrum resource blocks, the interference overload levels being determined by the determination unit;

and each of the interference overload codes generated corresponds, in a one-to-one relation, to one of the plurality of interference overload levels.

Preferably, the coding unit generates high interference overload codes by carrying out coding of interference overload levels respectively corresponding to frequency spectrum resource blocks each having an interference overload level except a lowest interference overload level; and each of the high interference overload codes generated corresponds, in a one-to-one relation, to one of the plurality of interference overload levels except the lowest interference overload level.

Preferably, the interference-overload-indicator generating device further includes: a system average interference level operation unit for obtaining an interference overload level in a system bandwidth of the uplink frequency division multiplexing cellular communication system, wherein: the coding unit generates an average interference overload code by carrying out coding of the interference overload level obtained by the system average interference level operation unit; the coding unit generates interference overload system-average codes respectively corresponding to frequency spectrum resource blocks each having an interference overload level higher than the interference overload level in the system bandwidth, by carrying out coding of the interference overload levels respectively corresponding to the frequency spectrum resource blocks each having the interference overload level higher than the interference overload level in the system bandwidth; and each of the interference overload system-average codes generated corresponds, in a one-to-one relation, to one of the plurality of interference overload levels.

Preferably, the interference-overload-indicator generating device further includes: a storage unit for storing a differential coding/decoding table, wherein: the coding unit selects one frequency spectrum resource block as a reference frequency spectrum resource block; and the coding unit generates interference overload differential codes by sequentially carrying out differential coding of an interference overload code corresponding to a frequency spectrum resource block being adjacent to the reference frequency spectrum resource block, the differential coding being carried out according to the differential coding/decoding table stored in the storage unit.

Preferably, the interference-overload-indicator generating device further includes: a storage unit for storing a differential coding/decoding table, wherein: the coding unit selects one frequency spectrum resource block as a reference frequency spectrum resource block, the one frequency spectrum resource block having the interference overload level except the lowest interference overload level; and the coding unit generates high-interference overload differential codes by sequentially carrying out, according to the differential coding/decoding table stored in the storage unit, differential coding of an interference overload code corresponding to a frequency spectrum resource block being adjacent to the reference frequency spectrum resource block, the frequency spectrum resource block having the interference overload level except the lowest interference overload level.

Preferably, the interference-overload-indicator generating device further includes: a subband division unit for dividing all the frequency spectrum resource blocks into a plurality of subbands; and a storage unit storing a differential coding/decoding table, wherein: the coding unit selects, as a reference frequency spectrum resource block, one frequency spectrum resource block in each of the plurality of subbands into which all the frequency spectrum resource blocks are divided by the subband division unit; and the coding unit generates interference overload differential codes corresponding to the each subband, by sequentially carrying out differential coding of an interference overload code corresponding to a frequency spectrum resource block being adjacent to the reference frequency spectrum resource block, the differential coding being carried out according to the differential coding/decoding table stored in the storage device.

Preferably, the interference-overload-indicator generating device further includes: a system average interference level operation unit for obtaining an interference overload level in a system bandwidth in the uplink frequency division multiplexing cellular communication system; and a storage unit for storing a differential coding/decoding table, wherein: the coding unit generates an average interference overload code by carrying out coding of the interference overload level obtained by the system average interference level operation unit; and the coding unit generates interference overload system-average differential codes by sequentially carrying out differential coding of an interference overload code corresponding to a frequency spectrum resource block, the differential coding being carried out according to the average interference overload code and the differential coding/decoding table stored in the storage device.

Preferably, the interference-overload-indicator generation unit generates the interference overload indicator by sequentially cascading, in the order of the frequency spectrum resource blocks, corresponding interference overload codes.

Preferably, the interference-overload-indicator generating device further includes: an index number generation unit for generating frequency spectrum resource block index numbers each indicative of a frequency spectrum resource block having an interference overload level except a lowest interference overload level, wherein: the interference-overload-indicator generation unit generates interference overload codes respectively corresponding to high interference overload resource blocks, each of the interference overload codes being generated by cascading the frequency spectrum resource block index number and a corresponding interference overload code or high interference overload code; and the interference-overload-indicator generation unit generates the interference overload indicator by cascading the interference overload codes generated, the interference overload codes respectively corresponding to the high interference overload resource blocks.

Preferably, the interference-overload-indicator generating device further includes: a bitmap generation unit for generating a bitmap indicative of each of the frequency spectrum resource blocks, wherein: the bitmap generation unit distinguishes, in the bitmap, frequency spectrum resource blocks each having a lowest interference overload level from frequency spectrum resource blocks each having an interference overload level except the lowest interference overload level, by allocating different bit values; and the interference-overload-indicator generation unit generates the interference overload indicator by sequentially cascading the bitmap and the interference overload codes or the high interference overload codes respectively corresponding to frequency spectrum resource blocks each having an interference overload level except the lowest interference overload level, in the order of the frequency spectrum resource blocks.

Preferably, the interference-overload-indicator generating device further includes: an index number generation unit for generating frequency spectrum resource block index numbers each indicative of a frequency spectrum resource block having an interference overload level higher than the interference overload level in the system bandwidth, wherein: the interference-overload-indicator generation unit generates interference overload codes respectively corresponding to high interference overload resource blocks, the interference overload codes each being generated by cascading a frequency spectrum resource block index number and a corresponding interference overload system-average code; and the interference-overload-indicator generation unit generates the interference overload indicator by cascading the average interference overload code, and the interference overload codes- generated, the interference overload codes respectively corresponding to the high interference overload resource blocks.

Preferably, the interference-overload-indicator generating device further includes: a bitmap generation unit generating a bitmap indicative of each of the frequency spectrum resource blocks, wherein: the bitmap generation unit distinguishes, in the bitmap, frequency spectrum resource blocks each having the interference overload level higher than the interference overload level in the system bandwidth from frequency spectrum resource blocks each having other interference overload level, by allocating different bit values; and the interference-overload-indicator generation unit generates the interference overload indicator by sequentially cascading the average interference overload code, the bitmap and the interference overload system-average codes respectively corresponding to frequency spectrum resource blocks each having the interference overload level higher than the interference overload level in the system bandwidth, in the order of the frequency spectrum resource blocks.

Preferably, the interference-overload-indicator generation unit generates the interference overload indicator by sequentially cascading the interference overload code corresponding to the reference frequency spectrum resource block and the interference overload differential codes respectively corresponding to the other frequency spectrum resource blocks, in the order of the other frequency spectrum resource blocks.

Preferably, the interference-overload-indicator generating device further includes: a bitmap generation unit for generating a bitmap indicative of each of the frequency spectrum resource blocks, wherein: the bitmap generation unit distinguishes, in the bitmap, frequency spectrum resource blocks each having a lowest interference overload level from frequency spectrum resource blocks each having an interference overload level except the lowest interference overload level, by allocating different bit values; and the interference-overload-indicator generation unit generates the interference overload indicator by sequentially cascading the bitmap, the interference overload code of the reference frequency spectrum resource block, and the interference overload differential codes or the high interference overload differential codes of the other frequency spectrum resource blocks, in the order of the frequency spectrum resource blocks.

Preferably, the interference-overload-indicator generation unit generates interference overload indicators respectively corresponding to the plurality of subbands, by sequentially cascading, for each of the plurality of subbands, the interference overload code of the reference frequency spectrum resource block in the each subband and the interference overload differential codes respectively corresponding to the other frequency spectrum resource blocks in the each subband; and the interference-overload-indicator generation unit generates the interference overload indicator by sequentially cascading the interference overload indicators respectively corresponding to the plurality of subbands, in the order of the plurality of subbands.

Preferably, the interference-overload-indicator generation unit generates the interference overload indicator by sequentially cascading the average interference overload code and the interference overload system-average differential codes respectively corresponding to the frequency spectrum resource blocks, in the order of the frequency spectrum resource blocks.

Preferably, the interference-overload-indicator generating device further includes: a storage unit for storing a state coding/decoding table, wherein: the coding unit generates an interference overload level series in which the interference overload levels determined are put in series in the order of the frequency spectrum resource blocks, the interference overload levels respectively corresponding to the frequency spectrum resource blocks; the coding unit generates the interference overload state code by carrying out state mapping coding of the interference overload level series, according to the state coding/decoding table stored in the storage unit; and the interference-overload-indicator generation unit processes the interference overload state code as the interference overload indicator.

Preferably, the interference-overload-indicator generating device further includes: a subband division unit for dividing all the frequency spectrum resource blocks into a plurality of subbands; and a storage unit for storing the state coding/decoding table, wherein: the coding unit generates interference overload level subseries in each of which the interference overload levels determined are put in series in the order of the frequency spectrum resource blocks, each of the interference overload level subseries being generated for each of the plurality of subbands into which all the frequency spectrum resource blocks are divided by the subband division unit, the interference overload levels respectively corresponding to the frequency spectrum resource blocks; the coding unit generates the interference overload state codes by carrying out, according to the state coding/decoding table stored in the storage unit, state mapping coding of the interference overload level subseries generated, for each of the plurality of subbands; and the interference-overload-indicator generation unit generates the interference overload indicator by sequentially cascading the interference overload state codes in the order of the plurality of subbands.

Preferably, the interference overload codes, and the interference overload level series or the interference overload level subseries generated by the coding unit are in a one-to-one mapping relation.

Preferably, the interference overload codes, and the interference overload level series or the interference overload level subseries generated by the coding unit are in a unique mapping relation.

The second aspect of the present invention provides a method of generating an interference overload indicator, the method being used in an uplink frequency division multiplexing cellular communication system, the method including: a determination step of determining, according to a preset condition, interference overload levels respectively corresponding to frequency spectrum resource blocks used in uplink data transmission; a coding step of generating interference overload codes or interference overload state codes by carrying out coding or state coding of the interference overload levels determined, the interference overload levels respectively corresponding to the frequency spectrum resource blocks; and an interference-overload-indicator generation step of generating the interference overload indicator, in accordance with the interference overload codes or the interference overload state codes generated, the interference overload indicator reflecting the interference overload levels respectively corresponding to the frequency spectrum resource blocks.

Preferably, each of the interference overload levels has a plurality of levels; and in the determination step, each of the interference overload levels is determined to one of the plurality of levels according to the preset condition.

Preferably, in the determination step, the preset condition is set based on at least one of a threshold value of an interference-to-noise ratio in a frequency spectrum resource block, a threshold value of an interference value, a threshold value of a satisfaction level on service quality, a loaded state, a condition where interference is received, and a number of users on a boundary of cells.

Preferably, the preset condition is used in the uplink frequency division multiplexing cellular communication system.

Preferably, in the coding step, the interference overload codes respectively corresponding to the frequency spectrum resource blocks are generated by carrying out coding of the interference overload levels determined, the interference overload levels respectively corresponding to the frequency spectrum resource blocks; and in the coding step, each of the interference overload codes corresponds, in a one-to-one relation, to one of the plurality of interference overload levels.

Preferably, in the coding step, high interference overload codes are generated by carrying out coding of interference overload levels respectively corresponding to frequency spectrum resource blocks each having an interference overload level except a lowest interference overload level; and in the coding step, each of the high interference overload codes generated corresponds, in a one-to-one relation, to one of the plurality of interference overload levels except the lowest interference overload level.

Preferably, in the coding step, an interference overload level in a system bandwidth of the uplink frequency division multiplexing cellular communication system is obtained and an average interference overload code is generated by carrying out coding of the interference overload level in the system bandwidth; in the coding step, interference overload system-average codes respectively corresponding to frequency spectrum resource blocks each having an interference overload level higher than the interference overload level in the system bandwidth are generated, by carrying out coding of the interference overload levels respectively corresponding to the frequency spectrum resource blocks each having the interference overload level higher than the interference overload level in the system bandwidth; and in the coding step, each of the interference overload system-average codes generated corresponds, in a one-to-one relation, to one of the plurality of interference overload levels.

Preferably, in the coding step, one frequency spectrum resource block is selected as a reference frequency spectrum resource block; and in the coding step, interference overload differential codes are generated by sequentially carrying out differential coding of an interference overload code corresponding to a frequency spectrum resource block being adjacent to the reference frequency spectrum resource block, the differential coding being carried out according to a differential coding/decoding table.

Preferably, in the coding step, one frequency spectrum resource block is selected as a reference frequency spectrum resource block, the one frequency spectrum resource block having the interference overload level except the lowest interference overload level; and in the coding step, high-interference overload differential codes are generated by sequentially carrying out, according to a differential coding/decoding table, differential coding of an interference overload code corresponding to a frequency spectrum resource block being adjacent to the reference frequency spectrum resource block, the frequency spectrum resource block having the interference overload level except the lowest interference overload level.

Preferably, in the coding step, all the frequency spectrum resource blocks are divided into a plurality of subbands; in the coding step, one frequency spectrum resource block is selected as a reference frequency spectrum resource block in each of the plurality of subbands; and in the coding step, interference overload differential codes corresponding to the each subband are generated by sequentially carrying out differential coding of an interference overload code corresponding to a frequency spectrum resource block being adjacent to the reference frequency spectrum resource block, the differential coding being carried out according to a differential coding/ decoding table.

Preferably, in the coding step, an interference overload level in a system bandwidth in the uplink frequency division multiplexing cellular communication system is obtained and an average interference overload code is generated by carrying out coding of the interference overload level obtained; and in the coding step, interference overload system-average differential codes are generated by sequentially carrying out differential coding of an interference overload code corresponding to a frequency spectrum resource block, the differential coding being carried out according to the average interference overload code and a differential coding/decoding table.

Preferably, in the interference-overload-indicator generation step, the interference overload indicator is generated by sequentially cascading, in the order of the frequency spectrum resource blocks, corresponding interference overload codes.

Preferably, in the interference-overload-indicator generation step, frequency spectrum resource blocks each having an interference overload level except a lowest interference overload level are represented by frequency spectrum resource block index numbers, respectively; in the interference-overload-indicator generation step, each of interference overload codes respectively corresponding to high interference overload resource blocks is generated by cascading the frequency spectrum resource block index number and a corresponding interference overload code or high interference overload code; and in the interference-overload-indicator generation step, the interference overload indicator is generated by cascading the interference overload codes generated, the interference overload codes respectively corresponding to the high interference overload resource blocks.

Preferably, in the interference-overload-indicator generation step, each of the frequency spectrum resource blocks is represented by a bitmap, and in the bitmap, frequency spectrum resource blocks each having a lowest interference overload level is distinguished from frequency spectrum resource blocks each having an interference overload level except the lowest interference overload level, by allocation of different bit values; and in the interference-overload-indicator generation step, the interference overload indicator is generated by sequentially cascading the bitmap and the interference overload codes or the high interference overload codes respectively corresponding to frequency spectrum resource blocks each having an interference overload level except the lowest interference overload level, in the order of the frequency spectrum resource blocks.

Preferably, in the interference-overload-indicator generation step, the frequency spectrum resource blocks each having the interference overload level higher than the interference overload level in the system bandwidth are represented by frequency spectrum resource block index numbers, respectively; in the interference-overload-indicator generation step, interference overload codes respectively corresponding to high interference overload resource blocks are generated by cascading the interference overload system-average codes each corresponding to a frequency spectrum resource block index number; and in the interference-overload-indicator generation step, the interference overload indicator is generated by cascading the average interference overload code, and the interference overload codes generated, the interference overload codes respectively corresponding to the high interference overload resource blocks.

Preferably, in the interference-overload-indicator generation step, each of the frequency spectrum resource blocks is represented by a bitmap; in the interference-overload-indicator generation step, in the bitmap, frequency spectrum resource blocks each having the interference overload level higher than the interference overload level in the system bandwidth are distinguished from frequency spectrum resource blocks each having other interference overload level, by allocation of different bit values; and in the interference-overload-indicator generation step, the interference overload indicator is generated by sequentially cascading the average interference overload code, the bitmap and the interference overload system-average codes respectively corresponding to frequency spectrum resource blocks each having the interference overload level higher than the interference overload level in the system bandwidth, in the order of the frequency spectrum resource blocks.

Preferably, in the interference-overload-indicator generation step, the interference overload indicator is generated by sequentially cascading the interference overload code corresponding to the reference frequency spectrum resource block and the interference overload differential codes respectively corresponding to the other frequency spectrum resource blocks, in the order of the other frequency spectrum resource blocks.

Preferably, in the interference-overload-indicator generation step, each of the frequency spectrum resource blocks is represented by a bitmap; in the interference-overload-indicator generation step, in the bitmap, frequency spectrum resource blocks each having a lowest interference overload level are distinguished from frequency spectrum resource blocks each having an interference overload level except the lowest interference overload level, by allocation of different bit values; and in the interference-overload-indicator generation step, the interference overload indicator is generated by sequentially cascading the bitmap, the interference overload code of the reference frequency spectrum resource block, and the interference overload differential codes or the high interference overload differential codes of the other frequency spectrum resource blocks, in the order of the frequency spectrum resource blocks.

Preferably, in the interference-overload-indicator generation step, interference overload indicators respectively corresponding to the plurality of subbands are generated by sequentially cascading, for each of the plurality of subbands, the interference overload code of the reference frequency spectrum resource block in the each subband and the interference overload differential codes respectively corresponding to the other frequency spectrum resource blocks in the each subband; and in the interference-overload-indicator generation step, the interference overload indicator is generated by sequentially cascading the interference overload indicators respectively corresponding to the plurality of subbands, in the order of the plurality of subbands.

Preferably, in the interference-overload-indicator generation step, the interference overload indicator is generated by sequentially cascading the average interference overload code and the interference overload system-average differential codes respectively corresponding to the frequency spectrum resource blocks, in the order of the frequency spectrum resource blocks.

Preferably, in the coding step, an interference overload level series in which the interference overload levels determined are put in series in the order of the frequency spectrum resource blocks is generated, the interference overload levels respectively corresponding to the frequency spectrum resource blocks; in the coding step, the interference overload state code is generated by carrying out state mapping coding of the interference overload level series, according to a state coding/decoding table; and in the interference-overload-indicator generation step, the interference overload state code is processed as the interference overload indicator.

Preferably, in the coding step, all the frequency spectrum resource blocks are divided into a plurality of subbands; in the coding step, interference overload level subseries in each of which the interference overload levels determined are put in series in the order of the frequency spectrum resource blocks are generated for the plurality of subbands, respectively, the interference overload levels respectively corresponding to the frequency spectrum resource blocks; in the coding step, the interference overload state codes are generated by carrying out, according to a state coding/decoding table, state mapping coding of the interference overload level subseries generated; and in the interference-overload-indicator generation step, the interference overload indicator is generated by sequentially cascading the interference overload state codes in the order of the plurality of subbands.

Preferably, the interference overload codes, and the interference overload level series or the interference overload level subseries generated in the coding step are in a one-to-one mapping relation.

Preferably, the interference overload codes, and the interference overload level series or the interference overload level subseries generated in the coding step are in a unique mapping relation.

The third aspect of the present invention provides an interference-overload-indicator generation controller used in an uplink frequency division multiplexing cellular communication system, the interference-overload-indicator generation controller including: a detection unit for detecting a system interference related parameter; a comparison unit for comparing a detected value of the system interference related parameter and a preset threshold value; and a trigger unit for controlling and driving the interference-overload-indicator generation device of the first aspect of the present invention, in accordance with a comparison result obtained by the comparison unit.

Preferably, the system interference related parameter is at least either an interference level in a system bandwidth in the uplink frequency division multiplexing cellular communication system or a load ratio of a system resource in the uplink frequency division multiplexing cellular communication system, or at least either an interference level in a part of the system bandwidth or a load ratio of a part of the system resource.

Preferably, the interference overload level in the system bandwidth includes at least one of an interference power density in the system bandwidth, an interference-to-noise ratio in the system bandwidth, an average interference power density value in the system bandwidth, and an average interference-to-noise ratio in the system bandwidth; or the interference overload level in the part of the system bandwidth includes at least one of an interference power density in the part of the system bandwidth, an interference-to-noise ratio in the part of the system bandwidth, an average interference power density value in the part of the system bandwidth, and an average interference-to-noise ratio in the part of the system bandwidth.

Preferably, the load ratio of the system resource includes at least one of an occupation rate of a data transmission channel resource and an occupation rate of a control signaling channel resource; or the load ratio of the part of the system resource includes at least one of an occupation rate of a part of the data transmission channel resource and an occupation rate of a part of the control signaling channel resource.

Preferably, the trigger unit controls and drives the interference-overload-indicator generation device of the first aspect of the present invention in a case where at least either the interference level in the system bandwidth or the load ratio of the system resource is greater than the preset threshold value; or the trigger unit controls and drives the interference-overload-indicator generation device of the first aspect of the present invention in a case where at least either the interference level in the part of the system bandwidth or the load ratio of the part of the system resource is greater than the preset threshold value.

Preferably, the interference-overload-indicator generation controller further includes: a timer for measuring a system time and storing a transmission timing of the interference overload indicator; wherein: the system interference related parameter is a system time and the preset threshold value is the transmission timing of the interference overload indicator; and the trigger unit controls and drives the interference-overload-indicator generation device of the first aspect of the present invention in a case where the system time reaches the transmission timing of the interference overload indicator.

The fourth aspect of the present invention provides a method of controlling interference-overload-indicator generation, the method being used in an uplink frequency division multiplexing cellular communication system, the method includes: a detection step of detecting a system interference related parameter; a comparison step of comparing a detected value of the system interference related parameter and a preset threshold value; and a trigger step of executing the method of the second aspect of the present invention, in accordance with a comparison result obtained in the comparison step.

Preferably, the system interference related parameter is at least either an interference level in a system bandwidth in the uplink frequency division multiplexing cellular communication system or a load ratio of a system resource in the uplink frequency division multiplexing cellular communication system, or at least either an interference level in a part of the system bandwidth or a load ratio of a part of the system resource.

Preferably, the interference overload level in the system bandwidth includes at least one of an interference power density in the system bandwidth, an interference-to-noise ratio in the system bandwidth, an average interference power density value in the system bandwidth, and an average interference-to-noise ratio in the system bandwidth; or the interference overload level in the part of the system bandwidth includes at least one of an interference power density in the part of the system bandwidth, an interference-to-noise ratio in the part of the system bandwidth, an average interference power density value in the part of the system bandwidth, and an average interference-to-noise ratio in the part of the system bandwidth.

Preferably, the load ratio of the system resource includes at least one of an occupation rate of a data transmission channel resource and an occupation rate of a control signaling channel resource; or the load ratio of the part of the system resource includes at least one of an occupation rate of a part of the data transmission channel resource and an occupation rate of a part of the control signaling channel resource.

Preferably, in the trigger step, the determination step included in the method of generating the interference overload indicator according to the second aspect of the present invention is executed in a case where at least either the interference level in the system bandwidth or the load ratio of the system resource is greater than the preset threshold value; or in the trigger step, the determination step included in the method of generating the interference overload indicator according to the second aspect of the present invention is executed in a case where at least either the interference level in the part of the system bandwidth or the load ratio of the part of the system resource is greater than the preset threshold value.

Preferably, the system interference related parameter is a system time and the preset threshold value is the transmission timing of the interference overload indicator; and in the trigger step, the determination step included in the method of generating the interference overload indicator according to the second aspect of the present invention is executed in a case where the system time reaches the transmission timing of the interference overload indicator.

The fifth aspect of the present invention provides a base station used in an uplink frequency division multiplexing cellular communication system, the base station including: the interference-overload-indicator generation controller according to the third aspect of the present invention judging whether or not to control and drive an interference-overload-indicator generating device; the interference-overload-indicator generating device according to the first aspect of the present invention generating the interference overload indicator under control of the interference-overload-indicator generation controller; and a transmitting/receiving device for performing at least either transmission of communication data to the interference-overload-indicator generation controller and the interference-overload-indicator generating device or reception of communication data from the interference-overload-indicator generation controller and the interference-overload-indicator generating device, by carrying out mutual communication with at least one of another base station other than the base station and a user device, and for transmitting the interference overload indicator generated by the interference-overload-indicator generating device.

The sixth aspect of the present invention provides a method of indicating interference overload, the method being used in an uplink frequency division multiplexing cellular communication system, the method including the steps of: determining whether or not to initiate an interference-overload-indicator generation process, according to the method of controlling interference-overload-indicator generation according to the fourth aspect of the present invention; generating the interference overload indicator according to the method of generating the interference overload indicator according to the second aspect of the present invention, in a case where it is determined to initiate the interference-overload-indicator generation process; and transmitting the interference overload indicator generated.

Brief Description of Drawings

The following describes a preferable embodiment of the present invention, with reference to attached drawings. This clarifies an object described above, features and advantages of the present invention.

Fig. 1
Fig. 1 is a diagram schematically illustrating a multi-cellular communication system.
Fig. 2A
Fig. 2A is a block diagram of a base station of the present invention.
Fig. 2B
Fig. 2B is a flow chart of a method of controlling interference-overload-indicator generation according to the present invention.
Fig. 2C
Fig. 2C is a flow chart of a method of generating an interference overload indicator according to the present invention.
Fig. 3
Fig. 3 is a diagram schematically illustrating an interference overload scene 1 used in an embodiment of the present invention.
Fig. 4
Fig. 4 is a diagram schematically illustrating an interference overload scene 2 used in an embodiment of the present invention.
Fig. 5
Fig. 5 is a diagram schematically illustrating Example 1 in which a base station generates a signaling of an interference overload indicator.
Fig. 6
Fig. 6 is a diagram schematically illustrating Example 2 in which a base station generates an interference overload indicator signaling.
Fig. 7
Fig. 7 is a diagram schematically illustrating Example 3 in which a base station generates an interference overload indicator signaling.
Fig. 8
Fig. 8 is a diagram schematically illustrating Example 4 in which a base station generates an interference overload indicator signaling.
Fig. 9
Fig. 9 is a diagram schematically illustrating Example 5 in which a base station generates an interference overload indicator signaling.
Fig. 10
Fig. 10 is a diagram schematically illustrating Example 6 in which a base station generates an interference overload indicator signaling.
Fig. 11
Fig. 11 is a diagram schematically illustrating Example 7 in which a base station generates an interference overload indicator signaling.
Fig. 12
Fig. 12 is a diagram schematically illustrating Example 8 in which a base station generates an interference overload indicator signaling.
Fig. 13
Fig. 13 is a diagram schematically illustrating Example 9 in which a base station generates an interference overload indicator signaling.
Fig. 14
Fig. 14 is a diagram schematically illustrating Example 10 in which a base station generates an interference overload indicator signaling.
Fig. 15
Fig. 15 is a diagram schematically illustrating Example 11 in which a base station generates an interference overload indicator signaling.
Fig. 16

Fig. 16 is a diagram schematically illustrating Example 12 in which a base station generates an interference overload indicator signaling.
Fig. 17
Fig. 17 is a diagram schematically illustrating Example 13 in which a base station generates an interference overload indicator signaling.
Fig. 18
Fig. 18 is a diagram schematically illustrating Example 14 in which a base station generates an interference overload indicator signaling.
Fig. 19
Fig. 19 is a diagram schematically illustrating Example 15 in which a base station generates an interference overload indicator signaling.
Fig. 20
Fig. 20 is a diagram schematically illustrating Example 16 in which a base station generates an interference overload indicator signaling.
Fig. 21
Fig. 21 is a diagram schematically illustrating Example 17 in which a base station generates an interference overload indicator signaling.
Fig. 22
Fig. 22 is a diagram schematically illustrating Example 18 in which a base station generates an interference overload indicator signaling.
Fig. 23
Fig. 23 is a diagram schematically illustrating Example 19 in which a base station generates an interference overload indicator signaling.
Fig. 24
Fig. 24 is a diagram schematically illustrating Example 20 in which a base station generates an interference overload indicator signaling.

Reference Signs List

| | |
|---|---|
| 200, 202, 204 | Base Station |
| 1000 | Interference-Overload-Indicator Generation Control Sub-System (Interference-Overload-Indicator Generation Controller) |
| 1010 | Detection Unit |
| 1020 | Comparison Unit |
| 1030 | Trigger Unit |
| 1040 | Timer |
| 2000 | Interference-Overload-Indicator Generation Sub-System (Interference-Overload-Indicator Generating Device) |
| 2010 | Interference-Overload Level Determining Unit (Determination Unit) |
| 2020 | Coding Unit |
| 2030 | Interference-Overload-Indicator Generation Unit (Generation Unit) |
| 2012 | System Average Interference Level Operation Unit |
| 2022 | Subband Division Unit |
| 2025 | Storage Device (Storage Unit) |
| 2032 | Index Number Generation Unit |
| 2034 | Bitmap Generation Unit |
| 3000 | Transmitting/ Receiving Sub-System (Transmitting/ Receiving Device) |

Description of Embodiment

The following describes in detail a preferable embodiment of the present invention with reference to drawings. In the description, descriptions of minute functions that are not required in the present invention are omitted so that confusion in understanding of the present invention is prevented.
Further, for describing steps for realizing the present invention, the following provides specific embodiments of the present invention. The embodiments are applied to an uplink LTE cellular communication system. However, the present invention is not limited to the applications as described in these embodiments. The present invention is applicable to other communication systems.

Fig. 1 is a diagram schematically illustrating a multi-cellular communication system. In a cellular system, a service area is divided into adjacent wireless coverage areas, that is, cells. In Fig. 1, the cells are shown as regular hexagons. A whole service area is formed by joining cells 100 to 104. Base stations 200 to 204 correspond to cells 100 to 104, respectively. Each of the base stations 200 to 204 includes one transmitter, one receiver, and one base station control unit. These transmitter, receiver, and base station control unit are well-known in the field to which the present invention pertains. In Fig. 1, each of the base stations 200 to 204 is provided in an area of corresponding one of the cells 100 to 104, and includes an omnidirectional antenna. However, in an arrangement of cells in the cellular communication system, each of the base stations 200 to 204 may be provided with a directional antenna in corresponding one of the base stations 200 to 204 so that a part of an area in each of the cells 100 to 104 is directionally covered. The part of the area is generally called a sector. Accordingly, Fig. 1 shows the multi-cellular communication system merely for the purpose of illustrating one example. In realization of the cellular system of the present invention, the feature described above is not always required.

In Fig. 1, the base stations 200 to 204 are connected one another via X2 interfaces 300 to 304. In an LTE system, a three-layered node network structure including base stations, a wireless net control unit, and a core net is simplified to a two-layered node structure. Here, a function of the wireless net control unit is separately provided for each base station, and communication between base stations is carried out via a wired interface called "X2".

In Fig. 1, user devices 400 to 430 are provided in the cells 100 to 104. Each of the user devices 400 to 430 includes one transmitter, one receiver, and one mobile terminal control unit. These transmitter, receiver, and mobile terminal control unit are well-known in the field to which the present invention pertains. The user devices 400 to 430 each is connected to the cellular communication system via a service base station (one of the base stations 200 to 204) that provides a service. Note that Fig. 1 shows only 16 user devices, however the number of user devices is much greater in practice. In this regard, the illustration of the user devices in Fig. 1 is provided merely for an illustrative purpose, and the present invention is not limited to this. The user devices 400 to 430 each is connected to a cellular communication network via corresponding one of the base stations 200 to 204 from corresponding one of which each of the user devices 400 to 430 receives a service. Here, a base station that directly provides a communication service to a user device is referred to as a service base station of the user device, and other base stations are referred to non-service stations of the user device.

Fig. 2A is a block diagram of a base station according to the preset invention.

As shown in Fig. 2A, each of the base station 200, 202, and 204 of the present invention includes an interference-overload-indicator generation control sub-system (interference-overload-indicator generation controller) 1000, an interference-overload-indicator generation sub-system (interference-overload-indicator generating device) 2000, and a transmitting/receiving sub-system (transmitting/receiving device) 3000. Each of the base stations 200, 202, and 204 is connected one another via the X2 interfaces.

The interference-overload-indicator generation control sub-system 1000 corresponds to an interference-overload-indicator generation controller of the present invention, and includes a detection unit 1010, a comparison unit 1020, a trigger unit 1030, and a timer 1040.

The detection unit 1010 detects a system interference related parameter (Step S400). In the present invention, the system interference related parameter includes at least either an interference level in a system bandwidth or a load ratio of a system resource, or at least either an interference level in a part of the system bandwidth or a load ratio of a part of the system resource. However, the present invention is not limited to this.

The comparison unit 1020 compares a detected value of the system interference related parameter and a preset threshold value (Step S402).

The trigger unit 1030 controls and drives the interference-overload-indicator generation sub-system 2000 of the present invention, according to a result of the comparison unit 1020 (Step S404).

The timer 1040 measures a system time and stores a transmission timing of an interference overload indicator. In this case, the system interference related parameter may be the system time, while the preset threshold value may be the transmission timing of the interference overload indicator. When the system time reaches the transmission timing of the interference overload indicator, the trigger unit 1030 controls and drives the interference-overload-indicator generation sub-system 2000 of the present invention.

The interference-overload-indicator generation sub-system 2000 corresponds to an interference-overload-indicator generating device of the present invention, and includes an interference-overload determining unit (determination unit) 2010, a coding unit 2020 for an interference overload level, an interference-overload-indicator generation unit (generation unit) 2030, a system average interference level operation unit 2012, a subband division unit 2022, a storage device (storage unit) 2025, an index number generation unit 2032, and a bitmap generation unit 2034.

The interference-overload determining unit 2010 determines interference overload levels respectively corresponding to frequency spectrum resource blocks used in uplink data transmission, according to a preset condition (Step S500). The interference overload level has a plurality of levels, and the determination unit determines the interference overload level to one level out of the plurality of levels, according to the preset condition. In the present invention, the preset condition can be fixed according to at least one of a threshold value of an interference-to-noise ratio in a frequency spectrum resource block, a threshold value of an interference value, a threshold value of a satisfaction level of service quality, a loaded state, a condition where interference is received, and the number of users on a boundary. However, the present invention is not limited to these.

The coding unit 2020 for an interference overload level carries out coding or state coding of interference load levels that respectively corresponds to the frequency spectrum resources and that is determined by the interference-overload determining unit 2010. Thereby, the coding unit 2020 generates interference overload codes or interference overload state codes (Step S505). The present invention is provided with various types of coding systems and various types of state coding systems.

Specifically, the following provides a detailed description with reference to the step S505 described later. In coding, in some cases, a coding/decoding table, a differential coding/decoding table, and a state coding/decoding table each of which is stored in the storage device 2025, and a subband division function provided by the subband division unit 2022 may be used. However, the function and operation are not necessarily required. A person skilled in the art may use any other suitable arrangement according to actual conditions. Accordingly, the present invention should be understood to include such other suitable arrangement.

The interference-overload-indicator generation unit 2030 generates an interference overload indicator, based on interference overload codes or interference overload state codes generated by the coding unit 2020 for an interference overload level. Thus generated interference overload indicator can reflect the interference overload levels respectively corresponding to the spectrum resource blocks. Though in the preset invention, the various types of interference overload indicator generation processes are provided, detailed description is given based on the step S510 described later.

In some cases, the step in an interference overload indicator generation process employs frequency spectrum resource block index numbers generated by the index number generation unit 2032 or a bitmap generated by the bitmap generation unit 2034. However, the function and operation are not necessarily required. A person skilled in the art may use any other suitable arrangement according to actual conditions. Accordingly, the present invention should be understood to include such other suitable arrangement.

The system average interference level operation unit 2012 obtains an interference overload level in a system bandwidth. In this case, the coding unit 2020 for an interference overload level can generate an average interference overload code by carrying out coding of the interference overload level obtained by the system average interference level operation unit 2012.

The storage device 2025 stores at least one of the coding/decoding table, the differential coding/decoding table, and the state coding/decoding table each of which is necessary for allowing the coding unit 2020 for an interference overload level to carry out an coding operation. The subband division unit 2022 divides all the frequency spectrum resource blocks into a plurality of subbands. In the present invention, a method of the division into subbands is not specifically limited but may be performed in any way. That is, division into subbands of one size is possible. Alternatively, division into subbands of various sizes is also possible. Each of the subbands includes at least one frequency spectrum resource block.

The index number generation unit 2032 generates frequency spectrum resource block index numbers each indicative of a frequency spectrum resource block.

The bitmap generation unit 2034 generates a bitmap that indicates the frequency spectrum resource blocks. In the bitmap, the frequency spectrum resource blocks respectively having different interference overload levels are distinguished by allocating different bit values "0" and "1". More specifically, a frequency spectrum resource block having the lowest interference overload level is distinguished from a frequency spectrum resource block having an interference overload level except the lowest interference overload level, or a frequency spectrum resource block having an interference overload level higher than the interference overload level in the system bandwidth is distinguished from a frequency spectrum resource block having other interference overload level. However, the present invention is not limited to this. By using the bitmap, it is possible to distinguish frequency spectrum resource blocks having other different attributes.

The transmitting/ receiving sub-system 3000 corresponds to a transmitting/receiving device of the present invention, and is used for mutual communication with at least any one of other base stations and user devices. The transmitting/receiving sub-system 3000 transmits and/or sends communication data to/from the interference-overload-indicator generation control sub-system 1000 and the interference-overload-indicator generation sub-system 2000. Further, the transmitting/receiving sub-system 3000 transmits an interference overload indicator generated by the interference-overload-indicator generation sub-system 2000.

The description above briefly describes configurations of the base stations 200, 202, and 204 of the present invention with reference to the block diagram of the base stations 200, 202, and 204. However, the base stations of the present invention are not limited to the specific embodiment described above. The base stations of the present invention may include all unit modules described above or only an essential part of the unit modules. Alternatively, the unit modules can be further combined with another unit module and/or divided. Each of the unit modules in the base stations of the present invention can be realized by hardware, software, or a combination of hardware and software. Here, a system for realizing the unit modules is not specifically limited.

Fig. 2B is a flow chart of a control method of interference-overload-indicator generation according to the present invention. The method includes the following steps.

Step S400: The base station detects a system interference related parameter. In the present invention, the system interference related parameter includes at least either an interference level in a system bandwidth or a load ratio of a system resource, or at least either an interference level in a part of the system bandwidth or a load ratio of a part of the system resource. However, the system interference related parameter of the present invention is not limited to this.

Step S402: The base station judges whether or not a condition for initiating generation of an interference overload indicator is satisfied. In the present invention, the condition for staring the generation of an interference overload indicator may be such that an interference level A in a whole system bandwidth exceeds a threshold value K. Alternatively, in the present invention, the condition for staring the generation of an interference overload indicator may be such that a load ratio B of a system resource exceeds a threshold value L.

Preferably, the base station detects the interference level A in the whole system bandwidth and compares the interference level A with the threshold value K. In a case where A > K, the generation of an interference overload indicator is initiated. Meanwhile, in a case other than A > K, the generation of an interference overload indicator is not initiated. The interference level A in the system bandwidth may be an interference power density value in the system bandwidth, an interference-to-noise ratio in the system bandwidth, an average interference power density value in the system bandwidth, an average interference-to-noise ratio in the system bandwidth, or other amount capable of indicating an interference level in the system bandwidth.

Alternatively, preferably, the base station detects a loaded state of the system and assumes the load ratio of the system resource to be B. Then, the base station compares the load ratio B with a threshold value L. In a case where B > L, the generation of the interference overload indicator is initiated. In a case other than B > L, the generation of the interference overload indicator is not initiated. The load ratio B of the system resource includes an occupation rate of at least one of a data transmission channel resource and a control signaling channel resource. In the description of the specific embodiment of the present specification, a specific arrangement of the LTE system is considered. According to TR 25.814 V1.5.0 "Physical Layer Aspects for Evolved UTRA", R1-063013 "Approved minutes of 3GPP TSG RAN WG1 #46 in Tallinn", and R1-080631 "Report of 3GPP TSG RAN WG1 #51bis v1.0.0" that are documents issued by the 3GPP organization, in an uplink LTE system having a bandwidth of 20 MHz, a frequency region includes 100 frequency spectrum resource blocks. In a case where four frequency spectrum resource blocks among the 100 frequency spectrum resource blocks are assumed to be used for control signaling, the remaining 96 frequency spectrum resource blocks are used for uplink data transmission. These remaining 96 frequency spectrum resource blocks can be numbered 1 to 96, respectively. Each of the frequency spectrum resources is provided with one independent interference overload indicator and one intense interference indicator.

- The interference overload indicators are further classified into 4 grades or 3 grades. That is, the interference overload indictors are classified into four levels including a null interference overload level, a low interference overload level, a medium interference overload level, and a high interference overload level. Alternatively, the interference overload indicators are classified into three levels including a low interference overload level, a medium interference overload level, and a high interference overload level.
- The intense interference indicator is transmitted by use of a bitmap signaling. That is, by use of a bit series whose length is the number of the frequency spectrum resource blocks, the intense interference indicator is mapped with the frequency spectrum resource blocks. As a result, each of frequency spectrum resource blocks is indicated by 1-bit in the bit series. In a case where a frequency spectrum resource block is an intense interference frequency spectrum resource block, a corresponding bit is set to 1. In a case where the frequency spectrum resource block is not an intense interference frequency spectrum resource block, a corresponding bit of the frequency spectrum resource block is set to 0.

The highest frequency at which at least one of the interference overload indicator and the intense interference indicator is transmitted between base stations via an X2 interface is once in 20 ms. Here, the numerical value of the parameter is merely one example raised for describing an application of the present invention. It is obvious that even if the numerical value is changed, the present invention is practicable.

The present embodiment provides the following five possible application examples.

Example 1: In the multi-cellular system shown in Fig. 1, regarding the base station 200, an interference power density $P_I$ in the system bandwidth is assumed every 20 ms to be an interference level A in the system bandwidth and the interference level A is compared with a threshold value K. In a case where A > K, generation of an interference overload indicator is initiated. Meanwhile, in a case other than A > K, no generation of the interference overload indicator is initiated.

Example 2: In the multi-cellular system shown in Fig. 1, regarding the base station 200, $P_I' = P_I / P_N$ in the system bandwidth is assumed every 20 ms to be an interference level A in the system bandwidth. Here, $P_I$ is an interference power density value in the system bandwidth and $P_N$ is a noise power density value in the system bandwidth. The interference level A is compared with a threshold value K. In a case where A > K, generation of an interference overload indicator is initiated. Meanwhile, in a case other than A > K, no generation of the interference overload indicator is initiated.

Example 3: In the multi-cellular system shown in Fig. 1, regarding the base station 200 an average interference power density (Formula 1) in the system bandwidth is assumed every 20 ms to be an interference level A in the system bandwidth, and the interference level A is compared with a threshold value K. In this example, $a_1$ to $a_{96}$ are interference power density values of 1st to 96th frequency spectrum resource blocks, respectively. In a case where A > K, generation of an interference overload indicator is initiated. Meanwhile, in a case other than A > K, no generation of the interference overload indicator is initiated.

$$\sum_{i=1}^{96} a_i / 96 \quad \cdots \text{(Formula 1)}$$

Example 4: In the multi-cellular system shown in Fig. 1, regarding the base station 200, an average interference-to-noise ratio (Formula 2) is assumed every 20 ms to be an interference level A in the system bandwidth and the interference level A is compared with a threshold value K. In this example, $a'_i = a_i/n_i$, where: $a'_1$ to $a'_{96}$ are interference-to-noise ratios of 1st to 96th frequency spectrum resource blocks, respectively; $a_1$ to $a_{96}$ are interference power density values of 1st to 96th frequency spectrum resource blocks, respectively; $n_i$ is a noise power density value in the i-th frequency spectrum resource block; and i = 1, 2, ... and 96. In a case where A > K, generation of an interference overload indicator is initiated. Meanwhile, in a case other than A > K, no generation of the interference overload indicator is initiated.

$$\sum_{i=1}^{96} a'_i / 96 \quad \cdots \text{(Formula 2)}$$

Example 5: In the multi-cellular system shown in Fig. 1, regarding the base station 200, an average probability (Formula 3) at which 96 frequency spectrum resource blocks are used is assumed every 20 ms to be a load ratio B of the system resource and the load ratio B is compared with a threshold value L. In this example, $b_1$ to $b_{96}$ are probabilities at which 1st to 96th frequency spectrum resource blocks are used, respectively. In a case where B > L, generation of an interference overload indicator is initiated. Meanwhile, in a case other than B > L, no generation of the interference overload indicator is initiated.

$$\sum_{i=1}^{96} b_i / 96 \quad \cdots \text{(Formula 3)}$$

Here, each of Examples 1 to 4 above illustratively describes an interference level A in the system bandwidth of the present embodiment. However, the interference level A is not limited to the interference levels described above. That is, in the present embodiment, it is possible to obtain the interference level A in the system bandwidth by using another formula. Similarly, Example 5 describes an occupation rate B of the system resource. However, realization of the occupation rate B of the system resource is not limited to the formula in Example 5. That is, in the present embodiment, the occupation rate B of the system resource can be obtained by another formula.

Further, each of Examples 3 to 5 analyzes respective frequency spectrum resource blocks. However, in actual applications, the frequency spectrum resource blocks can be divided into groups and each group as a unit can be analyzed. An advantage of this method is that an amount of arithmetic is relatively small. The present embodiment can employ a realization method in which the frequency spectrum resource blocks are divided into groups (i.e. at least either an interference level in a part of the system bandwidth or a load ratio of a part of the system resource). That is, by replacing the frequency spectrum resource block index numbers (Formula 4) with an index number (Formula 4) of a frequency spectrum resource group and using the frequency spectrum resource groups as equivalent frequency spectrum resource blocks, Examples 3 through 5 still can be realized.

$$i \quad \cdots \text{(Formula 4)}$$

Further, in the present step S402, in a case where the threshold value K or the threshold value L is zero (in this case, only a relation between a system time and a transmission timing of an interference overload indicator should be considered), the present invention is allowed to directly enter the next step. In such a case, the interference overload indicator generation control mechanism does not exist. However, the base station can transmit an interference overload indicator at any timing at which the interference overload indicator is transmittable.

Step S404: In a case where the base station determines that the condition for staring generation of an interference overload indicator is satisfied, the interference overload indicator generation process of the present invention is initiated.

Fig. 2C is a flow chart of a method of generating an interference overload indicator according to the present invention. The method specifically includes the following steps.

Step S500: Determine, according to a preset condition, interference overload levels respectively corresponding to frequency spectrum resource blocks used for uplink data transmission.

Step S505: Generate an interference overload code or an interference overload state code by carrying out coding or state coding of each of the determined interference overload levels respectively corresponding to the frequency spectrum resource blocks.

Step S510: Generate an interference overload indicator based on the generated interference overload code or the generated interference overload state code. This allows thus generated interference overload indicator to reflect the interference overload levels respectively corresponding to the frequency spectrum resource blocks.

The present embodiment provides 20 examples of applications. In these examples, two interference overload scenes are used. The two interference overload scenes are schematically illustrated in Figs. 3 and 4.

In Fig. 3, there are four interference overload levels, and conditions for determining an interference overload level (a null interference overload level, a low interference overload level, a medium interference overload level, or a high interference overload level) are assumed to be $C_0$, $C_1$, and $C_2$. In a case where $C_0$ is not satisfied, the interference overload level is determined to be the "null interference overload". In a case where $C_0$ is satisfied but $C_1$ is not satisfied, the interference overload level is determined to be the "low interference overload". In a case where $C_1$ is satisfied but $C_2$ is not satisfied, the interference overload level is determined to be the "medium interference overload". In a case where $C_2$ is satisfied, the interference overload level is determined to be the "high interference overload". In Fig. 3, $C_0$ means that an interference-to-noise ratio in a frequency spectrum resource block is greater than a threshold value $K_L$; $C_1$ means that the interference-to-noise ratio in the frequency spectrum resource block is greater than a threshold value $K_M$; $C_2$ means that the interference-to-noise ratio in the frequency spectrum resource block is greater than a threshold value $K_H$; and $K_L < K_M < K_H$. Here, as conditions for determining the interference overload level, threshold values of the interference-to-noise ratio are used as references. This is for illustrating and explaining a plurality of levels of interference overload. In practice, $C_0$, $C_1$, and $C_2$ may be any conditions (e.g. threshold values of interference values, threshold values of degrees of satisfaction of service quality, etc.). However, the total number of $C_i$ (i is the order of conditions) is required to be the number that makes it possible to determine the interference level to one interference level.

There are various methods for determining $C_i$. However, it is possible to determine $C_i$, for example, when deployment is carried out from an upper network to a base station. Alternatively, it is possible to determine $C_i$ in each base station according to conditions (including a loaded state of a system, a condition where interference is received, the number of users on a boundary, etc.) of the each base station itself. Further, base stations can mutually notify $C_i$ of the respective base stations via an X2 interface. This makes it possible to precisely understand the meaning of the interference overload level in the base stations. Certainly, it is not necessary to notify $C_i$ mutually. Even in such a case, it is possible to transmit an interference overload indicator. Accordingly, the threshold values $K_L$, $K_M$, and $K_H$ in Fig. 3 can be deployed by the upper network. Alternatively, the threshold values $K_L$, $K_M$, and $K_H$ can be determined independently by each of the base stations and the base stations can mutually notify the threshold values $K_L$, $K_M$, and $K_H$ via the X2 interface.

In a case where 1st to 10th frequency spectrum resource blocks are target frequency spectrum resource blocks, it is possible to obtain interference overload levels respectively corresponding to the 1st to 10th frequency spectrum resource blocks, based on a result of comparison between (i) $K_L$, $K_M$, or $K_H$ and (ii) the interference-to-noise ratios respectively corresponding to the 1st to 10th frequency spectrum resource blocks. A result of obtaining the interference overload levels is "L, N, N, L, H, M, N, N, N, N ("N" indicates a "null interference overload level"; "L" indicates a "low interference overload level"; "M" indicates a "medium interference overload level"; "H" indicates a "high interference overload level") (Step S500). Coding of the interference overload levels is carried out by use of an interference coding table like Table 1 so that an interference overload indicator of the 1st to 10th frequency spectrum resource blocks can be obtained. A result of the coding is: 01, 00, 00, 01, 11, 10, 00, 00, 00, 00 (Step S505 (The following describes in detail with reference to Examples)).

[Table 1]

| Interference Overload Coding Table | | | | |
|---|---|---|---|---|
| Interference Overload Level | Null Interference Overload | Low Interference Overload | Medium Interference Overload | High Interference Overload |
| Interference Overload Code | 00 | 01 | 10 | 11 |

Interference overload codes shown in Table 1 are one example of mapping between the interference overload levels and the interference overload codes. In an actual application, if a relation of one-to-one mapping between the interference overload levels and the interference overload codes is satisfied, it is possible to use other interference overload codes. Even in such a case, the present invention can be realized. The present embodiment is regarded as an interference level coding embodiment in which coding is carried out for all the interference overload levels.

In Fig. 4, there are three interference overload levels (a low interference overload level, a medium interference overload level, and a high interference overload level), and it is assumed that conditions for determining the interference overload levels are $C_1$ and $C_2$. In a case where $C_1$ is not satisfied, the interference overload level is determined to be the "low interference overload". In a case where $C_1$ is satisfied but $C_2$ is not satisfied, the interference overload level is determined to be the "medium interference overload". In a case where $C_2$ is satisfied, the interference overload level is determined to be the "high interference overload". In Fig. 4, $C_1$ means that the interference-to-noise ratio in a frequency spectrum resource block is greater than a threshold value $K_M$; $C_2$ means that the interference-to-noise ratio in a frequency spectrum resource block is greater than a threshold value $K_H$; and $K_M < K_H$. Here, as conditions for determining the interference overload level, threshold values of the interference-to-noise ratio are used as references. This is only for illustrating and explaining a plurality of levels of interference overload. In practice, $C_1$, and $C_2$ may be any conditions (e.g. threshold values of interference values, threshold values of degrees of satisfaction of service quality, etc.). However, the total number of $C_i$ (i is the order of conditions) is required to be the number that makes it possible to determine the interference level to one interference level.

There are various methods for determining $C_i$. However, it is possible to determine $C_i$ when deployment is carried out from an upper network to a base station. Alternatively, it is possible to determine $C_i$ in each base station according to conditions (including a loaded state of a system, a condition where interference is received, the number of users on a boundary, etc.) of the each base station itself. Further, base stations can mutually notify $C_i$ of the respective base stations via an X2 interface. This makes it possible to precisely understand the meaning of the interference overload level in the base stations. Certainly, it is not necessary to notify $C_i$ mutually. Even in such a case, it is possible to transmit an interference overload indicator. Accordingly, the threshold values $K_M$, and $K_H$ in Fig. 4 can be deployed by the upper network. Alternatively, the threshold values $K_M$ and $K_H$ can be determined independently by each of the base stations, and the base stations can mutually notify the threshold values $K_M$ and $K_H$ via the X2 interface.

In a case where 1st to 10th frequency spectrum resource blocks are target frequency spectrum resource blocks, it is possible to obtain interference overload levels respectively corresponding to the 1st to 10th frequency spectrum resource blocks, based on a result of comparison between (i) $K_M$ or $K_H$ and (ii) the interference-to-noise ratios respectively corresponding to the 1st to 10th frequency spectrum resource blocks. A result of obtaining the interference overload levels is "M, L, L, M, H, M, L, L, L, L ("L" indicates a "low interference overload level"; "M" indicates a "medium interference overload level"; and "H" indicates a "high interference overload level") (Step S500). Coding of the interference overload levels is carried out by use of an interference coding table like Table 2 so that an interference overload indicator of the 1st to 10th frequency spectrum resource blocks can be obtained. A result of the coding is: 10, 01, 01, 10, 11, 10, 01, 01, 01, 01 (Step S505 (The following describes in detail with Examples)).

[Table 2]

| Interference Overload Coding Table | | | |
|---|---|---|---|
| Interference Overload Level | Low Interference Overload | Medium Interference Overload | High Interference Overload |
| Interference Overload Code | 01 | 10 | 11 |

Interference overload codes shown in Table 2 are one example of mapping between the interference overload levels and the interference overload codes. In an actual application, if a relation of one-to-one mapping between the interference overload levels and the interference overload codes is satisfied, it is possible to use other interference overload codes. Even in such a case, the present invention can be realized. The present embodiment is regarded as a high interference level coding embodiment in which coding is carried out for interference overload levels except the lowest interference overload level.

Further, in Figs. 3 and 4, respective frequency resource blocks are analyzed. However, in an actual application, the frequency spectrum resource blocks can be divided into groups and each group as a unit can be analyzed. An advantage of this method is that an amount of arithmetic is relatively small. The present embodiment does not exclude a realization method in which the frequency spectrum resource blocks are divided into groups. Only by replacing the index numbers i of frequency spectrum resource blocks with an index number i of a frequency spectrum resource group and using the frequency spectrum resource groups as equivalent frequency spectrum resource blocks, all the embodiments of the present invention still can be realized. Further, in a case of a one-level interference overload indicator (in a case where only a null interference overload level and an interference overload level are used), some implementations of the present invention are further simplified. However, in the description on the following application examples, a part simplified in the implementations can be specifically described.

The following describes in detail Steps S505 and S510 according to the method of generating an interference overload indicator according to the present invention, in combination with specific examples.

The present invention provides the following signaling structures.

1. A signaling by use of an interference overload code series
2. A signaling obtained by cascading index numbers and an interference overload code series
3. A signaling by use of an interference overload differential code series
4. A signaling by use of a segmentation interference overload differential code series
5. A signaling obtained by cascading an interference overload bitmap and an interference overload code series
6. A signaling obtained by cascading an interference overload bitmap and an interference overload differential code series
7. A signaling obtained by cascading an interference overload code in a system bandwidth and an interference intensity bitmap of frequency spectrum resource blocks
8. A signaling obtained by cascading (i) an interference overload code in a system bandwidth, (ii) an interference intensity bitmap of frequency spectrum resource blocks and (iii) an interference overload code series of frequency spectrum resource blocks each of which has relatively intense interference

Example 1: Signaling By Use Of Interference Overload Code Series

The interference overload code series is directly used as an interference overload indicator signaling (Step S510). The present example can be regarded as an interference overload coding example in which all interference overload levels are subjected to coding.

Example 1 employs the interference overload scene shown in Fig. 3. Fig. 5 is a diagram schematically illustrating Example 1. Regarding the 1$^{st}$ to 10$^{th}$ frequency spectrum resource blocks, an interference overload code corresponding to each of the frequency spectrum resource blocks has 2 bits. The interference overload indicator signaling is generated by cascading the respective interference overload codes of the 1$^{st}$ to 10$^{th}$ frequency spectrum resource blocks. That is, the signaling is "01000001111000000000", having a singling size of 20 bits.

A base station having received the interference overload indicator combines every two bits of the bit series and obtains each one interference overload code, and further carries out decoding according to Table 1 so as to obtain the interference overload levels respectively corresponding to the 1$^{st}$ to 10$^{th}$ frequency spectrum resource blocks. A result of the decoding is "L, N, N, L, H, M, N, N, N, N". This result perfectly matches the interference overload levels that another base station has transmitted and the result is correct.

The signaling structure is relatively simple, but has a defect such that a signaling size is relatively large.

Example 2: Signaling By Use Of Interference Overload Code Series

The interference overload code series is directly used as an interference overload indicator signaling (Step S510). The present example is regarded as a high-interference-overload coding example in which coding is carried out for interference overload levels except the lowest interference overload level.

Example 2 employs the interference overload scene as shown in Fig. 4. Fig. 6 schematically illustrates Example 2. Regarding the 1st to 10th frequency spectrum resource blocks, an interference overload code corresponding to each of the frequency spectrum resource blocks has 2 bits. The interference overload indicator signaling is generated by cascading the respective interference overload codes of the 1st to 10th frequency spectrum resource blocks. That is, the signaling is "10010110111001010101", having a signaling size of 20 bits.

A base station having received the interference overload indicator combines every two bits of the bit series and obtains each one interference overload code, and further carries out decoding according to Table 2 so as to obtain the interference overload levels respectively corresponding to the 1st to 10th frequency spectrum resource blocks. A result of the decoding is "M, L, L, M, H, M, L, L, L, L". This result perfectly matches the interference overload levels that another base station has transmitted and the result is correct.

The signaling structure is relatively simple, but has a defect such that the signaling size is relatively large.

Example 3: Signaling Obtained By Cascading Index Numbers And Interference Overload Code Series

For each of frequency spectrum resource blocks in which a relatively high-level interference overload is generated, a one-to-one relation between an frequency spectrum resource block index number and a corresponding interference overload code is realized by cascading the index number and the corresponding interference overload code. Further, a group of the respective signalings of all the frequency spectrum resource blocks in which the relatively high-level interference overload is generated is used as an interference overload indicator signaling (Step S510). Example 3 can be regarded as an index number cascading example in which index numbers and interference overload codes obtained by coding all the interference overload levels are cascaded, respectively.

Example 3 employs the interference overload scene shown in Fig. 3. Fig. 7 is a diagram schematically illustrating Example 3. In a case where the "low interference overload level", the "medium interference overload level", and the "high interference overload level" are determined to correspond to the relatively high-level interference overload, 1st, 4th, 5th, and 6th frequency spectrum resource blocks are the frequency spectrum resource blocks in which the relatively high-level interference overload is generated among the 1st to 10th frequency spectrum resource blocks. Because there are 96 frequency spectrum resource blocks in total, it is necessary to convert the frequency spectrum resource block index numbers from a decimal code to a binary code by using 7 bits.

Regarding the 1st frequency spectrum resource block, the binary code of the index number of the 1st frequency spectrum resource block is 0000001 and the corresponding interference overload code obtained from Table 1 is 01. As a result of cascading, "000000101" is obtained. This is 9 bits in total. Similarly, regarding the 4th frequency spectrum resource block, the binary code of the index number of the 4th frequency spectrum resource block is 0000100 and the corresponding interference overload code obtained from Table 1 is 01. As a result of cascading, "000010001" is obtained. Regarding the 5th frequency spectrum resource block, the binary code of the index number of the 5th frequency spectrum resource block is 0000101 and the corresponding interference overload code obtained from Table 1 is 11. As a result of cascading, "000010111" is obtained. Regarding the 6th frequency spectrum resource block, the binary code of the index number of the 6th frequency spectrum resource block is 0000110 and the corresponding interference overload code obtained from Table 1 is 10. As a result of cascading, "000011010" is obtained.

Therefore, an ultimately generated interference overload indicator signaling is "00000010||00001000||000010111||000011010". Here, the symbol "||" simply shows cascading of bits and a notation corresponding to the symbol does not exist in the signaling actually transmitted. A signaling size of the ultimate interference overload indicator signaling is $9 \times 4 = 36$ bits.

The base station having received the interference overload indicator assumes every 9 bits to be an interference overload indicator of one frequency spectrum resource block and obtains the frequency spectrum resource block index number from first 7 bits. Further, the base station obtains the interference overload level of the frequency spectrum resource block by searching the last 2 bits in Table 1. As a result, the base station obtains the interference overload level of the frequency spectrum resource block. Regarding a frequency spectrum resource block whose interference overload level is not explicitly indicated in the interference overload indicator signaling, the base station judges that an interference overload level of such a frequency spectrum resource block is a "null interference overload". Therefore, the obtained interference overload levels respectively corresponding to the 1st to 10th frequency spectrum resource blocks are "L, N, N, L, H, M, N, N, N, N". This result perfectly matches the interference overload levels that another base station has transmitted and the result is correct.

The signaling structure is relatively simple, and in a case where an interference overload is generated in a small number of frequency spectrum resource blocks, a signaling size is relatively small. However, the signaling structure has a defect such that, in a case where an interference overload is generated in a large number of frequency spectrum resource blocks, the signaling size becomes relatively large.

Example 4: Signaling Obtained By Cascading Index Numbers And Interference Overload Code Series

For frequency spectrum resource blocks in which a relatively high-level interference overload is generated, the frequency spectrum resource block index numbers are arranged to correspond to interference overload codes in a one-to-one relation, by cascading an index number and a corresponding interference overload code. Further, a group of the signalings of all the frequency spectrum resource blocks in which the relatively high-level interference overload is generated is used as an interference overload indicator signaling (Steps S505 and S510). Example 4 can be regarded as an index number cascading example in which the index numbers and the relatively high interference overload codes obtained by coding interference overload levels except the lowest interference overload level are cascaded, respectively.

Example 4 employs the interference overload scene shown in Fig. 4. Fig. 8 is a diagram schematically illustrating Example 4. In a case where the "medium interference overload level" and the "high interference overload level" are determined to correspond to the relatively high-level interference overload, $1^{st}$, $4^{th}$, $5^{th}$, and $6^{th}$ frequency spectrum resource blocks are the frequency spectrum resource blocks in which the relatively high-level interference overload is generated among the $1^{st}$ to $10^{th}$ frequency spectrum resource blocks. Because there are 96 frequency spectrum resource blocks in total, it is necessary to convert the frequency spectrum resource block index numbers from a decimal code to a binary code by using 7 bits. Regarding the $1^{st}$ frequency spectrum resource block, the binary code of the index number of the $1^{st}$ frequency spectrum resource block is 0000001 and the corresponding interference overload code obtained from Table 3 is 0. As a result of cascading, "00000010" is obtained. This is 8 bits in total.

[Table 3]

| Interference Overload Coding Table | | |
|---|---|---|
| Interference Overload Level | Medium Interference Overload | High Interference Overload |
| Interference Overload Code | 0 | 1 |

In this case, a 1-bit code may be used because there are only two types of cases that have a relatively-high interference overload, that is, a "medium interference overload level" and a "high interference overload level". Accordingly, Example 4 employs Table 3 obtained as a result of simplification, but not Table 2. Certainly, the present invention can be realized by using Table 2. However, in such a case, a signaling size becomes relatively large and this is not preferable. Further, the interference overload code shown in Table 3 is merely one example of mapping between the interference overload levels and the interference overload codes. In actual applications, any other interference overload codes can be used as long as a one-to-one mapping relation is satisfied between the interference overload levels and the interference overload codes. Even in such a case, the present invention can be realized (Step S505).

Similarly, regarding the $4^{th}$ frequency spectrum resource block, the binary code of the index number of the $4^{th}$ frequency spectrum resource block is 0000100 and the corresponding interference overload code obtained from Table 3 is 0. As a result of cascading, "00001000" is obtained. Regarding the $5^{th}$ frequency spectrum resource block, the binary code of the index number of the $5^{tn}$ frequency spectrum resource block is 0000101 and the corresponding interference overload code obtained from Table 3 is 1. As a result of cascading, "00001011" is obtained. Regarding the $6^{th}$ frequency spectrum resource block, the binary code of the index number of the $6^{tn}$ frequency spectrum resource block is 0000110 and the corresponding interference overload code obtained from Table 3 is 0. As a result of cascading, "00001100" is obtained. Therefore, an ultimately generated interference overload indicator signaling is "00000010||00001000||0000101||00001||100". Here, the symbol "||" simply shows cascading of bits and a notation corresponding to the symbol does not exist in the signaling actually transmitted. A signaling size of the ultimate interference overload indicator signaling is $8 \times 4 = 32$ bits.

The base station having received the interference overload indicator assumes every 8 bits to be an interference overload indicator of one frequency spectrum resource block and obtains the frequency spectrum resource block index number from first 7 bits. Further, the base station obtains the interference overload level of the frequency spectrum resource block by searching the last bit in Table 3. As a result, the base station obtains the interference overload level of the frequency spectrum resource block. Regarding a frequency spectrum resource block whose interference overload level is not explicitly indicated in the interference overload indicator signaling, the base station judges that an interference overload level of such a frequency spectrum resource block is the "low interference overload". Therefore, the obtained interference overload levels respectively corresponding to the 1st to 10th frequency spectrum resource blocks are "M, L, L, M, H, M, L, L, L, L". This result perfectly matches the interference overload levels that another base station has transmitted and the result is correct.

The signaling structure is relatively simple, and in a case where an interference overload is generated in a small number of frequency spectrum resource blocks, a signaling size is relatively small. However, the signaling structure has a defect such that, in a case where an interference overload is generated in a large number of frequency spectrum resource blocks, the signaling size becomes relatively large.

Example 5: Signaling By Use Of Interference Overload Differential Code Series

In Example 5, one reference frequency spectrum resource block is selected and an interference overload code of the reference frequency spectrum resource block is obtained. Further, interference overload differential coding is carried out with respect to an adjacent frequency spectrum resource block. An advantageous effect of differential coding is reduction of the number of bits in coding. That is, by use of a relatively small number of bits, a variation in interference overload level between adjacent frequency resource blocks can be coded. The differential coding is in general realized by using a differential coding table and a differential decoding table. An interference overload differential code series obtained by use of the differential coding table and the differential decoding table is used as the interference overload indicator signaling (Steps S505 and S510).

The present example employs the interference overload scene shown in Fig. 3. Fig. 9 is a diagram schematically illustrating Example 5. First, Table 4 is used as the interference overload differential coding table. A column index indicates an interference overload level that can be currently decoded, while a row index indicates an interference overload level that is to be decoded next. The numerical values in Table 4 are differential code values each satisfying a condition of the column index and a condition of the row index. The present example can be regarded as an interference overload differential coding example in which differential coding is carried out for all the interference overload levels.

[Table 4]

Interference Overload Differential Decoding Table

| Interference Overload Level To Be Decoded Next / Interference Overload Level That Can Be Currently Decoded | Null Interference Overload | Low Interference Overload | Medium Interference Overload | High Interference Overload |
|---|---|---|---|---|
| Null Interference Overload | 0 | 1 | 1 | 1 |
| Low Interference Overload | 0 | 1 | 1 | 1 |
| Medium Interference Overload | 0 | 0 | 0 | 1 |
| High Interference Overload | 0 | 0 | 0 | 1 |

Here, the interference overload level that can be currently decoded is obtained from the differential decoding table. Table 5 is used as an interference overload differential coding table. In Table 5, a column index indicates a previously decoded interference overload level, while a row index indicates an interference overload differential code. Each of the numerical values in Table 5 indicates the interference overload level that can be currently decoded.

[Table 5]

Interference Overload Differential Decoding Table

| Interference Overload Differential Code / Previously Decoded Interference Overload Level | 0 | 1 |
|---|---|---|
| Null Interference Overload | Null Interference Overload | Low Interference Overload |
| Low Interference Overload | Null Interference Overload | Medium Interference Overload |
| Medium Interference Overload | Low Interference Overload | High Interference Overload |
| High Interference Overload | Medium Interference Overload | High Interference Overload |

Here, the interference overload differential coding table of Table 4 and the interference overload differential decoding table of Table 5 are merely one example of a differential coding application. In actual applications, other interference overload differential coding table and interference overload differential decoding table can be used. That is, the present invention can be realized as long as values in the coding table are identical in the decoding table (Step S505).

Regarding the 1st to 10th frequency spectrum resource blocks, the 1st frequency spectrum resource block is selected as a reference frequency spectrum resource block. (Here, it is merely one example to select the 1st frequency spectrum resource block. In practice, any frequency spectrum resource block can be selected and used as a reference frequency spectrum resource block.) From Table 1, it is found that the interference overload code of the 1st frequency spectrum resource block is 01. Further, it is also found that an interference differential code value of the adjacent 2nd frequency spectrum resource block is "0", from Table 4.

Then, from Table 5, it is found that an interference overload level that can be decoded is "N" in the 2nd frequency

spectrum resource block. Subsequently, from Table 4, it is found that the interference differential code value of the adjacent 3rd frequency spectrum resource block is "0"..... Similarly, processing proceeds. As a result, an interference overload differential code series "01001100000" is obtained. This is used as the interference overload indicator signaling of the 1st to 10th frequency spectrum resource blocks. A signaling size of the interference overload indicator signaling is 2 + 9 = 11 bits.

A base station having received the interference overload indicator first determines according to Table 1 that the interference overload level of the reference frequency spectrum resource block (the 1st frequency spectrum resource block) is "L". Then, according to Table 5, the base station decodes the respective interference overload levels respectively corresponding to the 1st to 10th frequency spectrum resource blocks. As a result, the base station can obtain the interference overload levels respectively corresponding to the 1st to 10th frequency spectrum resource blocks. The result is "L, N, N, L, M, L, N, N, N, N". In this case, there occur relatively small errors in the interference overload levels respectively corresponding to the 5th and 6th frequency spectrum resource blocks. That is, "H" is erroneously decoded to "M", and "M" is erroneously decoded to "L". Such errors occur because the differential coding cannot follow a relatively large change.

An advantage of the above signaling is that a signaling size is relatively small, while a defect of the above signaling is that an error occurs in the interference overload decoding.

Example 6: Signaling By Use Of Interference Overload Differential Code Series

In Example 6, one reference frequency spectrum resource block is selected and an interference overload code of the reference frequency spectrum resource block is obtained. Further, interference overload differential coding is carried out with respect to an adjacent frequency spectrum resource block. An advantageous effect of differential coding is reduction of the number of bits in coding. That is, by use of a relatively small number of bits, a variation in interference overload level between adjacent frequency resource blocks can be coded. The differential coding is in general realized by using a differential coding table and a differential decoding table. An interference overload differential code series obtained by use of the differential coding table and the differential decoding table is used as the interference overload indicator signaling (Steps S505 and S510). The present example can be regarded as a high interference overload differential coding example in which differential coding is carried out for only interference overload levels except the lowest interference overload level.

Fig. 4 employs the interference overload scene shown in Fig. 4. Fig. 10 is a diagram schematically illustrating Example 6. First, Table 6 is used as the interference overload differential coding table. A column index indicates an interference overload level that can be currently decoded, while a row index indicates an interference overload level that is to be decoded next. The numerical values in Table 6 are differential code values each satisfying a condition of the column index and a condition of the row index.

[Table 6]

Interference Overload Differential Decoding Table

| Interference Overload Level That Can Be Currently Decoded \ Interference Overload Level To Be Decoded Next | Low Interference Overload | Medium Interference Overload | High Interference Overload |
|---|---|---|---|
| Low Interference Overload | 0 | 1 | 1 |
| Medium Interference Overload | 0 | 0 | 1 |
| High Interference Overload | 0 | 0 | 1 |

Here, the interference overload level that can be currently decoded is obtained from the differential decoding table. Table 7 is used as an interference overload differential coding table. In Table 7, a column index indicates a previously decoded interference overload level, while a row index indicates an interference overload differential code. Each of the numerical values in Table 7 indicates the interference overload level that can be currently decoded.

[Table 7]

Interference Overload Differential Decoding Table

| Interference Overload Differential Code / Previously Decoded Interference Overload Level | 0 | 1 |
|---|---|---|
| Low Interference Overload | Low Interference Overload | Medium Interference Overload |
| Medium Interference Overload | Low Interference Overload | High Interference Overload |
| High Interference Overload | Medium Interference Overload | High Interference Overload |

Here, the interference overload differential coding table of Table 6 and the interference overload differential decoding table of Table 7 are merely one example of a differential coding application. In actual applications, other interference overload differential coding table and interference overload differential decoding table can be used. That is, the present invention can be realized as long as values in the coding table are identical in the decoding table (Step S505).

Regarding the 1st to 10th frequency spectrum resource blocks, the 1st frequency spectrum resource block is selected as a reference frequency spectrum resource block. (Here, it is merely one example to select the 1st frequency spectrum resource block. In practice, any frequency spectrum resource block can be selected and used as a reference frequency spectrum resource block.) From Table 2, it is found that the interference overload code of the 1st frequency spectrum resource block is 10. Further, it is also found that an interference differential code value of the adjacent 2nd frequency spectrum resource block is "0", from Table 6.

Then, from Table 7, it is found that an interference overload level that can be decoded is "L" in the 2nd frequency spectrum resource block. Subsequently, from Table 6, it is found that the interference differential code value of the adjacent 3rd frequency spectrum resource block is "0"..... Similarly, processing proceeds. As a result, an interference overload differential code series "10001100000" is obtained. This is used as the interference overload indicator signaling of the 1st to 10th frequency spectrum resource blocks. A signaling size of the interference overload indicator signaling is 2 + 9 = 11 bits.

A base station having received the interference overload indicator first determines according to Table 2 that the interference overload level of the reference frequency spectrum resource block (the 1st frequency spectrum resource block) is "M". Then, according to Table 7, the base station decodes the interference overload levels respectively corresponding to the 1st to 10th frequency spectrum resource blocks. As a result, the base station can obtain the interference overload levels respectively corresponding to the 1st to 10th frequency spectrum resource blocks. The result is "M, L, L, M, H, M, L, L, L, L". This result perfectly matches the interference overload levels that another base station transmits and the present example has no error. However, this does not mean that an error never occurs in the case of the interference overload scene shown in Fig. 4. For example, in a case where there are two adjacent frequency spectrum resource blocks one of which has the interference overload level "H" and the other one of which has the interference overload level "L", an error occurs.

An advantage of the above signaling is that a signaling size is relatively small, while a defect of the above signaling is that an error may occur in the interference overload decoding.

Example 7: Signaling By Use Of Interference Overload Differential Code Series Based On Subbands

First, all frequency spectrum resource blocks are divided into a plurality of subbands. In the present invention, a method of dividing the frequency spectrum resource blocks into the subbands is not specifically limited. That is, the frequency spectrum resource blocks may be divided into subbands having an identical size or subbands having different sizes, respectively. Here, an interference overload level series of each subband is referred to as an interference overload level sub-series.

In each of the subbands, one frequency spectrum resource block is selected and an interference overload code of the reference frequency spectrum resource block is obtained. Then, interference overload coding is carried out with respect to an adjacent frequency spectrum resource block. An advantageous effect of differential coding is reduction of the number of bits in coding. That is, by use of a relatively small number of bits, a variation in interference overload level between adjacent frequency resource blocks can be coded. The differential coding is in general realized by using a differential coding table and a differential decoding table. The interference overload differential code series respectively corresponding to the subbands are obtained according to the differential coding table and the differential decoding table. These interference overload differential code series are cascaded and used as the interference overload indicator signaling (Steps S505 and S510). Example 7 can be regarded as an example related to interference overload differential codes corresponding to subbands. In the example, differential coding is carried out with respect to all interference overload levels in each of the subbands.

The present example employs the interference overload scene shown in Fig. 3. Fig. 11 is a diagram schematically illustrating Example 7. Table 4 is used as the interference overload differential coding table and Table 5 is used as the interference overload differential decoding table. Here, the interference overload differential coding table of Table 4 and the interference overload differential decoding table of Table 5 are merely one example of a differential coding application. In actual applications, other interference overload differential coding table and interference overload differential decoding table can be used. That is, the present invention can be realized as long as values in the coding table are identical in the decoding table.

Regarding the $1^{st}$ to $10^{th}$ frequency spectrum resource blocks, the $1^{st}$ to $5^{th}$ frequency spectrum resource blocks form a subband 1 and the $6^{th}$ to $10^{th}$ frequency spectrum resource blocks form a subband 2. Further, in each subband, a frequency spectrum resource block having the smallest index number is assumed to be a reference frequency spectrum resource block (The frequency spectrum resource block of the subband 1 is the $1^{st}$ frequency spectrum resource block; the frequency spectrum resource block of the subband 2 is the $6^{th}$ frequency spectrum resource block; and so on).

In a case where the subband 1 is used as an example, according to Table 1, the interference overload code of the reference frequency spectrum resource block (the $1^{st}$ frequency spectrum resource block) of the subband 1 is 01. The interference differential code value of the adjacent $2^{nd}$ frequency spectrum resource block of the subband 1 is "0", according to Table 4. Further, from Table 5, it is found that the interference overload level that can be decoded in the $2^{nd}$ frequency spectrum resource block is "N". Then, it is found that the interference differential code value of the adjacent $3^{rd}$ frequency spectrum resource block is "0", from Table 4. ...... Similarly, processing proceeds. As a result, it is found that: the interference overload differential code series of the subband 1 is "010011"; and similarly, that the interference overload differential code series of the subband 2 is "100000" (Step S505). As a result of cascading the interference overload differential code series of the subbands 1 and 2, a series "010011||00000" is obtained. This is used as the interference overload indicator signaling of the $1^{st}$ to $10^{th}$ frequency spectrum resource blocks. Here, the symbol "||" simply shows cascading of bits and a notation corresponding to the symbol does not exist in the signaling actually transmitted. A signaling size of the ultimate interference overload indicator signaling is $(2 + 4) \times 2$ =12 bits (Step S510).

A base station having received the interference overload indicator first obtains the interference overload level of the reference frequency spectrum resource block of each of the subbands, from Table 1. Further, according to Table 5, the base station sequentially decodes an interference overload level of an adjacent frequency spectrum resource block in each subband, and ultimately obtains the interference overload levels respectively corresponding to the $1^{st}$ to $10^{th}$ frequency spectrum resource blocks. A result obtained by this process is "L, N, N, L, M - M, L, N, N, N". Here, there occur relatively small errors in the interference overload levels respectively corresponding to the $5^{th}$ and $7^{th}$ frequency spectrum resource blocks. That is, "H" is erroneously decoded to "M", and "N" is erroneously decoded to "L". Such errors occur because the differential coding cannot follow a relatively large change. However, because a method by use of segmentation differential coding is used, it is possible to make revision in the interference overload code corresponding to the reference frequency spectrum resource block of each subband. Accordingly, the errors in the present example become smaller in a case of the non-segmentation differential coding shown in Example 5.

An advantage of the above signaling is that a signaling size is relatively small, while a defect of the above signaling is that a relatively small error occurs in the interference overload decoding.

Example 8: Signaling By Use Of Interference Overload Differential Code Series Based On Subbands

First, all frequency spectrum resource blocks are divided into a plurality of subbands. In the present invention, a method of dividing the frequency spectrum resource blocks into the subbands is not specifically limited. That is, the frequency spectrum resource blocks may be divided into subbands having an identical size or subbands having different sizes, respectively. Here, an interference overload level series of each subband is referred to as an interference overload level sub-series. In each of the subbands, one frequency spectrum resource block is selected and an interference overload code of the reference frequency spectrum resource block is obtained. Then, interference overload coding is carried out with respect to an adjacent frequency spectrum resource block. An advantageous effect of differential coding is reduction of the number of bits in coding. That is, by use of a relatively small number of bits, a variation in interference overload level between adjacent frequency resource blocks can be coded. The differential coding is in general realized by using a differential coding table and a differential decoding table. The interference overload differential code series respectively corresponding to the subbands are obtained according to the differential coding table and the differential decoding table. These interference overload differential code series are cascaded and used as the interference overload indicator signaling (Steps S505 and S510). Example 8 can be regarded as an example related to high interference overload differential codes corresponding to subbands. In the example, differential coding is carried out with respect to interference overload levels except the lowest interference overload level in each of the subbands.

The present example employs the interference overload scene shown in Fig. 4. Fig. 12 is a diagram schematically illustrating Example 8. Table 6 is used as the interference overload differential coding table and Table 7 is used as the interference overload differential decoding table. Here, the interference overload differential coding table of Table 6 and the interference overload differential decoding table of Table 7 are merely one example of a differential coding application. In actual applications, other interference overload differential coding table and interference overload differential decoding table can be used. That is, the present invention can be realized as long as values in the coding table are identical in the decoding table (Step S505).

Regarding the 1st to 10th frequency spectrum resource blocks, the 1st to 5th frequency spectrum resource blocks form a subband 1, and the 6th to 10th frequency spectrum resource blocks form a subband 2. Further, in each subband, a frequency spectrum resource block having the smallest index number is assumed to be a reference frequency spectrum resource block (The frequency spectrum resource block of the subband 1 is the 1st frequency spectrum resource block; the frequency spectrum resource block of the subband 2 is the 6th frequency spectrum resource block; and so on).

In a case where the subband 1 is used as an example, according to Table 2, the interference overload code of the reference frequency spectrum resource block (the 1st frequency spectrum resource block) of the subband 1 is 10. The interference differential code value of the adjacent 2nd frequency spectrum resource block of the subband 1 is "0", according to Table 6. Further, from Table 7, it is found that the interference overload level that can be decoded in the 2nd frequency spectrum resource block is "L". Then, it is found that the interference differential code value of the adjacent 3rd frequency spectrum resource block is "0", from Table 6. ...... Similarly, processing proceeds. As a result, it is found that: the interference overload differential code series of the subband 1 is 100011"; and similarly, the interference overload differential code series of the subband 2 is "100000" (Step S505). As a result of cascading the interference overload differential code series of the subbands 1 and 2, a series "10001||00000" is obtained. This is used as the interference overload indicator signaling of the 1st to 10th frequency spectrum resource blocks. Here, the symbol "||" simply shows cascading of bits and a notation corresponding to the symbol does not exist in the signaling actually transmitted. A signaling size of the ultimate interference overload indicator signaling is $(2 + 4) \times 2 = 12$ bits (Step S510).

A base station having received the interference overload indicator first obtains the interference overload level of the reference frequency spectrum resource block of each of the subbands according to Table 2. Further, according to Table 7, the base station sequentially decodes an interference overload level of an adjacent frequency spectrum resource block in each subband, and ultimately obtains the interference overload levels respectively corresponding to the 1st to 10th frequency spectrum resource blocks. A result obtained by this process is "M, L, L, M, H - M, L, L, L, L". This result perfectly matches the interference overload levels that another base station transmits and the example has no error. However, this does not mean that an error never occurs in the interference overload scene shown in Fig. 4. For example, in cases where there are two adjacent frequency spectrum resource blocks one of which has the interference overload level "H" and the other one of which has the interference overload level "L", an error may occur.

An advantage of the above signaling is that a signaling size is relatively small, while a defect of the above signaling is that an error may occur in the interference overload decoding.

Example 9: Signaling Obtained By Cascading Interference Overload Bitmap And Interference Overload Code Series

For frequency spectrum resource blocks in which a relatively high-level interference overload is generated, respective positions of such frequency spectrum resource blocks are indicated in a bitmap. That is, by use of a bit series having a length corresponding to the number of frequency spectrum resource blocks, the frequency spectrum resource blocks are mapped. This marks each frequency spectrum resource block in 1 bit of the bit series. In a case where a relatively high-level interference overload is generated in a frequency spectrum resource block, a corresponding bit value becomes 1. Meanwhile, in a case where no relatively high-level interference overload is generated in a frequency spectrum resource block, a corresponding bit value becomes 0. Then, an interference overload code is sequentially obtained for each frequency spectrum source block in which the relatively high-level interference overload is generated, and an interference overload code series is generated. Subsequently, the interference overload code series and the interference overload bitmap are cascaded and used as the interference overload indicator signaling (Steps S505 and S510). The present example can be regarded as an example of interference overload bitmap cascading. In the example, the interference overload bitmap and interference overload codes obtained by coding all the interference overload levels are cascaded.

Example 9 employs the interference overload scene shown in Fig. 3. Fig. 13 is a diagram schematically illustrating Example 9. In a case where the "low interference overload level", the "medium interference overload level", and the "high interference overload level" are determined to correspond to the relatively high-level interference overload, $1^{st}$, $4^{th}$, $5^{th}$, and $6^{th}$ frequency spectrum resource blocks are the frequency spectrum resource blocks in which the relatively high-level interference overload is generated among the $1^{st}$ to $10^{th}$ frequency spectrum resource blocks.

Accordingly, by use of a bit series having a size of 10 bits, the number 1 is put in $1^{st}$, $4^{th}$, $5^{th}$, and $6^{th}$ bit positions and the number 0 is put in the other bit positions ("1001110000"). This makes it possible to indicate positions of the frequency spectrum resource blocks of interference overload. Regarding the frequency spectrum resource blocks (the $1^{st}$, $4^{th}$, $5^{th}$, and $6^{th}$ frequency spectrum resource blocks) in which the relatively high-level interference overload is generated, an interference overload code is sequentially obtained according to Table 1 and an interference overload code series "01011110" is generated (Step S505). Further, by cascading the interference overload code series and the interference overload bitmap, the interference overload indicator signaling "1001110000||01011110" is ultimately generated. Here, the symbol "||" simply shows cascading of bits and a notation corresponding to the symbol does not exist in the signaling actually transmitted. A signaling size of the interference overload indicator signaling is 10 + 8 = 18 bits (Step S510).

The base station having received the interference overload indicator first takes first 10 bits as the interference overload bitmap. Further, because the $1^{st}$, $4^{th}$, $5^{th}$, $6^{th}$ bit positions are 1, the base station determines that the interference overload occurs in the $1^{st}$, $4^{th}$, $5^{th}$, and $6^{th}$ frequency spectrum resource blocks. Then, the base station combines every 2 bits out of the last 8 bits so as to form each one interference overload code and carries out decoding according to Table 1. As a result, the interference overload levels respectively corresponding to the $1^{st}$, $4^{th}$, $5^{th}$, and $6^{th}$ frequency spectrum resource blocks in this order are determined to be "L, L, H, M", while the interference overload levels of the other frequency spectrum resource blocks are determined to be "N". Ultimately, a result "L, N, N, L, H, M, N, N, N, N" is obtained as the interference overload levels respectively corresponding to the $1^{st}$ to $10^{th}$ frequency spectrum resources. This result perfectly matches the interference overload levels that another base station has transmitted and this result is correct.

The signaling has a relatively simple structure. In a case where the interference overload occurs in a moderate number of frequency spectrum resource blocks, the signaling has a relatively small signaling size. Meanwhile, the signaling has a defect such that, in a case where the interference overload occurs in a large number or a small number of frequency overload spectrum resource blocks, a signaling size becomes relatively large. Here, in a case where a one-level interference overload is used (in a case where there only exist cases where "the interference overload level is present" and "the interference overload level is not present"), it is possible to generate the interference overload indicator signaling according to the present invention by use of only the interference overload bitmap. Therefore, transmission of the interference overload code series is not necessary.

Example 10: Signaling Obtained By Cascading Interference Overload Bitmap And Interference Overload Code Series

For frequency spectrum resource blocks in which a relatively high-level interference overload is generated, respective positions of such frequency spectrum resource blocks are indicated in a bitmap. That is, by use of a bit series having a length corresponding to the number of frequency spectrum resource blocks, the frequency spectrum resource blocks are mapped. This marks each frequency spectrum resource block in 1 bit of the bit series. In a case where a relatively high-level interference overload is generated in a frequency spectrum resource block, a corresponding bit value becomes 1. Meanwhile, in a case where no relatively high-level interference overload is generated in a frequency spectrum resource block, a corresponding bit value becomes 0. Then, an interference overload code is sequentially obtained for each frequency spectrum source block in which the relatively high-level interference overload is generated, and an interference overload code series is generated. Subsequently, the interference overload code series and the interference overload bitmap are cascaded and used as the interference overload indicator signaling (Steps S505 and S510). The present example can be regarded as an example of interference overload bitmap cascading. In the example, the interference overload bitmap and high interference overload codes obtained by coding only interference overload levels except the lowest interference overload level are cascaded.

Example 10 employs the interference overload scene shown in Fig. 4. Fig. 14 is a diagram schematically illustrating Example 10. In a case where the "medium interference overload level" and the "high interference overload level" are determined to correspond to the relatively high-level interference overload, 1st, 4th, 5th, and 6th frequency spectrum resource blocks are the frequency spectrum resource blocks in which the relatively high-level interference overload is generated among the 1st to 10th frequency spectrum resource blocks.

Accordingly, by use of a bit series having a size of 10 bits, the number 1 is put in 1st, 4th, 5th, and 6th bit positions and the number 0 is put in the other bit positions ("1001110000"). This makes it possible to indicate positions of the frequency spectrum resource blocks of interference overload. Regarding the frequency spectrum resource blocks (the 1st, 4th, 5th, and 6th frequency spectrum resource blocks) in which the relatively high-level interference overload is generated, an interference overload code is sequentially obtained according to Table 3 and an interference overload code series "0010" is generated (Step S505). Further, by cascading the interference overload code series and the interference overload bitmap, the interference overload indicator signaling "1001110000||0010" is ultimately generated. Here, the symbol "||" simply shows cascading of bits and a notation corresponding to the symbol does not exist in the signaling actually transmitted. A signaling size of the interference overload indicator signaling is 10 + 4 = 14 bits (Step S510).

The base station having received the interference overload indicator first takes first 10 bits as the interference overload bitmap. Further, because the 1st, 4th, 5th, 6th bit positions are 1, the base station determines that the interference overload occurs in the 1st, 4th, 5th, and 6th frequency spectrum resource blocks. Then, the base station assumes each bit of the last 4 bits to be each one interference overload code and carries out decoding according to Table 3. As a result, the interference overload levels respectively corresponding to the 1st, 4th, 5th, and 6th frequency spectrum resource blocks in this order are determined to be "M, M, H, M", while the interference overload levels of the other frequency spectrum resource blocks are determined to be "L". Ultimately, a result "M, L, L, M, H, M, L, L, L, L" is obtained as the interference overload levels respectively corresponding to the 1st to 10th frequency spectrum resources. This result perfectly matches the interference overload levels that another base station has transmitted and this is correct.

The signaling has a relatively simple structure. In a case where the interference overload occurs in a moderate number of frequency spectrum resource blocks, the signaling has a relatively small signaling size. Meanwhile, the signaling has a defect such that, in a case where the interference overload occurs in a large number or a small number of frequency overload spectrum resource blocks, a signaling size becomes relatively large. Here, in a case where a one-level interference overload is used (in a case where there only exist the cases where "the interference overload level is present" and "the interference overload level is not present"), it is possible to generate the interference overload indicator signaling according to the present invention by use of only the interference overload bitmap. Therefore, transmission of the interference overload code series is not necessary.

Example 11: Signaling Obtained By Cascading Interference Overload Bitmap And Interference Overload Differential Code Series

For frequency spectrum resource blocks in which a relatively high-level interference overload is generated, respective positions of such frequency spectrum resource blocks are indicated in a bitmap. That is, by use of a bit series having a length corresponding to the number of frequency spectrum resource blocks, the frequency spectrum resource blocks are mapped. This marks each frequency spectrum resource block in 1 bit of the bit series. In a case where a relatively high-level interference overload is generated in a frequency spectrum resource block, a corresponding bit value becomes 1. Meanwhile, in a case where no relatively high-level interference overload is generated in a frequency spectrum resource block, a corresponding bit value becomes 0. Then, for each frequency spectrum source block in which the relatively high-level interference overload is generated, interference overload differential coding is carried out. That is, one reference frequency spectrum resource block is selected and an interference overload code of the reference frequency spectrum resource block is obtained. Further, interference overload differential coding is carried out to an adjacent interference spectrum resource block in which relatively high-level interference overload is generated. The present example is regarded as an example of interference overload bitmap cascading. In the present example, the interference overload bitmap and the interference overload differential codes obtained by differential coding of all the interference overload levels are cascaded.

An advantageous effect of differential coding is reduction of the number of bits in coding. That is, by use of a relatively small number of bits, a variation in interference overload level between adjacent frequency resource blocks can be coded. The differential coding is in general realized by using a differential coding table and a differential decoding table. An interference overload differential code series obtained by use of the differential coding table and the differential decoding table is cascaded and used as the interference overload indicator signaling (Steps S505 and S510).

The present example employs the interference overload scene shown in Fig. 3. Fig. 15 is a diagram schematically illustrating Example 11. First, Table 8 is used as the interference overload differential coding table. A column index indicates an interference level that can be currently decoded, while a row index indicates an interference overload level that is to be decoded next. The numerical values in Table 8 are differential code values each satisfying a condition of the column index and a condition of the row index. Table 8 is a little different from Table 4 in that a frequency spectrum resource block in which a relatively high-level interference overload is generated is a frequency spectrum resource block having at least a low interference overload. Therefore, Table 8 is obtained by deleting a column and a row of the "null interference overload" from Table 4.

[Table 8]

Interference Overload Differential Decoding Table

| Interference Overload Level To Be Decoded Next / Interference Overload Level That Can Be Currently Decoded | Low Interference Overload | Medium Interference Overload | High Interference Overload |
|---|---|---|---|
| Low Interference Overload | 0 | 1 | 1 |
| Medium Interference Overload | 0 | 0 | 1 |
| High Interference Overload | 0 | 0 | 1 |

Here, the interference overload level that can be currently decoded is obtained from the differential decoding table. Table 9 is used as an interference overload differential coding table. In Table 9, a column index indicates a previously decoded interference overload level, while a row index indicates an interference overload differential code. Each of the numerical values in Table 9 indicates the interference overload level that can be currently decoded. Table 9 is a little different from Table 5 in that a frequency spectrum resource block in which a relatively high-level interference overload is generated is a frequency spectrum resource block having at least a low interference overload. Therefore, Table 9 is obtained by deleting a column and a row of the "null interference overload" from Table 5.

[Table 9]

Interference Overload Differential Decoding Table

| Interference Overload Differential Code / Previously Decoded Interference Overload Level | 0 | 1 |
|---|---|---|
| Low Interference Overload | Low Interference Overload | Medium Interference Overload |
| Medium Interference Overload | Low Interference Overload | High Interference Overload |
| High Interference Overload | Medium Interference Overload | High Interference Overload |

Here, the interference overload differential coding table of Table 8 and the interference overload differential decoding table of Table 9 are merely one example of a differential coding application. In actual applications, other interference overload differential coding table and interference overload differential decoding table can be used. That is, the present invention can be realized as long as values in the coding table are identical in the decoding table (Step S505).

Regarding the 1st to 10th frequency spectrum resource blocks, 1st, 4th, 5th, and 6th frequency spectrum resource blocks are the frequency spectrum resource blocks in which the relatively high-level interference overload is generated. Accordingly, by use of a bit series having a size of 10 bits, the number 1 is put in 1st, 4th, 5th, and 6th bit positions and the number 0 is put in the other bit positions ("1001110000"). This makes it possible to indicate positions of the frequency spectrum resource blocks of interference overload.

Regarding the 1st, 4th, 5th, and 6th frequency spectrum resource blocks, the 1st frequency spectrum resource block is selected as a reference frequency spectrum resource block. (Here, it is merely one example to select the 1st frequency spectrum resource block. In practice, any frequency spectrum resource block can be selected and used as a reference frequency spectrum resource block.) From Table 1, it is found that the interference overload code of the 1st frequency spectrum resource block is 01. Further, it is also found that an interference differential code value of the adjacent 4th frequency spectrum resource block is "0", from Table 8. Subsequently, from Table 9, it is found that an interference overload level that can be decoded is "L" in the 4th frequency spectrum resource block. Accordingly, from Table 8, it is found that the interference differential code value of the adjacent 5th frequency spectrum resource block is "1". ..... Similarly, processing proceeds. As a result, an interference overload differential code series "01010" is obtained. This interference overload differential code series and the interference overload bitmap is cascaded and used as the interference overload indicator signaling of the 1st, 4th, 5th, and 6th frequency spectrum resource blocks.

Therefore, an ultimately generated interference overload indicator signaling is "1001110000||01010". Here, the symbol "||" simply shows cascading of bits and a notation corresponding to the symbol does not exist in the signaling actually transmitted. A signaling size of the interference overload indicator signaling is 10 + 5 = 15 bits.

The base station having received the interference overload indicator first takes first 10 bits as the interference overload bitmap. Further, because the 1st, 4th, 5th, 6th bit positions are 1, the base station determines that the interference overload occurs in the 1st, 4th, 5th, and 6th frequency spectrum resource blocks. Then, the base station checks that the reference frequency spectrum resource block (1st frequency spectrum resource block) has the "L" interference overload level, according to Table 1. Further, the base station sequentially decodes an interference overload level of an adjacent frequency spectrum resource block, according to Table 9, and obtains interference overload levels respectively corresponding to the 1st, 4th, 5th, and 6th frequency spectrum resource blocks. A result of the decoding is "L, L, M, L" in the order of the 1st, 4th, 5th, and 6th frequency spectrum resource blocks. Because an interference overload does not occur in the other frequency spectrum resource blocks, the interference overload level of the other frequency spectrum resource blocks is "N". Ultimately, the base station obtains the interference overload levels respectively corresponding to the 1st to 10th frequency spectrum resource blocks. As a result, "L, N, N, L, M, L, N, N, N, N" is obtained. In this case, there occur relatively small errors in the interference overload levels respectively corresponding to the 5th and 6th frequency spectrum resource blocks. That is, "H" is erroneously decoded to "M", and "M" is erroneously decoded to "L".

In a case where the interference overload occurs in a moderate number of frequency spectrum resource blocks, the signaling has a relatively small signaling size. Meanwhile, the signaling has a defect such that, in a case where the interference overload occurs in a large number or a small number of frequency overload spectrum resource blocks, a signaling size becomes relatively large and an error occurs in decoding the interference overload. Here, in a case where a one-level interference overload is used (in a case where there only exist the cases where "the interference overload level is present" and "the interference overload level is not present"), it is possible to generate the interference overload indicator signaling in the present invention by use of only the interference overload bitmap. Therefore, transmission of the interference overload code series is not necessary.

Example 12: Signaling Obtained By Cascading Interference Overload Code In System Bandwidth And Interference Intensity Bitmap Of Frequency Spectrum Resource Blocks

First, the base station calculates an interference overload level in the system bandwidth and obtains a corresponding interference overload code in the system bandwidth. Further, the base station sets an interference condition in the system bandwidth as a new threshold value $K_A$. Then, the base station compares interference conditions of the respective frequency spectrum resource blocks with the threshold value $K_A$, and indicates a result of the comparison in the form of a bitmap. That is, the base station forms a bit series having a length that is the same as the number of the frequency spectrum resource blocks. Each bit corresponds to one frequency spectrum resource block. In a case where a condition of a frequency spectrum resource block exceeds the threshold value $K_A$, a corresponding bit is set to 1. In a case where a condition of a frequency spectrum resource block does not exceed the threshold value $K_A$, a corresponding bit is set to 0. In this way, the interference intensity bitmap of the frequency spectrum resource blocks is generated. This bitmap and the interference overload code in the system bandwidth are cascaded and used as the interference overload indicator signaling. The interference condition in the system bandwidth is an interference overload level in the system bandwidth, an interference power density value in the system bandwidth, an interference-to-noise ratio in the system bandwidth, an average interference power density value in the system bandwidth, an average interference-to-noise ratio in the system bandwidth, or any other value that can indicate a condition of interference in the system bandwidth (Step S505 and S510). The present example can be regarded as an example in which an interference overload system-average code and the interference intensity bitmap are cascaded.

Example 12 employs the interference overload scene shown in Fig. 3. Fig. 16 is a diagram schematically showing Example 12. The interference-to-noise ratio in the system bandwidth is assumed as a measure of a condition of interference in the system bandwidth. First, the base station calculates the interference-to-noise ratio $K_A$ in the system bandwidth (96 frequency spectrum resource blocks). For example, in a case where the interference-to-noise ratio is in an area of the "low interference overload", the interference overload code in the system bandwidth is obtained according to Table 1 and this interference overload code is "01". Then, interference-to-noise ratios respectively corresponding to the frequency spectrum resource blocks are compared with $K_A$, and it is found that the interference-to-noise ratio of each of the 4th, 5th, and 6th frequency spectrum resource blocks is greater than $K_A$. Therefore, the generated interference intensity bitmap of the frequency spectrum resource blocks is "0001110000". By cascading the bitmap and the interference overload code in the system bandwidth, the interference overload indicator signaling of the 1st to 10th frequency spectrum resource blocks are obtained. Thus obtained interference overload indicator signaling is "01||0001110000". Here, the symbol "||" simply shows cascading of bits and a notation corresponding to the symbol does not exist in the signaling actually transmitted. A signaling size of the ultimate interference overload indicator signaling is 2 + 10 = 12 bits.

The base station having received the interference overload indicator first takes first 2 bits, and obtains the interference overload level in the system bandwidth according to Table 1. Thus obtained interference overload level is "L". This makes it possible to grasp a total interference overload condition. Then, from the last 10 bits, the base station obtains a broad interference overload condition of the 1st to 10th frequency spectrum resource blocks. As a result, it is found that the conditions of interference overloads respectively corresponding to the 4th, 5th, and 6th frequency spectrum resource blocks exceed the interference overload level in the system bandwidth. The base station can decode the interference overload indicator up to this stage. However, the base station can further decode the interference overload indicator to specific interference overload levels, according to Table 10. A resultant interference overload levels respectively corresponding to the 1st to 10th frequency spectrum resource blocks are "N, N, N, M, M, M, N, N, N, N".

[Table 10]

Interference Overload Decoding Table

| Bit For Interference Intensity Of Frequency Spectrum Resource Block / Interference Overload Level In System Bandwidth | 0 | 1 |
|---|---|---|
| Null Interference Overload | Null Interference Overload | Low Interference Overload |
| Low Interference Overload | Null Interference Overload | Medium Interference Overload |
| Medium Interference Overload | Low Interference Overload | High Interference Overload |
| High Interference Overload | Medium Interference Overload | High Interference Overload |

Here, Table 10 is merely one example of an interference overload decoding table. A column index indicates the interference overload level in the system bandwidth, while the row index indicates the bit for interference intensity of each frequency spectrum resource block. The values in Table 10 are interference overload levels after decoding. Note that the interference overload decoding table of Table 10 is merely one example. In actual applications, other interference overload decoding table may be used. That is, the present invention can be realized as long as values in the decoding table are identical (Step S505).

According to a result of the interference overload decoding, relatively small errors occur in the interference overload levels respectively corresponding to the 1st, 4th, and 5th frequency spectrum resource blocks. That is, "L" is erroneously decoded to "N"; "L" is erroneously decoded to "M"; and "H" is erroneously decoded to "M". These errors occur because the interference intensity bitmap cannot distinguish multi-level interference overloads.

An advantage of the signaling is that a signaling size is relatively small and an interference overload condition can be grasped totally. Meanwhile, a defect of the signaling is such that specific interference overload conditions in respective frequency spectrum resource blocks are not precise.

Example 13: Signaling Obtained By Cascading Interference Overload Code In System Bandwidth And Interference Intensity Bitmap Of Frequency Spectrum Resource Blocks

First, the base station calculates an interference overload level in the system bandwidth and obtains a corresponding interference overload code in the system bandwidth. Further, the base station sets an interference condition in the system bandwidth as a new threshold value $K_A$. Then, the base station compares interference conditions of the respective frequency spectrum resource blocks with the threshold value $K_A$, and indicates a result of the comparison in the form of a bitmap. That is, the base station forms a bit series having a length that is the same as the number of the frequency spectrum resource blocks. Each bit corresponds to one frequency spectrum resource block. In a case where a condition of a frequency spectrum resource block exceeds the threshold value $K_A$, a corresponding bit is set to 1. In a case where a condition of a frequency spectrum resource block does not exceed the threshold value $K_A$, a corresponding bit is set to 0. In this way, the interference intensity bitmap of the frequency spectrum resource blocks is generated. This bitmap and the interference overload code in the system bandwidth are cascaded and used as the interference overload indicator signaling. The interference condition in the system bandwidth is an interference overload level in the system bandwidth, an interference power density value in the system bandwidth, an interference-to-noise ratio in the system bandwidth, an average interference power density value in the system bandwidth, an average interference-to-noise ratio in the system bandwidth, or any other value that can indicate a condition of interference in the system bandwidth (Step S505 and S510). The present example can be regarded as an example in which an interference overload system-average code and the interference intensity bitmap are cascaded.

Example 13 employs the interference overload scene shown in Fig. 4. Fig. 17 is a diagram schematically showing Example 13. The interference-to-noise ratio in the system bandwidth is assumed as a measure of a condition of interference in the system bandwidth. First, the base station calculates the interference-to-noise ratio $K_A$ in the system bandwidth (96 frequency spectrum resource blocks). For example, in a case where the interference-to-noise ratio is in an area of the "low interference overload", the interference overload code in the system bandwidth is obtained according to Table 2 and this interference overload code is "01". Then, interference-to-noise ratios respectively corresponding to the frequency spectrum resource blocks are compared with $K_A$, and it is found that the interference-to-noise ratio of each of the 4$^{th}$, 5$^{th}$, and 6$^{th}$ frequency spectrum resource blocks is greater than $K_A$. Therefore, the generated interference intensity bitmap of the frequency spectrum resource blocks is "0001110000". By cascading the bitmap and the interference overload code in the system bandwidth, the interference overload indicator signaling of the 1$^{st}$ to 10$^{th}$ frequency spectrum resource blocks are obtained. Thus obtained interference overload indicator signaling is "01||10001110000". Here, the symbol "||" simply shows cascading of bits and a notation corresponding to the symbol does not exist in the signaling actually transmitted. A signaling size of the ultimate interference overload indicator signaling is 2 + 10 = 12 bits.

The base station having received the interference overload indicator first takes first 2 bits, and obtains the interference overload level in the system bandwidth according to Table 2. Thus obtained interference overload level is "L". This makes it possible to grasp a total interference overload condition. Then, from the last 10 bits, the base station obtains a broad interference overload condition of the 1$^{st}$ to 10$^{th}$ frequency spectrum resource blocks. As a result, it is found that the interference overload conditions respectively corresponding to the 4$^{th}$, 5$^{th}$, and 6$^{th}$ frequency spectrum resource blocks exceed the interference overload level in the system bandwidth. The base station can decode the interference overload indicator up to this stage. However, the base station can further decode the interference overload indicator to specific interference overload levels, according to Table 11. A resultant interference overload levels respectively corresponding to the 1$^{st}$ to 10$^{th}$ frequency spectrum resource blocks are "L, L, L, M, M, M, L, L, L, L".

[Table 11]

Interference Overload Decoding Table

| Bit Of Interference Intensity In Frequency Spectrum Resource Block / Interference Overload Level In System Bandwidth | 0 | 1 |
|---|---|---|
| Low Interference Overload | Low Interference Overload | Medium Interference Overload |
| Medium Interference Overload | Low Interference Overload | High Interference Overload |
| High Interference Overload | Medium Interference Overload | High Interference Overload |

Here, Table 11 is merely one example of an interference overload decoding table. A column index indicates the interference overload level in the system bandwidth, while a row index indicates the bit for interference intensity of each frequency spectrum resource block. The values in Table 11 are interference overload levels after decoding. Note that the interference overload decoding table of Table 11 is merely one example. In actual applications, other interference overload decoding table may be used. That is, the present invention can be realized as long as values in the decoding table are identical (Step S505).

According to a result of the interference overload decoding, relatively small errors occur in the interference overload levels respectively corresponding to the 1st and 5th frequency spectrum resource blocks. That is, "M" is erroneously decoded to "L"; and "H" is erroneously decoded to "M". These errors occur because the interference intensity bitmap cannot distinguish multi-level interference overloads.

An advantage of the signaling is that a signaling size is relatively small and an interference overload condition can be grasped totally. Meanwhile, a defect of the signaling is such that specific interference overload conditions in respective frequency spectrum resource blocks are not precise.

Example 14: Signaling Obtained By Cascading Interference Overload Code In System Bandwidth, Interference Intensity Bitmap Of Frequency Spectrum Resource Blocks, And Interference Overload Code Series Of Frequency Spectrum Resource Blocks Having Relatively High Interference

First, the base station calculates an interference overload level in the system bandwidth and obtains a corresponding interference overload code in the system bandwidth. Further, the base station sets an interference condition in the system bandwidth as a new threshold value $K_A$. Then, the base station compares interference conditions of the respective frequency spectrum resource blocks with the threshold value $K_A$, and indicates a result of the comparison in the form of a bitmap. That is, the base station forms a bit series having a length that is the same as the number of the frequency spectrum resource blocks. Each bit corresponds to one frequency spectrum resource block. In a case where a condition of a frequency spectrum resource block exceeds the threshold value $K_A$, a corresponding bit is set to 1. In a case where a condition of a frequency spectrum resource block does not exceed the threshold value $K_A$, a corresponding bit is set to 0. In this way, the bitmap of the interference intensity of the frequency spectrum resource blocks is generated. The base station obtains interference overload codes for respective frequency spectrum resource blocks that receive relatively high interference (frequency spectrum resource blocks corresponding to 1 in the bitmap) and sequentially forms an interference overload code series. The base station cascades the interference overload code series with the interference intensity bitmap of the frequency spectrum resource blocks, and further cascades the interference overload code in the system bandwidth. A resultant signaling obtained as a result of the cascading is used as the interference overload indicator signaling (Steps S505 and S510). The present example is regarded as an example in which an interference overload system-average code, the interference intensity bitmap, and the interference overload codes are cascaded. The present example describes an example of interference overload codes. In the present example, coding is carried out with respect to all the interference overload levels having relatively high interference.

Example 14 employs the interference overload scene shown in Fig. 3. Fig. 18 is a diagram schematically showing Example 14. The interference-to-noise ratio in the system bandwidth is assumed as a measure of a condition of interference in the system bandwidth. First, the base station calculates the interference-to-noise ratio $K_A$ in the system bandwidth (96 frequency spectrum resource blocks). For example, in a case where the interference-to-noise ratio is in an area of the "low interference overload", the interference overload code in the system bandwidth is obtained according to Table 1 and this interference overload code is "01". Then, interference-to-noise ratios respectively corresponding to the frequency spectrum resource blocks are compared with $K_A$, and it is found that the interference-to-noise ratio of each of the $4^{th}$, $5^{th}$, and $6^{th}$ frequency spectrum resource blocks is greater than $K_A$. Thus generated interference intensity bitmap of the frequency spectrum resource blocks is "0001110000".

For the frequency spectrum resource blocks (the $4^{th}$, $5^{th}$, and $6^{th}$ frequency spectrum resource blocks) corresponding to 1 in the bitmap, interference overload codes respectively corresponding to the frequency spectrum resource blocks are obtained according to Table 1, and an interference overload code series "011110" is sequentially formed (Step S505). By cascading the interference overload code series with the interference intensity bitmap of the frequency spectrum resource blocks and further cascading the interference overload code in the system bandwidth, the interference overload indicator signaling "01||0001110000||011110" of the $1^{st}$ to $10^{th}$ frequency spectrum resource blocks can be obtained. Here, the symbol "||" simply shows cascading of bits and a notation corresponding to the symbol does not exist in the signaling actually transmitted. A signaling size of the ultimate interference overload indicator signaling is 2 + 10 + 6 = 18 bits (Step S510).

The base station having received the interference overload indicator first takes first 2 bits, and obtains the interference overload level in the system bandwidth according to Table 1. Thus obtained interference overload level is "L". This makes it possible to grasp a total interference overload condition. Then, from the next 10 bits in the middle, the base station obtains a broad interference overload condition of the $1^{st}$ to $10^{th}$ frequency spectrum resource blocks. As a result, it is found that the respective interference overload conditions of the $4^{th}$, $5^{th}$, and $6^{th}$ frequency spectrum resource blocks exceed the interference overload level in the system bandwidth.

At the end, the base station judges based on the last 6 bits according to Table 1 that: the interference overload level of the $4^{th}$ frequency spectrum resource block is "L"; the interference overload level of the $5^{th}$ frequency spectrum resource block is "H"; the interference overload level of the $6^{th}$ frequency spectrum resource block is "M"; and the interference overload level of the other frequency spectrum resource blocks is "N". Accordingly, as a result of decoding according to Table 10, the ultimate interference overload levels respectively corresponding to the $1^{st}$ to $10^{th}$ frequency spectrum resource blocks are "N, N, N, L, H, M, N, N, N, N". Here, a relatively small error occurs in the interference overload level of the $1^{st}$ frequency spectrum resource block. That is, "L" is erroneously decoded to "N". This error occurs because the interference intensity bitmap cannot distinguish multi-level interference overloads.

An advantage of the signaling is that a signaling size is relatively small and an interference overload condition can be grasped totally. Meanwhile, a defect of the signaling is such that specific interference overload conditions in respective frequency spectrum resource blocks are not precise. Here, in a case where a one-level interference overload is used (in a case where there only exist the cases where "the interference overload level is present" and "the interference overload level is not present"), it is possible to form the interference overload indicator signaling in the present invention only by cascading the interference intensity bitmap of the frequency spectrum resource blocks and the interference overload code in the system bandwidth. An amount of information in the signaling is sufficient for indicating an interference overload condition and transmission of the interference overload code series is not necessary.

Example 15: Signaling Obtained By Cascading Interference Overload Code In System Bandwidth, Interference Intensity Bitmap Of Frequency Spectrum Resource Blocks, And Interference Overload Code Series Of Frequency Spectrum Resource Blocks Having Relatively High Interference

First, the base station calculates an interference overload level in the system bandwidth and obtains a corresponding interference overload code in the system bandwidth. Further, the base station sets an interference condition in the system bandwidth as a new threshold value $K_A$. Then, the base station compares interference conditions of respective frequency spectrum resource blocks with the threshold value $K_A$, and indicates a result of the comparison in the form of a bitmap. That is, the base station forms a bit series having a length that is the same as the number of the frequency spectrum resource blocks. Each bit corresponds to one frequency spectrum resource block. In a case where a condition of a frequency spectrum resource block exceeds the threshold value $K_A$, a corresponding bit is set to 1. In a case where a condition of a frequency spectrum resource block does not exceed the threshold value $K_A$, a corresponding bit is set to 0. In this way, the interference intensity bitmap of the frequency spectrum resource blocks is generated. The base station obtains interference overload codes for respective frequency spectrum resource blocks that receive relatively high interference (frequency spectrum resource blocks corresponding to 1 in the bitmap), and sequentially forms an interference overload code series. The base station cascades the interference overload code series with the interference intensity bitmap of the frequency spectrum resource blocks, and further cascades the interference overload code in the system bandwidth. A resultant signaling obtained as a result of the cascading is used as the interference overload indicator signaling (Steps S505 and S510). The present example is regarded as an example in which an interference overload system-average code, an interference intensity bitmap, and interference overload codes are cascaded. The present example describes an example of high interference overload codes. In the present example, high interference overload coding is carried out with respect to the interference overload levels that corresponds to relatively high interference and that excludes the lowest interference overload level.

Example 15 employs the interference overload scene shown in Fig. 4. Fig. 19 is a diagram schematically showing Example 15. The interference-to-noise ratio in the system bandwidth is assumed as a measure of a condition of interference in the system bandwidth. First, the base station calculates the interference-to-noise ratio $K_A$ in the system bandwidth (96 frequency spectrum resource blocks). For example, in a case where the interference-to-noise ratio is in an area of the "low interference overload", the interference overload code in the system bandwidth is obtained according to Table 2 and this interference overload code is "01". Then, interference-to-noise ratios respectively corresponding to the frequency spectrum resource blocks are compared with $K_A$, and it is found that the interference-to-noise ratio of each of the $4^{th}$, $5^{th}$, and $6^{th}$ frequency spectrum resource blocks is greater than $K_A$. Thus generated interference intensity bitmap of the frequency spectrum resource blocks is "0001110000".

For the frequency spectrum resource blocks (the $4^{th}$, $5^{th}$, and $6^{th}$ frequency spectrum resource blocks) corresponding to 1 in the bitmap, interference overload codes respectively corresponding to the frequency spectrum resource blocks are obtained according to Table 1, and an interference overload code series "011110" is sequentially formed (Step S505). By cascading the interference overload code series with the interference intensity bitmap of the frequency spectrum resource blocks and further cascading the interference overload code in the system bandwidth, the interference overload indicator signaling "01||0001110000||011110" of the $1^{st}$ to $10^{th}$ frequency spectrum resource blocks can be obtained. Here, the symbol "||" simply shows cascading of bits and a notation corresponding to the symbol does not exist in the signaling actually transmitted. A signaling size of the ultimate interference overload indicator signaling is 2 + 10 + 6 = 18 bits (Step S510).

The base station having received the interference overload indicator first takes first 2 bits, and obtains the interference overload level in the system bandwidth according to Table 1. Thus obtained interference overload level is "L". This makes it possible to grasp a total interference overload condition. Then, from the next 10 bits in the middle, the base station obtains a broad interference overload condition of the $1^{st}$ to $10^{th}$ frequency spectrum resource blocks. As a result, it is found that the respective interference overload conditions of the $4^{th}$, $5^{th}$, and $6^{th}$ frequency spectrum resource blocks exceed the interference overload level in the system bandwidth. At the end, the base station judges based on the last 6 bits according to Table 1 that: the interference overload level of the $4^{th}$ frequency spectrum resource block is "M"; the interference overload level of the $5^{th}$ frequency spectrum resource block is "H"; the interference overload level of the $6^{th}$ frequency spectrum resource block is "M"; and the interference overload level of the other frequency spectrum resource blocks is "L". Accordingly, as a result of decoding according to Table 10, the ultimate interference overload levels respective corresponding to the $1^{st}$ to $10^{th}$ frequency spectrum resource blocks are "L, L, L, M, H, M, L, L, L, L". Here, a relatively small error occurs in the interference overload level of the $1^{st}$ frequency spectrum resource block. That is, "M" is erroneously decoded to "L". This error occurs because the interference intensity bitmap cannot distinguish multi-level interference overloads.

An advantage of the signaling is that a signaling size is relatively small and an interference overload condition can be grasped totally. Here, in a case where a one-level interference overload is used (in a case where there only exist the cases where "the interference overload level is present" and "the interference overload level is not present"), it is possible to form the interference overload indicator signaling in the present invention only by cascading the interference intensity bitmap of the frequency spectrum resource blocks and the interference overload code in the system bandwidth. An amount of information in the signaling is sufficient for indicating an interference overload condition and transmission of the interference overload code series is not necessary.

Example 16: Signaling Obtained By Cascading Interference Overload Code In System Bandwidth, Interference Intensity Bitmap Of Frequency Spectrum Resource Blocks, And Interference Overload Differential Code Series Of Frequency Spectrum Resource Blocks Having Relatively High Interference

First, the base station calculates an interference overload level in the system bandwidth and obtains a corresponding interference overload code in the system bandwidth. Further, the base station sets an interference condition in the system bandwidth as a new threshold value $K_A$. Then, the base station compares interference conditions of the respective frequency spectrum resource blocks with the threshold value $K_A$, and indicates a result of the comparison in the form of a bitmap. That is, the base station forms a bit series having a length that is the same as the number of the frequency spectrum resource blocks. Each bit corresponds to one frequency spectrum resource block. In a case where a condition of a frequency spectrum resource block exceeds the threshold value $K_A$, a corresponding bit is set to 1. In a case where a condition of a frequency spectrum resource block does not exceed the threshold value $K_A$, a corresponding bit is set to 0. In this way, the interference intensity bitmap of the frequency spectrum resource blocks is generated. The present example is regarded as an example in which an interference overload system-average code, the interference intensity bitmap, and the interference overload differential codes are cascaded. Here, the present example describes an example in which differential coding is carried out with respect to all the interference overload levels having relatively high interference.

The interference overload differential codes are used for respective frequency spectrum resource blocks (frequency spectrum resource blocks corresponding to 1 in the bitmap) that receive relatively high interference and the interference overload level in the system bandwidth is used as a differential reference value. Further, each of the interference overload levels respectively corresponding to the frequency spectrum resource blocks having a relatively high interference is made into a differential code of the differential reference value. An advantageous effect of differential coding is reduction of the number of bits in coding. That is, by use of a relatively small number of bits, a variation in interference overload level between each frequency spectrum resource block and the differential reference value can be coded. The differential coding is in general realized by using a differential coding table and a differential decoding table. An interference overload differential code series obtained by use of the differential coding table and the differential decoding table and the interference intensity bitmap of the frequency spectrum resource blocks are cascaded. Further, the interference overload code in the system bandwidth is also cascaded. A resultant signaling is used as the interference overload indicator signaling (Steps S505 and S510).

Example 16 employs the interference overload scene shown in Fig. 3. Fig. 20 is a diagram schematically illustrating Example 16. Table 12 is used as an interference overload differential coding table. A column index indicates an interference overload level in the system bandwidth, while a row index indicates an interference overload level that is to be decoded. The numerical values in Table 12 are differential code values each satisfying a condition of the column index and a condition of the row index. Further, the differential coding is carried out with respect to only the frequency spectrum resource blocks that receive relatively high interference. Therefore, the interference level that is to be decoded is higher than or equal to the interference overload level in the system bandwidth. Therefore, Table 12 includes a value "N/A".

[Table 12]

Interference Overload Differential Decoding Table

| Interference Overload Level To Be Decoded / Interference Overload Level In System Bandwidth | Null Interference Overload | Low Interference Overload | Medium Interference Overload | High Interference Overload |
|---|---|---|---|---|
| Null Interference Overload | 0 | 1 | 1 | 1 |
| Low Interference Overload | N/A | 0 | 1 | 1 |
| Medium Interference Overload | N/A | N/A | 0 | 1 |
| High Interference Overload | N/A | N/A | N/A | 0 |

Table 12 corresponds to the interference overload differential decoding table. Table 13 is one example of the interference overload differential decoding table. A column index indicates the interference overload level in the system bandwidth, while a row index indicates the interference overload differential code. Values in Table 13 indicate decoded interference overload levels.

[Table 13]

Interference Overload Differential Decoding Table

| Interference Overload Differential Code / Interference Overload Level In System Bandwidth | 0 | 1 |
|---|---|---|
| Null Interference Overload | Null Interference Overload | Low Interference Overload |
| Low Interference Overload | Low Interference Overload | Medium Interference Overload |
| Medium Interference Overload | Medium Interference Overload | High Interference Overload |
| High Interference Overload | High Interference Overload | High Interference Overload |

Here, the interference overload differential coding table of Table 12 and the interference overload differential decoding table of Table 13 are merely one example of a differential coding application. In actual applications, other interference overload differential coding table and interference overload differential decoding table can be used. That is, the present invention can be realized as long as values in the coding table are identical in the decoding table (Step S505).

First, the base station calculates the interference-to-noise ratio $K_A$ in the system bandwidth (96 frequency spectrum resource blocks). For example, in a case where the interference-to-noise ratio is in an area of the "low interference overload", the interference overload code in the system bandwidth is obtained according to Table 1 and this interference overload code is "01". Then, interference-to-noise ratios respectively corresponding to the frequency spectrum resource blocks are compared with $K_A$, and an interference intensity bitmap of the frequency spectrum resource blocks is generated based on a result of the comparison. The resultant bitmap is "0001110000". For the frequency spectrum resource blocks (the 4th, 5th, and 6th frequency spectrum resource blocks) corresponding to 1 in the bitmap, it is found that the interference overload level in the system bandwidth is "L". Further, an interference overload differential code series "011" is obtained from Table 12 (Step S505).

By cascading the interference overload differential code series and the interference intensity bitmap of the frequency spectrum resource blocks and further cascading the interference overload code in the system bandwidth, the interference overload indicator signaling "01||0001110000||011" of the 1st to 10th frequency spectrum resource blocks is obtained. Here, the symbol "||" simply shows cascading of bits and a notation corresponding to the symbol does not exist in the signaling actually transmitted. A signaling size of the signaling is 2 + 10 + 3 = 15 bits (Step S510).

The base station having received the interference overload indicator first takes first 2 bits, and obtains the interference overload level in the system bandwidth according to Table 1. Thus obtained interference overload level is "L". This makes it possible to grasp a total interference overload condition. Then, from the next 10 bits in the middle, the base station obtains a broad interference overload condition of the 1st to 10th frequency spectrum resource blocks. As a result, it is found that the respective interference overload conditions of the 4th, 5th, and 6th frequency spectrum resource blocks exceed the interference overload level in the system bandwidth. At the end, the base station judges based on the last 3 bits according to Table 13 that: the interference overload level of the 4th frequency spectrum resource block is "L"; the interference overload level of the 5th frequency spectrum resource block is "M"; the interference overload level of the 6th frequency spectrum resource block is "M"; and the interference overload level of the other frequency spectrum resource blocks is "N". Accordingly, as a result of decoding according to Table 10, the ultimate interference overload levels respectively corresponding to the 1st to 10th frequency spectrum resource blocks are "N, N, N, L, M, M, N, N, N, N". Here, relatively small errors occur in the interference overload levels respectively corresponding to the 1st and 5th frequency spectrum resource blocks. That is, "L" is erroneously decoded to "N", and "H" is erroneously decoded to "M". These errors occur because the interference intensity bitmap cannot distinguish multi-level interference overloads.

An advantage of the signaling is that a signaling size is relatively small and an interference overload condition can be grasped totally. Meanwhile, a defect of the signaling is such that errors occur in decoding of the interference overload. Here, in a case where a one-level interference overload is used (in a case where there only exist the cases where "the interference overload level is present" and "the interference overload level is not present"), it is possible to form the interference overload indicator signaling in the present invention only by cascading the interference intensity bitmap of the frequency spectrum resource blocks and the interference overload code in the system bandwidth. An amount of information in the signaling is sufficient for indicating an interference overload condition and transmission of the interference overload code series is not necessary.

Example 17: Signaling Obtained By Cascading Interference Overload Code In System Bandwidth, Interference Intensity Bitmap Of Frequency Spectrum Resource Blocks, And Interference Overload Differential Code Series Of Frequency Spectrum Resource Blocks Having Relatively High Interference

First, the base station calculates an interference overload level in the system bandwidth and obtains a corresponding interference overload code in the system bandwidth. Further, the base station sets an interference condition in the system bandwidth as a new threshold value $K_A$. Then, the base station compares interference conditions of the respective frequency spectrum resource blocks with the threshold value $K_A$ and indicates a result of the comparison in the form of a bitmap. That is, the base station forms a bit series having a length that is the same as the number of the frequency spectrum resource blocks. Each bit corresponds to one frequency spectrum resource block. In a case where a condition of a frequency spectrum resource block exceeds the threshold value $K_A$, a corresponding bit is set to 1. In a case where a condition of a frequency spectrum resource block does not exceed the threshold value $K_A$, a corresponding bit is set to 0. In this way, the interference intensity bitmap of the frequency spectrum resource blocks is generated. The present example is regarded as an example in which an interference overload system-average code, the interference intensity bitmap, and interference overload differential codes are cascaded. Here, the present example describes an example in which differential coding is carried out with respect to the interference overload levels that corresponds to relatively high interference and that excludes the lowest interference overload level.

The interference overload differential codes are used for respective frequency spectrum resource blocks (frequency spectrum resource blocks corresponding to 1 in the bitmap) that receive relatively high interference and the interference overload level in the system bandwidth is used as a differential reference value. Further, each of the interference overload levels respectively corresponding to the frequency spectrum resource blocks having a relatively high interference is made into a differential code of the differential reference value. An advantageous effect of differential coding is reduction of the number of bits in coding. That is, by use of a relatively small number of bits, a variation in interference overload level between each frequency spectrum resource block and the differential reference value can be coded. The differential coding is in general realized by using a differential coding table and a differential decoding table. An interference overload differential code series obtained by use of the differential coding table and the differential decoding table and the interference intensity bitmap of the frequency spectrum resource blocks are cascaded. Further, the interference overload code in the system bandwidth is also cascaded. A resultant signaling is used as the interference overload indicator signaling (Steps S505 and S510).

Example 17 employs the interference overload scene shown in Fig. 4. Fig. 21 is a diagram schematically illustrating Example 17. Table 14 is used as an interference overload differential coding table. A column index indicates an interference overload level in the system bandwidth, while a row index indicates an interference overload level that is to be decoded. The numerical values in Table 14 are differential code values each satisfying a condition of the column index and a condition of the row index. Further, the differential coding is carried out with respect to only the frequency spectrum resource blocks that receive relatively high interference. Therefore, the interference level that is to be decoded is higher than or equal to the interference overload level in the system bandwidth. Therefore, Table 14 includes a value "N/A".

[Table 14]

Interference Overload Differential Decoding Table

| Interference Overload Level To Be Decoded / Interference Overload Level In System Bandwidth | Low Interference Overload | Medium Interference Overload | High Interference Overload |
|---|---|---|---|
| Low Interference Overload | 0 | 1 | 1 |
| Medium Interference Overload | N/A | 0 | 1 |
| High Interference Overload | N/A | N/A | 0 |

Table 14 corresponds to the interference overload differential decoding table. Table 15 is one example of the interference overload differential decoding table. A column index indicates the interference overload level in the system bandwidth, while a row index indicates the interference overload differential code. Values in Table 15 indicate decoded interference overload levels.

[Table 15]

Interference Overload Differential Decoding Table

| Interference Overload Differential Code / Interference Overload Level In System Bandwidth | 0 | 1 |
|---|---|---|
| Low Interference Overload | Medium Interference Overload | High Interference Overload |
| Medium Interference Overload | Medium Interference Overload | High Interference Overload |
| High Interference Overload | High Interference Overload | N/A |

Here, the interference overload differential coding table of Table 14 and the interference overload differential decoding table of Table 15 are merely one example of a differential coding application. In actual applications, other interference overload differential coding table and interference overload differential decoding table can be used. That is, the present invention can be realized as long as values in the coding table are identical in the decoding table (Step S505).

First, the base station calculates the interference-to-noise ratio $K_A$ in the system bandwidth (96 frequency spectrum resource blocks). For example, in a case where the interference-to-noise ratio is in an area of the "low interference overload", the interference overload code in the system bandwidth is obtained according to Table 2 and this interference overload code is "01". Then, interference-to-noise ratios respectively corresponding to the frequency spectrum resource blocks are compared with $K_A$, and an interference intensity bitmap of the frequency spectrum resource blocks is generated based on a result of the comparison. The resultant bitmap is "0001110000".

For the frequency spectrum resource blocks (the $4^{th}$, $5^{th}$, and $6^{th}$ frequency spectrum resource blocks) corresponding to 1 in the bitmap, it is found that the interference overload level in the system bandwidth is "L", and an interference overload differential code series "010" is obtained from Table 12 (Step S505). By cascading the interference overload differential code series and the interference intensity bitmap of the frequency spectrum resource blocks and further cascading the interference overload code in the system bandwidth, the interference overload indicator signaling "01||0001110000||010" of the $1^{st}$ to $10^{th}$ frequency spectrum resource blocks is obtained. Here, the symbol "||" simply shows cascading of bits and a notation corresponding to the symbol does not exist in the signaling actually transmitted.

A signaling size of the signaling is 2 + 10 + 3 = 15 bits (Step S510).

The base station having received the interference overload indicator first takes first 2 bits, and obtains the interference overload level in the system bandwidth according to Table 2. Thus obtained interference overload level is "L". This makes it possible to grasp a total interference overload condition. Then, from the next 10 bits in the middle, the base station obtains a broad interference overload condition of the $1^{st}$ to $10^{th}$ frequency spectrum resource blocks. As a result, it is found that the respective interference overload conditions of the $4^{th}$, $5^{th}$, and $6^{th}$ frequency spectrum resource blocks exceed the interference overload level in the system bandwidth. At the end, the base station judges based on the last 3 bits according to Table 15 that: the interference overload level of the $4^{th}$ frequency spectrum resource block is "M"; the interference overload level of the $5^{th}$ frequency spectrum resource block is "H"; the interference overload level of the $6^{th}$ frequency spectrum resource block is "M"; and the interference overload level of the other frequency spectrum resource blocks is "N". Accordingly, as a result of decoding according to Table 11, the ultimate interference overload levels respectively corresponding to the $1^{st}$ to $10^{th}$ frequency spectrum resource blocks are "L, L, L, M, H, M, L, L, L, L". Here, a relatively small error occurs in the interference overload levels of the $1^{st}$ frequency spectrum resource block. That is, "M" is erroneously decoded to "L". This error occurs because the interference intensity bitmap cannot distinguish multi-level interference overloads.

An advantage of the signaling is that a signaling size is relatively small and an interference overload condition can be grasped totally. Meanwhile, a defect of the signaling is such that an error occurs in decoding of the interference overload. Here, in a case where a one-level interference overload is used (in a case where there only exist the cases where "the interference overload level is present" and "the interference overload level is not present"), it is possible to form the interference overload indicator signaling in the present invention only by cascading the interference intensity bitmap of the frequency spectrum resource blocks and the interference overload code in the system bandwidth. An amount of information in the signaling is sufficient for indicating an interference overload condition and transmission of the interference overload code series is not necessary.

Example 18: Signaling By Use Of Interference Overload State Code Series

In Example 18, all possible interference overload level series are listed and a set of these series is referred to as a collective interference overload state. With respect to every kind of the interference overload level series, mapping coding is carried out in a binary series. This method is generally realized by use of a state coding table and a state decoding table. An interference overload state code obtained by use of the state coding table and the state decoding table is used as the interference overload indicator signaling (Steps S505 and S510). The present example can be regarded as an example of interference overload state mapping coding. The present example employs one-to-one mapping.

Example 18 employs the interference overload scene shown in Fig. 4. Fig. 22 is a diagram schematically illustrating Example 18. First, Table 16 is used as the interference overload state coding table. The first column shows interference overload level series and each of the interference overload level series uniquely corresponds to one interference overload state code (in the second column). Regarding the 96 frequency spectrum resource blocks, each frequency spectrum resource block can take three kinds of interference overload levels. Accordingly, there are $3^{96}$ collective interference overload states in total. When the collective interference overload state is coded in a binary series, at least 153 bits ($2^{153} \geq 3^{96} > 2^{152}$) are required for ensuring a one-to-one mapping relation between the interference overload level series and the interference overload state codes.

[Table 16]

Interference Overload State Coding Table

| Interference Overload Level Series ($3^{96}$ In Total) | Interference Overload State Code (153 Bits) |
|---|---|
| : : : : <br> : : : : | : <br> : |
| MLLMHMLLLL ······ | 11010 ······ 010 |
| HLLMHMLLLL ······ | 11010 ······ 011 |
| : : : : <br> : : : : | : <br> : |

Table 16 corresponds to the interference overload state decoding table. As shown in Table 17, the first column of Table 17 shows interference overload state codes. Each of the interference overload level series uniquely corresponds to one interference overload state code (in the second column). In a case where the number M of bits of the interference state code used is less than 153, Table 16 has $3^{96}$ rows and Table 17 has only $2^M$ rows. Accordingly, the number of the interference overload level series that can be coded is smaller than the total number of the interference overload level series. Therefore, an error may occur in interference overload decoding. However, the smaller the M becomes, the smaller a size of the interference overload indicator signaling becomes. In the present example, M is set to 153 and a one-to-one mapping relation between the interference overload level series and the interference overload state codes is ensured.

[Table 17]

Interference Overload State Decoding Table

| Interference Overload State Code (153 Bits) | Interference Overload Level Series ($3^{96}$ In Total) |
|---|---|
| :<br>: | : : : :<br>: : : : |
| 11010··· ···010 | MLLMHMLLLL ··· ··· |
| 11010··· ···011 | HLLMHMLLLL ··· ··· |
| :<br>: | : : : :<br>: : : : |

Here, the interference overload state coding table of Table 16 and the interference overload state decoding table of Table 17 are merely one example of an application of the interference overload state decoding. In actual applications, other interference overload state coding table and interference overload state decoding table can be used. That is, the present invention can be realized as long as values in the coding table are identical in the decoding table (Step S505).

Regarding the $1^{st}$ to $96^{th}$ frequency spectrum resource blocks, the obtained interference overload level series is "M, L, L, M, H, M, L, L, L, L ··· ···". From Table 16, the interference overload state code "11010··· ···010" is obtained. This interference overload state code is used as the interference overload indicator signaling of the $1^{st}$ to $96^{th}$ frequency spectrum resource blocks. A signaling size of this interference overload indicator signaling is 153 bits.

The base station having received the interference overload indicator finds based on the received interference overload indicator signaling (153 bits) according to Table 17 that the interference overload levels respectively corresponding to the $1^{st}$ to $96^{th}$ frequency spectrum resource blocks are "M, L, L, M, H, M, L, L, L, L ··· ···". This result perfectly matches the interference overload levels that another base station has transmitted and the result is correct.

An advantage of the above signaling is that a signaling structure is simple and a load is relatively small. A defect of the above signaling is that a storage amount of the state coding table and the decoding table is relatively large.

Example 19: Signaling By Use Of Interference Overload State Code Series Based On Subbands

First, all frequency spectrum resource blocks are divided into a plurality of subbands. In the present invention, a method of dividing the frequency spectrum resource blocks into the subbands is not specifically limited. That is, the frequency spectrum resource blocks may be divided into subbands having an identical size or subbands having different sizes, respectively. Here, an interference overload level series of each subband is referred to as an interference overload level sub-series. Further, all possible interference overload level series of each subband are listed and a collective interference overload level series is referred to as a collective interference overload state of each of the subbands. With respect to every kind of the interference overload level series, mapping coding is carried out in a binary series. This method is generally realized by use of a state coding table and a state decoding table. Interference overload state codes of respective subbands obtained according to the state coding table and the state decoding table are cascaded and used as the interference overload indicator signaling (Steps S505 and 5510). The present example can be regarded as an example of interference overload state mapping coding based on the subbands. The present example employs one-to-one mapping.

Example 19 employs the interference overload scene shown in Fig. 4. Fig. 23 is a diagram schematically illustrating Example 19. The divisional subbands have an equal size and a set of adjacent two frequency spectrum resource blocks is assumed as one strip. First, Table 18 is used as a table of the interference overload state codes. The first column of Table 18 shows interference overload level series and each of the interference overload level series uniquely corresponds to one interference overload state code (in the second column). In the set of two adjacent frequency spectrum resource blocks, each of the frequency spectrum resource blocks can take three kinds of interference overload levels. Accordingly, there are $3^2 = 9$ states commonly for each collective interference overload state. When the collective interference overload state is coded in a binary series, at least 4 bits ($2^4 \geq 3^2 > 2^3$) are required for ensuring a one-to-one mapping relation between the interference overload level series and the interference overload state codes.

[Table 18]

| Interference Overload State Coding Table | | |
|---|---|---|
| Interference Overload Level Series ($3^2$ In Total) | | Interference Overload State Code (4 Bits) |
| L | L | 0000 |
| L | M | 0001 |
| L | H | 0010 |
| M | L | 0011 |
| M | M | 0100 |
| M | H | 0101 |
| H | L | 0110 |
| H | M | 0111 |
| H | H | 1000 |

Table 19 corresponds to the interference overload state decoding table. As shown in Table 19, the first column shows interference overload state codes. Each of the interference overload state codes uniquely corresponds to one interference overload level series (in the second column). In a case where the number M of bits of the interference state code used is less than 4, Table 18 has 9 rows whereas Table 19 has $2^M$ rows. Accordingly, the number of the interference overload level series that can be decoded is smaller than the total number of the interference overload level series. Therefore, an error occurs in the interference overload decoding. However, the smaller the M becomes, the smaller a size of the interference overload indicator signaling becomes. In the present example, M is set to 4, and the interference overload level series and the interference overload state code has a one-to-one mapping relation.

[Table 19]

| Interference Overload State Decoding Table | | |
|---|---|---|
| Interference Overload State Code (4 Bits) | Interference Overload Level Series ($3^2$ In Total) | |
| 0000 | L | L |
| 0001 | L | M |
| 0010 | L | H |
| 0011 | M | L |
| 0100 | M | M |
| 0101 | M | H |
| 0110 | H | L |
| 0111 | H | M |
| 1000 | H | H |

Here, the interference overload state coding table of Table 18 and the interference overload state decoding table of Table 19 are merely one example of an application of the interference overload state decoding. In actual applications, other interference overload state coding table and interference overload decoding table can be used. That is, the present invention can be realized as long as values in the coding table are identical in the decoding table (Step S505).

Regarding the 1st to 96th frequency spectrum resource blocks, the obtained interference overload level series is "M, L, L, M, H, M, L, L, L, L ··· ···". The 96 frequency spectrum resource blocks can be divided into 48 strips in total (each subband includes two frequency spectrum resource blocks). According to Table 18, the interference overload state code for each of the subbands is obtained. For example, respective interference overload codes of the subband 1 through the subband 5 are "0011", "0001", "0111", "0000", and "0000" in the order of the subbands 1 to 5 (Step S505). The interference overload state codes of the 48 subbands are cascaded and used as the interference overload indicator signaling of the 1st to 96th frequency spectrum resource blocks. A signaling size of this interference overload indicator signaling is 4 x 48 = 192 bits (Step S510).

Based on the received interference overload indicator signaling (192 bits), the base station having received the interference overload indicator takes a set of 4 bits as an interference overload state code of a subband and finds according to Table 19 that the interference overload levels respectively corresponding to the 1st to 96th frequency spectrum resource blocks are "M, L, L, M, H, M, L, L, L, L ··· ···". This result perfectly matches the interference overload levels that another base station has transmitted and the result is correct.

An advantage of the above signaling is that a signaling structure is simple and a storage amount of the state coding table and the state decoding table is relatively small. A defect of the above signaling is that, in a case where there are relatively many extra codes in the subbands, a signaling size becomes relatively large.

Example 20: Signaling By Use Of Interference Overload State Code Series Based On Subbands

First, all frequency spectrum resource blocks are divided into a plurality of subbands. In the present invention, a method of dividing the frequency spectrum resource blocks into the subbands is not specifically limited. That is, the frequency spectrum resource blocks may be divided into subbands having an identical size or subbands having different sizes, respectively. Here, an interference overload level series of each subband is referred to as an interference overload level sub-series. Further, all possible interference overload level series of each subband are listed and a collective interference overload level series is referred to as a collective interference overload state of each of the subbands. With respect to every kind of the interference overload level series, mapping coding is carried out in a binary series. This method is generally realized by use of a state coding table and a state decoding table. Interference overload state codes of respective subbands obtained according to the state coding table and the state decoding table are cascaded and used as the interference overload indicator signaling (Steps S505 and S510). The present example can be regarded as an example of interference overload state mapping coding based on the subbands. The present example employs unique mapping.

Example 20 employs the interference overload scene shown in Fig. 4. Fig. 24 is a diagram schematically illustrating Example 20. The divisional subbands have an equal size and a set of adjacent two frequency spectrum resource blocks is assumed as one strip. First, Table 20 is used as a table of the interference overload state codes. The first column of Table 20 shows interference overload level series and each of the interference overload level series uniquely corresponds to one interference overload state code (in the second column). In the set of two adjacent frequency spectrum resource blocks, each of the frequency spectrum resource blocks can take three kinds of interference overload levels. Accordingly, there are $3^2 = 9$ states commonly for each collective interference overload state. When the collective interference overload state is coded in a binary series, at least 4 bits ($2^4 \geq 3^2 > 2^3$) are required for ensuring a one-to-one mapping relation between the interference overload level series and the interference overload state codes.

[Table 20]

| Interference Overload State Coding Table | | |
|---|---|---|
| Interference Overload Level Series ($3^2$ In Total) | | Interference Overload State Code (3 Bits) |
| L | L | 000 |
| L | M | 000 |
| L | H | 001 |
| M | L | 010 |
| M | M | 011 |
| M | H | 100 |
| H | L | 101 |
| H | M | 110 |

(continued)

| Interference Overload State Coding Table | | |
|---|---|---|
| Interference Overload Level Series ($3^2$ In Total) | | Interference Overload State Code (3 Bits) |
| H | H | 111 |

Table 20 corresponds to the interference overload state decoding table. As shown in Table 21, the first column of Table 21 shows interference overload state codes. Each of the interference overload state codes uniquely corresponds to one interference overload level series (in the second column). In a case where the number M of bits of the interference state code used is less than 4, Table 20 has 9 rows whereas Table 21 has $2^M$ rows. Accordingly, the number of the interference overload level series that can be decoded is smaller than the total number of the interference overload level series. Therefore, an error occurs in the interference overload decoding. However, the smaller the M becomes, the smaller a size of the interference overload indicator signaling becomes. In the present example, M is set to 3. Accordingly, Table 20 has 9 rows whereas Table 21 has only 8 rows. As a result, an interference overload state "LL" is erroneously coded to "LM". However, because M = 3, the interference overload indicator signaling size can be reduced by 25 % as compared to the case of Example 19 where M = 4.

[Table 21]

| Interference Overload State Decoding Table | | |
|---|---|---|
| Interference Overload State Code (3 Bits) | Interference Overload Level Series ($2^3$ In Total) | |
| 000 | L | M |
| 001 | L | H |
| 010 | M | L |
| 011 | M | M |
| 100 | M | H |
| 101 | H | L |
| 110 | H | M |
| 111 | H | H |

Here, the interference overload state coding table of Table 20 and the interference overload state decoding table of Table 21 are merely one example of an application of the interference overload state decoding. In actual applications, other interference overload state coding table and interference overload decoding table can be used. That is, the present invention can be realized as long as values in the coding table are identical in the decoding table (Step S505).

Regarding the 1st to 96th frequency spectrum resource blocks, the obtained interference overload level series is "M, L, L, M, H, M, L, L, L, L ··· ···". Further, the 96 frequency spectrum resource blocks can be divided into 48 strips in total (each subband includes two frequency spectrum resource blocks). According to Table 20, the interference overload state code for each of the subbands is obtained. For example, respective interference overload codes of the subband 1 through the subband 5 are "010", "000", "110", "000", and "000" in the order of the subbands 1 to 5 (Step S505). The interference overload state codes of the 48 subbands are cascaded and used as the interference overload indicator signaling of the 1st to 96th frequency spectrum resource blocks. A signaling size of this interference overload indicator signaling is 3 x 48 = 144 bits (Step S510).

Based on the received interference overload indicator signaling (144 bits), the base station having received the interference overload indicator takes a set of 3 bits as an interference overload state code of a subband and finds that respective interference overload levels respectively corresponding to the 1st to 96th frequency spectrum resource blocks are "M, L, L, M, H, M, L, M, L, M ··· ···" from Table 19. Here, relatively small errors occur in the interference overload levels respectively corresponding to the 8th and 10th frequency spectrum resource blocks. That is, the respective interference overload levels "L" are erroneously decoded to "M", respectively. These errors occur because the number of the interference overload state series that can be coded according to the interference state decoding table is less than the number of the interference overload state series in the interference overload state coding table.

An advantage of the above signaling is that a signaling structure is simple and a storage amount of the state coding table and the state decoding table is relatively small. A defect of the above signaling is that, in a case where there are relatively many extra codes in the subbands, a signaling size becomes relatively large.

Examples 1 through 20 and Figs. 5 through 24 corresponding thereto are examples for implementation of the interference overload signaling of the present invention. The interference overload signaling of the present invention by no means is limited to systems in Examples 1 through 20 and Figs. 5 through 24 corresponding to Examples 1 through 20.
The interference overload indicator that is generated as described above is transmitted by the base station.
In the present invention, the base station may transmit the interference overload indicator to an adjacent base station(s) by a method of omnidirectional transmission (transmission to all adjacent base stations) or transmission in a specific direction (transmission to an base station adjacent in the specific direction).
Here, the transmission method of the interference overload indicator is merely an example for explaining an application of the present invention. The transmission step may be carried out separately from other steps in the present invention. Further, the present invention is practicable even if the method of carrying out the transmission is changed.
The above description explains the present invention based on preferable examples. A person skilled in the art may make various other modification, replacement, and addition as long as an embodiment obtained as such is in line with the purpose of the present invention and in the scope of the present invention. Therefore, the scope of the present invention is not limited by the above specific examples but should be limited by claims attached.

Industrial Applicability

The present invention is suitably applied to a device relevant to generation of an interference overload indicator in the field of communication technology, in particular, to an interference overload indicator generating device and a control device of the interference-overload-indicator generating device each of which is used in a frequency division multiplexing cellular communication system.

## Claims

**1.** An interference-overload-indicator generating device used in an uplink frequency division multiplexing cellular communication system, the interference-overload-indicator generating device comprising:

a determination unit for determining, according to a preset condition, interference overload levels respectively corresponding to frequency spectrum resource blocks used in uplink data transmission;
a coding unit for generating interference overload codes or interference overload state codes by carrying out coding or state coding of the interference overload levels respectively corresponding to the frequency spectrum resource blocks, the interference overload levels being determined by the determination unit; and
an interference-overload-indicator generation unit for generating an interference overload indicator, in accordance with the interference overload codes or the interference overload state codes generated by the coding unit, the interference overload indicator reflecting the interference overload levels respectively corresponding to the frequency spectrum resource blocks.

**2.** The interference-overload-indicator generating device as set forth in claim 1, wherein:

each of the interference overload levels has a plurality of levels; and
the determination unit determines, according to the preset condition, each of the interference overload levels to one of the plurality of levels.

**3.** The interference-overload-indicator generating device as set forth in claim 2, wherein:

the preset condition is set based on at least one of a threshold value of an interference-to-noise ratio in a frequency spectrum resource block, a threshold value of an interference value, a threshold value of a satisfaction level on service quality, a loaded state, a condition where interference is received, and a number of users on a boundary of cells.

**4.** The interference-overload-indicator generating device as set forth in claim 2, wherein:

the interference-overload-indicator generating device sets the preset condition by communication with another interference-overload-indicator generating device in the uplink frequency division multiplexing cellular communication system, and makes the preset condition available in the uplink frequency division multiplexing cellular communication system.

5. The interference-overload-indicator generating device as set forth in claim 2, wherein:

the coding unit generates the interference overload codes respectively corresponding to the frequency spectrum resource blocks by carrying out coding of the interference overload levels respectively corresponding to the frequency spectrum resource blocks, the interference overload levels being determined by the determination unit; and
each of the interference overload codes generated corresponds, in a one-to-one relation, to one of the plurality of interference overload levels.

6. The interference-overload-indicator generating device as set forth in claim 2, wherein:

the coding unit generates high interference overload codes by carrying out coding of interference overload levels respectively corresponding to frequency spectrum resource blocks each having an interference overload level except a lowest interference overload level; and
each of the high interference overload codes generated corresponds, in a one-to-one relation, to one of the plurality of interference overload levels except the lowest interference overload level.

7. The interference-overload-indicator generating device as set forth in claim 2, further comprising:

a system average interference level operation unit for obtaining an interference overload level in a system bandwidth of the uplink frequency division multiplexing cellular communication system, wherein:

the coding unit generates an average interference overload code by carrying out coding of the interference overload level obtained by the system average interference level operation unit;
the coding unit generates interference overload system-average codes respectively corresponding to frequency spectrum resource blocks each having an interference overload level higher than the interference overload level in the system bandwidth, by carrying out coding of the interference overload levels respectively corresponding to the frequency spectrum resource blocks each having the interference overload level higher than the interference overload level in the system bandwidth; and
each of the interference overload system-average codes generated corresponds, in a one-to-one relation, to one of the plurality of interference overload levels.

8. The interference-overload-indicator generating device as set forth in claim 5, further comprising:

a storage unit for storing a differential coding/decoding table, wherein:

the coding unit selects one frequency spectrum resource block as a reference frequency spectrum resource block; and
the coding unit generates interference overload differential codes by sequentially carrying out differential coding of an interference overload code corresponding to a frequency spectrum resource block being adjacent to the reference frequency spectrum resource block, the differential coding being carried out according to the differential coding/decoding table stored in the storage unit.

9. The interference-overload-indicator generating device as set forth in claim 6, further comprising:

a storage unit for storing a differential coding/decoding table, wherein:

the coding unit selects one frequency spectrum resource block as a reference frequency spectrum resource block, the one frequency spectrum resource block having the interference overload level except the lowest interference overload level; and
the coding unit generates high-interference overload differential codes by sequentially carrying out differential coding of an interference overload code corresponding to a frequency spectrum resource block being adjacent to the reference frequency spectrum resource block, the frequency spectrum resource block having the interference overload level except the lowest interference overload level, the differential coding being carried out according to the differential coding/decoding table stored in the storage unit.

10. The interference-overload-indicator generating device as set forth in claim 5, further comprising:

a subband division unit for dividing all the frequency spectrum resource blocks into a plurality of subbands; and a storage unit storing a differential coding/decoding table, wherein:

the coding unit selects, as a reference frequency spectrum resource block, one frequency spectrum resource block in each of the plurality of subbands into which all the frequency spectrum resource blocks are divided by the subband division unit; and
the coding unit generates interference overload differential codes corresponding to the each subband, by sequentially carrying out differential coding of an interference overload code corresponding to a frequency spectrum resource block being adjacent to the reference frequency spectrum resource block, the differential coding being carried out according to the differential coding/decoding table stored in the storage device.

**11.** The interference-overload-indicator generating device as set forth in claim 5, further comprising:

a system average interference level operation unit for obtaining an interference overload level in a system bandwidth in the uplink frequency division multiplexing cellular communication system; and
a storage unit for storing a differential coding/decoding table, wherein:

the coding unit generates an average interference overload code by carrying out coding of the interference overload level obtained by the system average interference level operation unit; and
the coding unit generates interference overload system-average differential codes by sequentially carrying out differential coding of an interference overload code corresponding to a frequency spectrum resource block, the differential coding being carried out according to the average interference overload code and the differential coding/decoding table stored in the storage device.

**12.** The interference-overload-indicator generating device as set forth in claim 5, wherein:

the interference-overload-indicator generation unit generates the interference overload indicator by sequentially cascading, in the order of the frequency spectrum resource blocks, corresponding interference overload codes.

**13.** The interference-overload-indicator generating device as set forth in claim 5 or 6, further comprising:

an index number generation unit for generating frequency spectrum resource block index numbers each indicative of a frequency spectrum resource block having an interference overload level except a lowest interference overload level, wherein:

the interference-overload-indicator generation unit generates interference overload codes respectively corresponding to high interference overload resource blocks, each of the interference overload codes being generated by cascading the frequency spectrum resource block index number and a corresponding interference overload code or high interference overload code; and
the interference-overload-indicator generation unit generates the interference overload indicator by cascading the interference overload codes generated, the interference overload codes respectively corresponding to the high interference overload resource blocks.

**14.** The interference-overload-indicator generating device as set forth in claim 5 or 6, further comprising:

a bitmap generation unit for generating a bitmap indicative of each of the frequency spectrum resource blocks, wherein:

the bitmap generation unit distinguishes, in the bitmap, frequency spectrum resource blocks each having a lowest interference overload level from frequency spectrum resource blocks each having an interference overload level except the lowest interference overload level, by allocating different bit values; and
the interference-overload-indicator generation unit generates the interference overload indicator by sequentially cascading the bitmap and the interference overload codes or the high interference overload codes respectively corresponding to frequency spectrum resource blocks each having an interference overload level except the lowest interference overload level, in the order of the frequency spectrum resource blocks.

**15.** The interference-overload-indicator generating device as set forth in claim 7, further comprising:

an index number generation unit for generating frequency spectrum resource block index numbers each indicative of a frequency spectrum resource block having an interference overload level higher than the interference overload level in the system bandwidth, wherein:

the interference-overload-indicator generation unit generates interference overload codes respectively corresponding to high interference overload resource blocks, the interference overload codes each being generated by cascading a frequency spectrum resource block index number and a corresponding interference overload system-average code; and
the interference-overload-indicator generation unit generates the interference overload indicator by cascading the average interference overload code, and the interference overload codes generated, the interference overload codes respectively corresponding to the high interference overload resource blocks.

**16.** The interference-overload-indicator generating device as set forth in claim 7, further comprising:

a bitmap generation unit generating a bitmap indicative of each of the frequency spectrum resource blocks, wherein:

the bitmap generation unit distinguishes, in the bitmap, frequency spectrum resource blocks each having the interference overload level higher than the interference overload level in the system bandwidth from frequency spectrum resource blocks each having other interference overload level, by allocating different bit values; and
the interference-overload-indicator generation unit generates the interference overload indicator by sequentially cascading the average interference overload code, the bitmap and the interference overload system-average codes respectively corresponding to frequency spectrum resource blocks each having the interference overload level higher than the interference overload level in the system bandwidth, in the order of the frequency spectrum resource blocks.

**17.** The interference-overload-indicator generating device as set forth in claim 8, wherein:

the interference-overload-indicator generation unit generates the interference overload indicator by sequentially cascading the interference overload code corresponding to the reference frequency spectrum resource block and the interference overload differential codes respectively corresponding to the other frequency spectrum resource blocks, in the order of the other frequency spectrum resource blocks.

**18.** The interference-overload-indicator generating device as set forth in claim 8 or 9, further comprising:

a bitmap generation unit for generating a bitmap indicative of each of the frequency spectrum resource blocks, wherein:

the bitmap generation unit distinguishes, in the bitmap, frequency spectrum resource blocks each having a lowest interference overload level from frequency spectrum resource blocks each having an interference overload level except the lowest interference overload level, by allocating different bit values; and
the in terference-overload-indicator generation unit generates the interference overload indicator by sequentially cascading the bitmap, the interference overload code of the reference frequency spectrum resource block, and the interference overload differential codes or the high interference overload differential codes of the other frequency spectrum resource blocks, in the order of the frequency spectrum resource blocks.

**19.** The interference-overload-indicator generating device as set forth in claim 10, wherein:

the interference-overload-indicator generation unit generates interference overload indicators respectively corresponding to the plurality of subbands, by sequentially cascading, for each of the plurality of subbands, the interference overload code of the reference frequency spectrum resource block in the each subband and the interference overload differential codes respectively corresponding to the other frequency spectrum resource blocks in the each subband; and
the interference-overload-indicator generation unit generates the interference overload indicator by sequentially cascading the interference overload indicators respectively corresponding to the plurality of subbands, in the order of the plurality of subbands.

**20.** The interference-overload-indicator generating device as set forth in claim 11, wherein:

the interference-overload-indicator generation unit generates the interference overload indicator by sequentially cascading the average interference overload code and the interference overload system-average differential codes respectively corresponding to the frequency spectrum resource blocks, in the order of the frequency spectrum resource blocks.

**21.** The interference-overload-indicator generating device as set forth in claim 2, further comprising:

a storage unit for storing a state coding/decoding table, wherein:

the coding unit generates an interference overload level series in which the interference overload levels determined are put in series in the order of the frequency spectrum resource blocks, the interference overload levels respectively corresponding to the frequency spectrum resource blocks;
the coding unit generates the interference overload state code by carrying out state mapping coding of the interference overload level series, according to the state coding/decoding table stored in the storage unit; and
the interference-overload-indicator generation unit processes the interference overload state code as the interference overload indicator.

**22.** The interference-overload-indicator generating device as set forth in claim 2, further comprising:

a subband division unit for dividing all the frequency spectrum resource blocks into a plurality of subbands; and
a storage unit for storing the state coding/decoding table, wherein:

the coding unit generates interference overload level subseries in each of which the interference overload levels determined are put in series in the order of the frequency spectrum resource blocks, each of the interference overload level subseries being generated for each of the plurality of subbands into which all the frequency spectrum resource blocks are divided by the subband division unit, the interference overload levels respectively corresponding to the frequency spectrum resource blocks;
the coding unit generates the interference overload state codes by carrying out, according to the state coding/decoding table stored in the storage unit, state mapping coding of the interference overload level subseries generated, for each of the plurality of subbands; and
the interference-overload-indicator generation unit generates the interference overload indicator by sequentially cascading the interference overload state codes in the order of the plurality of subbands.

**23.** The interference-overload-indicator generating device as set forth in claim 21 or 22, wherein:

the interference overload codes, and the interference overload level series or the interference overload level subseries generated by the coding unit are in a one-to-one mapping relation.

**24.** The interference-overload-indicator generating device as set forth in claim 21 or 22, wherein:

the interference overload codes, and the interference overload level series or the interference overload level subseries generated by the coding unit are in a unique mapping relation.

**25.** A method of generating an interference overload indicator, the method being used in an uplink frequency division multiplexing cellular communication system, the method comprising:

a determination step of determining, according to a preset condition, interference overload levels respectively corresponding to frequency spectrum resource blocks used in uplink data transmission;
a coding step of generating interference overload codes or interference overload state codes by carrying out coding or state coding of the interference overload levels determined, the interference overload levels respectively corresponding to the frequency spectrum resource blocks; and
an interference-overload-indicator generation step of generating the interference overload indicator, in accordance with the interference overload codes or the interference overload state codes generated, the interference overload indicator reflecting the interference overload levels respectively corresponding to the frequency spectrum resource blocks.

**26.** The method as set forth in claim 25, wherein:

each of the interference overload levels has a plurality of levels; and
in the determination step, each of the interference overload levels is determined to one of the plurality of levels according to the preset condition.

**27.** The method as set forth in claim 26, wherein:

in the determination step, the preset condition is set based on at least one of a threshold value of an interference-to-noise ratio in a frequency spectrum resource block, a threshold value of an interference value, a threshold value of a satisfaction level on service quality, a loaded state, a condition where interference is received, and a number of users on a boundary of cells.

**28.** The method as set forth in claim 26, wherein:

the preset condition is used in the uplink frequency division multiplexing cellular communication system.

**29.** The method as set forth in claim 26, wherein:

in the coding step, the interference overload codes respectively corresponding to the frequency spectrum resource blocks are generated by carrying out coding of the interference overload levels determined, the interference overload levels respectively corresponding to the frequency spectrum resource blocks; and
in the coding step, each of the interference overload codes corresponds, in a one-to-one relation, to one of the plurality of interference overload levels.

**30.** The method as set forth in claim 26, wherein:

in the coding step, high interference overload codes are generated by carrying out coding of interference overload levels respectively corresponding to frequency spectrum resource blocks each having an interference overload level except a lowest interference overload level; and
in the coding step, each of the high interference overload codes generated corresponds, in a one-to-one relation, to one of the plurality of interference overload levels except the lowest interference overload level.

**31.** The method as set forth in claim 26, wherein:

in the coding step, an interference overload level in a system bandwidth of the uplink frequency division multiplexing cellular communication system is obtained and an average interference overload code is generated by carrying out coding of the interference overload level in the system bandwidth;
in the coding step, interference overload system-average codes respectively corresponding to frequency spectrum resource blocks each having an interference overload level higher than the interference overload level in the system bandwidth are generated, by carrying out coding of the interference overload levels respectively corresponding to the frequency spectrum resource blocks each having the interference overload level higher than the interference overload level in the system bandwidth; and
in the coding step, each of the interference overload system-average codes generated corresponds, in a one-to-one relation, to one of the plurality of interference overload levels.

**32.** The method as set forth in claim 29, wherein:

in the coding step, one frequency spectrum resource block is selected as a reference frequency spectrum resource block; and
in the coding step, interference overload differential codes are generated by sequentially carrying out differential coding of an interference overload code corresponding to a frequency spectrum resource block being adjacent to the reference frequency spectrum resource block, the differential coding being carried out according to a differential coding/decoding table.

**33.** The method as set forth in claim 30, wherein:

in the coding step, one frequency spectrum resource block is selected as a reference frequency spectrum resource block, the one frequency spectrum resource block having the interference overload level except the lowest interference overload level; and
in the coding step, high-interference overload differential codes are generated by sequentially carrying out differential coding of an interference overload code corresponding to a frequency spectrum resource block being adjacent to the reference frequency spectrum resource block, the frequency spectrum resource block having the interference overload level except the lowest interference overload level, the differential coding being carried out according to a differential coding/decoding table.

**34.** The method as set forth in claim 29, wherein:

in the coding step, all the frequency spectrum resource blocks are divided into a plurality of subbands;
in the coding step, one frequency spectrum resource block is selected as a reference frequency spectrum resource block in each of the plurality of subbands; and
in the coding step, interference overload differential codes corresponding to the each subband are generated by sequentially carrying out differential coding of an interference overload code corresponding to a frequency spectrum resource block being adjacent to the reference frequency spectrum resource block, the differential coding being carried out according to a differential coding/decoding table.

**35.** The method as set forth in claim 29, wherein:

in the coding step, an interference overload level in a system bandwidth in the uplink frequency division multiplexing cellular communication system is obtained and an average interference overload code is generated by carrying out coding of the interference overload level obtained; and
in the coding step, interference overload system-average differential codes are generated by sequentially carrying out differential coding of an interference overload code corresponding to a frequency spectrum resource block, the differential coding being carried out according to the average interference overload code and a differential coding/decoding table.

**36.** The method as set forth in claim 29, wherein:

in the interference-overload-indicator generation step, the interference overload indicator is generated by sequentially cascading, in the order of the frequency spectrum resource blocks, corresponding interference overload codes.

**37.** The method as set forth in claim 29 or 30, wherein:

in the interference-overload-indicator generation step, frequency spectrum resource blocks each having an interference overload level except a lowest interference overload level are represented by frequency spectrum resource block index numbers, respectively;
in the interference-overload-indicator generation step, each of interference overload codes respectively corresponding to high interference overload resource blocks is generated by cascading the frequency spectrum resource block index number and a corresponding interference overload code or high interference overload code; and
in the interference-overload-indicator generation step, the interference overload indicator is generated by cascading the interference overload codes generated, the interference overload codes respectively corresponding to the high interference overload resource blocks.

**38.** The method as set forth in claim 29 or 30, wherein:

in the interference-overload-indicator generation step, each of the frequency spectrum resource blocks is represented by a bitmap, and in the bitmap, frequency spectrum resource blocks each having a lowest interference overload level is distinguished from frequency spectrum resource blocks each having an interference overload level except the lowest interference overload level, by allocation of different bit values; and
in the interference-overload-indicator generation step, the interference overload indicator is generated by sequentially cascading the bitmap and the interference overload codes or the high interference overload codes respectively corresponding to frequency spectrum resource blocks each having an interference overload level except the lowest interference overload level, in the order of the frequency spectrum resource blocks.

**39.** The method as set forth in claim 31, wherein:

in the interference-overload-indicator generation step, the frequency spectrum resource blocks each having the interference overload level higher than the interference overload level in the system bandwidth are represented by frequency spectrum resource block index numbers, respectively;
in the interference-overload-indicator generation step, interference overload codes respectively corresponding to high interference overload resource blocks are generated, the interference overload codes each being generated by cascading a frequency spectrum resource block index number and a corresponding interference overload system-average code; and
in the interference-overload-indicator generation step, the interference overload indicator is generated by cascading the average interference overload code, and the interference overload codes generated, the interference overload codes respectively corresponding to the high interference overload resource blocks.

**40.** The method as set forth in claim 31, wherein:

in the interference-overload-indicator generation step, each of the frequency spectrum resource blocks is represented by a bitmap;
in the interference-overload-indicator generation step, in the bitmap, frequency spectrum resource blocks each having the interference overload level higher than the interference overload level in the system bandwidth are distinguished from frequency spectrum resource blocks each having other interference overload level, by allocation of different bit values; and
in the interference-overload-indicator generation step, the interference overload indicator is generated by sequentially cascading the average interference overload code, the bitmap and the interference overload system-average codes respectively corresponding to frequency spectrum resource blocks each having the interference overload level higher than the interference overload level in the system bandwidth, in the order of the frequency spectrum resource blocks.

**41.** The method as set forth in claim 32, wherein:

in the interference-overload-indicator generation step, the interference overload indicator is generated by sequentially cascading the interference overload code corresponding to the reference frequency spectrum resource block and the interference overload differential codes respectively corresponding to the other frequency spectrum resource blocks, in the order of the other frequency spectrum resource blocks.

**42.** The method as set forth in claim 32 or 33, wherein:

in the interference-overload-indicator generation step, each of the frequency spectrum resource blocks is represented by a bitmap;
in the interference-overload-indicator generation step, in the bitmap, frequency spectrum resource blocks each having a lowest interference overload level are distinguished from frequency spectrum resource blocks each having an interference overload level except the lowest interference overload level, by allocation of different bit values; and
in the interference-overload-indicator generation step, the interference overload indicator is generated by sequentially cascading the bitmap, the interference overload code of the reference frequency spectrum resource block, and the interference overload differential codes or the high interference overload differential codes of the other frequency spectrum resource blocks, in the order of the frequency spectrum resource blocks.

**43.** The method as set forth in claim 34, wherein:

in the interference-overload-indicator generation step, interference overload indicators respectively corresponding to the plurality of subbands are generated by sequentially cascading, for each of the plurality of subbands, the interference overload code of the reference frequency spectrum resource block in the each subband and the interference overload differential codes respectively corresponding to the other frequency spectrum resource blocks in the each subband; and
in the interference-overload-indicator generation step, the interference overload indicator is generated by sequentially cascading the interference overload indicators respectively corresponding to the plurality of subbands, in the order of the plurality of subbands.

**44.** The method as set forth in claim 35, wherein:

in the interference-overload-indicator generation step, the interference overload indicator is generated by sequentially cascading the average interference overload code and the interference overload system-average differential codes respectively corresponding to the frequency spectrum resource blocks, in the order of the frequency spectrum resource blocks.

**45.** The method as set forth in claim 26, wherein:

in the coding step, an interference overload level series in which the interference overload levels determined are put in series in the order of the frequency spectrum resource blocks is generated, the interference overload levels respectively corresponding to the frequency spectrum resource blocks;
in the coding step, the interference overload state code is generated by carrying out state mapping coding of the interference overload level series, according to a state coding/decoding table; and
in the interference-overload-indicator generation step, the interference overload state code is processed as the interference overload indicator.

**46.** The method as set forth in claim 26, wherein:

in the coding step, all the frequency spectrum resource blocks are divided into a plurality of subbands;
in the coding step, interference overload level subseries in each of which the interference overload levels determined are put in series in the order of the frequency spectrum resource blocks are generated for the plurality of subbands, respectively, the interference overload levels respectively corresponding to the frequency spectrum resource blocks;
in the coding step, the interference overload state codes are generated by carrying out, according to a state coding/decoding table, state mapping coding of the interference overload level subseries generated; and
in the interference-overload-indicator generation step, the interference overload indicator is generated by sequentially cascading the interference overload state codes in the order of the plurality of subbands.

**47.** The method as set forth in claim 45 or 46, wherein:

the interference overload codes, and the interference overload level series or the interference overload level subseries generated in the coding step are in a one-to-one mapping relation.

**48.** The method as set forth in claim 45 or 46, wherein:

the interference overload codes, and the interference overload level series or the interference overload level subseries generated in the coding step are in a unique mapping relation.

**49.** An interference-overload-indicator generation controller used in an uplink frequency division multiplexing cellular communication system, the interference-overload-indicator generation controller comprising:

a detection unit for detecting a system interference related parameter;
a comparison unit for comparing a detected value of the system interference related parameter and a preset threshold value; and
a trigger unit for activating the interference-overload-indicator generation device as set forth in any one of claims 1 through 24, in accordance with a comparison result obtained by the comparison unit.

**50.** The interference-overload-indicator generation controller as set forth in claim 49, wherein:

the system interference related parameter is at least either an interference level in a system bandwidth in the uplink frequency division multiplexing cellular communication system or a load ratio of a system resource in the uplink frequency division multiplexing cellular communication system, or at least either an interference level in a part of the system bandwidth or a load ratio of a part of the system resource.

**51.** The interference-overload-indicator generation controller as set forth in claim 50, wherein:

the interference overload level in the system bandwidth includes at least one of an interference power density in the system bandwidth, an interference-to-noise ratio in the system bandwidth, an average interference power density value in the system bandwidth, and an average interference-to-noise ratio in the system bandwidth; or
the interference overload level in the part of the system bandwidth includes at least one of an interference power density in the part of the system bandwidth, an interference-to-noise ratio in the part of the system bandwidth, an average interference power density value in the part of the system bandwidth, and an average interference-to-noise ratio in the part of the system bandwidth.

**52.** The interference-overload-indicator generation controller as set forth in claim 50, wherein:

the load ratio of the system resource includes at least one of an occupation rate of a data transmission channel resource and an occupation rate of a control signaling channel resource; or
the load ratio of the part of the system resource includes at least one of an occupation rate of a part of the data transmission channel resource and an occupation rate of a part of the control signaling channel resource.

**53.** The interference-overload-indicator generation controller as set forth in claim 50, wherein:

the trigger unit controls and drives the interference-overload-indicator generation device as set forth in any one of claims 1 through 24 in a case where at least either the interference level in the system bandwidth or the load ratio of the system resource is greater than the preset threshold value; or
the trigger unit controls and drives the interference-overload-indicator generation device as set forth in any one of claims 1 through 24 in a case where at least either the interference level in the part of the system bandwidth or the load ratio of the part of the system resource is greater than the preset threshold value.

**54.** The interference-overload-indicator generation controller as set forth in claim 49, further comprising:

a timer for measuring a system time and storing a transmission timing of the interference overload indicator; wherein:
the system interference related parameter is a system time and the preset threshold value is the transmission timing of the interference overload indicator; and
the trigger unit controls and drives the interference-overload-indicator generation device as set forth in any one of claims 1 through 24 in a case where the system time reaches the transmission timing of the interference overload indicator.

**55.** A method of controlling interference-overload-indicator generation, the method being used in an uplink frequency division multiplexing cellular communication system, the method comprising:

a detection step of detecting a system interference related parameter;
a comparison step of comparing a detected value of the system interference related parameter and a preset threshold value; and
a trigger step of executing the determination step included in the method as set forth in any one of claims 25 through 48, in accordance with a comparison result obtained in the comparison step.

**56.** The method as set forth in claim 55, wherein:

the system interference related parameter is at least either an interference level in a system bandwidth in the uplink frequency division multiplexing cellular communication system or a load ratio of a system resource in the uplink frequency division multiplexing cellular communication system, or at least either an interference level in a part of the system bandwidth or a load ratio of a part of the system resource.

**57.** The method as set forth in claim 56, wherein:

t he interference overload level in the system bandwidth includes at least one of an interference power density in the system bandwidth, an interference-to-noise ratio in the system bandwidth, an average interference power density value in the system bandwidth, and an average interference-to-noise ratio in the system bandwidth; or
t he interference overload level in the part of the system bandwidth includes at least one of an interference power density in the part of the system bandwidth, an interference-to-noise ratio in the part of the system bandwidth, an average interference power density value in the part of the system bandwidth, and an average interference-to-noise ratio in the part of the system bandwidth.

**58.** The method of controlling interference-overload-indicator generation as set forth in claim 56, wherein:

the load ratio of the system resource includes at least one of an occupation rate of a data transmission channel resource and an occupation rate of a control signaling channel resource; or
the load ratio of the part of the system resource includes at least one of an occupation rate of a part of the data transmission channel resource and an occupation rate of a part of the control signaling channel resource.

**59.** The method as set forth in claim 56, wherein:

in the trigger step, the determination step included in the method as set forth in any one of claims 25 through 48 is executed in a case where at least either the interference level in the system bandwidth or the load ratio of the system resource is greater than the preset threshold value; or
in the trigger step, the determination step included in the method as set forth in any one of claims 25 through 48 is executed in a case where at least either the interference level in the part of the system bandwidth or the load ratio of the part of the system resource is greater than the preset threshold value.

**60.** The method as set forth in claim 55, wherein:

the system interference related parameter is a system time and the preset threshold value is the transmission timing of the interference overload indicator; and
in the trigger step, the determination step included in the method as set forth in any one of claims 25 through 48 is executed in a case where the system time reaches the transmission timing of the interference overload indicator.

**61.** A base station used in an uplink frequency division multiplexing cellular communication system, the base station comprising:

the interference-overload-indicator generation controller as set forth in any one of claims 49 through 54 judging whether or not to control and drive an interference-overload-indicator generating device;
the interference-overload-indicator generating device as set forth in any one of claims 1 through 24 generating the interference overload indicator under control of the interference-overload-indicator generation controller; and
a transmitting/receiving device for performing at least either transmission of communication data to the interference-overload-indicator generation controller and the interference-overload-indicator generating device or reception of communication data from the interference-overload-indicator generation controller and the interference-overload-indicator generating device, by carrying out mutual communication with at least one of another base station other than the base station and a user device, and for transmitting the interference overload indicator generated by the interference-overload-indicator generating device.

**62.** A method of indicating interference overload, the method being used in an uplink frequency division multiplexing cellular communication system, the method comprising the steps of:

determining whether or not to initiate an interference-overload-indicator generation process, according to the method as set forth in any one of claims 55 through 60;
generating the interference overload indicator according to the method as set forth in any one of claims 25 through 48, in a case where it is determined to initiate the interference-overload-indicator generation process; and
transmitting the interference overload indicator generated.

FIG. 1

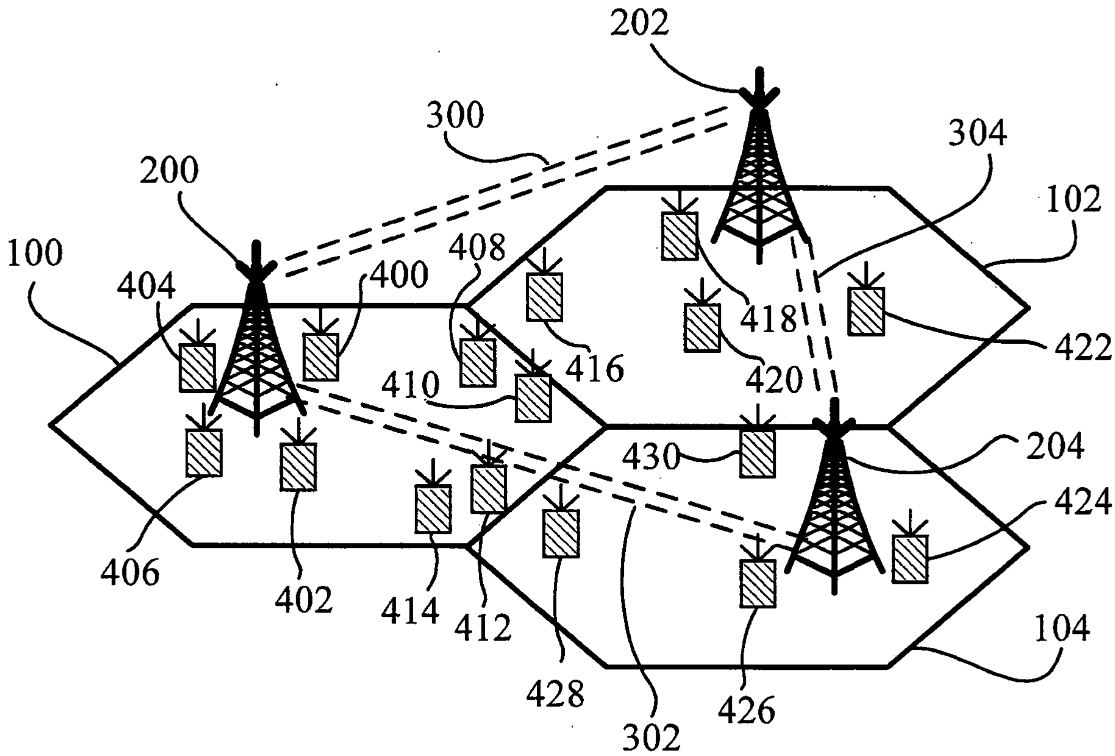
202
300
304
200
102
100
408
404
400
418
422
416
420
410
430
204
424
406
402
414
412
104
428
426
302

FIG. 2A

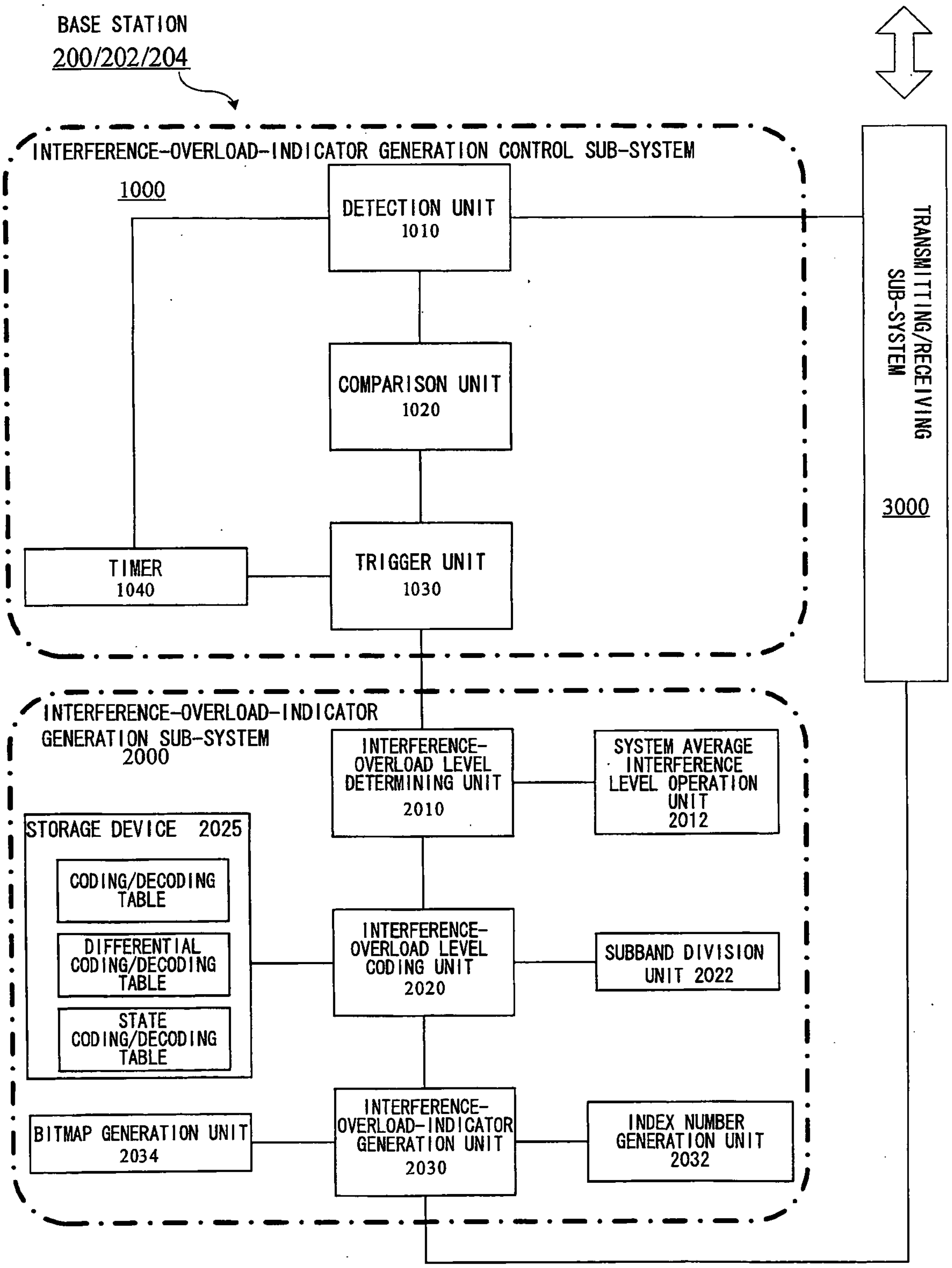
BASE STATION
200/202/204
INTERFERENCE-OVERLOAD-INDICATOR GENERATION CONTROL SUB-SYSTEM
1000
DETECTION UNIT
1010
COMPARISON UNIT
1020
TRIGGER UNIT
1030
TIMER
1040
TRANSMITTING/RECEIVING SUB-SYSTEM
3000
INTERFERENCE-OVERLOAD-INDICATOR GENERATION SUB-SYSTEM
2000
INTERFERENCE-OVERLOAD LEVEL DETERMINING UNIT
2010
SYSTEM AVERAGE INTERFERENCE LEVEL OPERATION UNIT
2012
STORAGE DEVICE 2025
CODING/DECODING TABLE
DIFFERENTIAL CODING/DECODING TABLE
STATE CODING/DECODING TABLE
INTERFERENCE-OVERLOAD LEVEL CODING UNIT
2020
SUBBAND DIVISION UNIT 2022
BITMAP GENERATION UNIT
2034
INTERFERENCE-OVERLOAD-INDICATOR GENERATION UNIT
2030
INDEX NUMBER GENERATION UNIT
2032

FIG. 2B

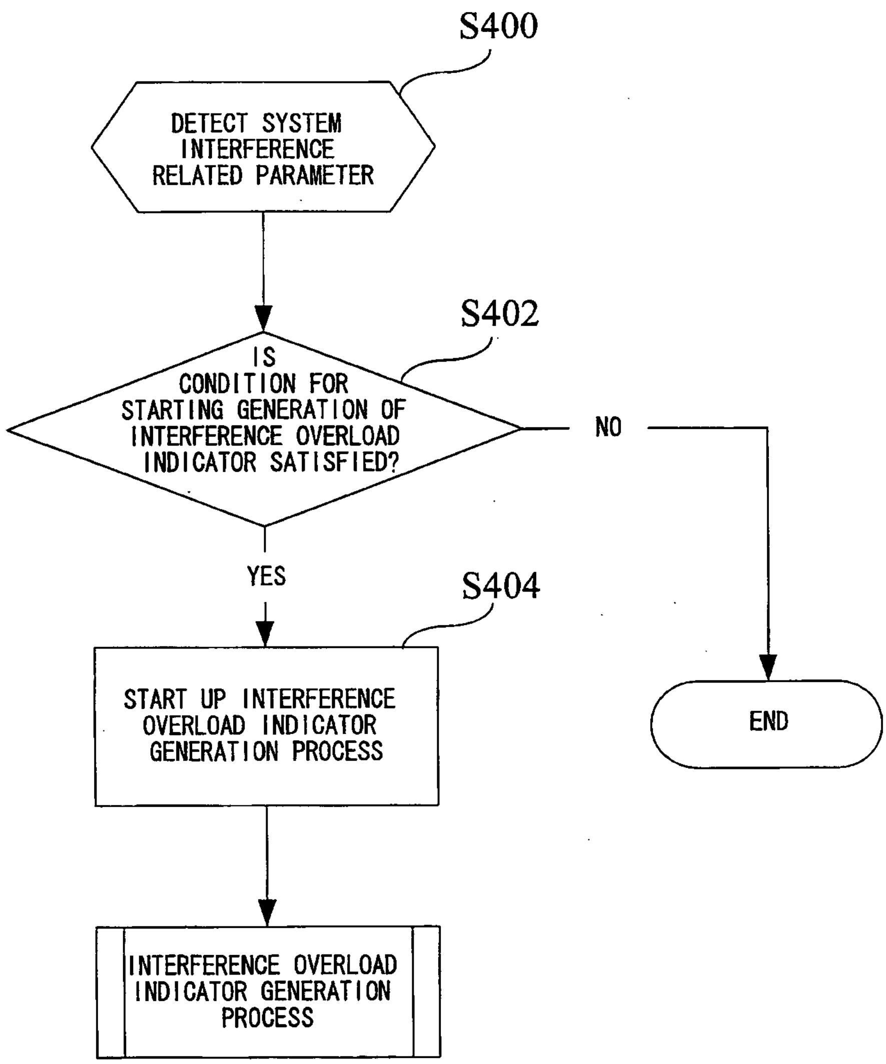
S400
DETECT SYSTEM INTERFERENCE RELATED PARAMETER
S402
IS CONDITION FOR STARTING GENERATION OF INTERFERENCE OVERLOAD INDICATOR SATISFIED?
NO
YES
S404
START UP INTERFERENCE OVERLOAD INDICATOR GENERATION PROCESS
END
INTERFERENCE OVERLOAD INDICATOR GENERATION PROCESS

FIG. 2C

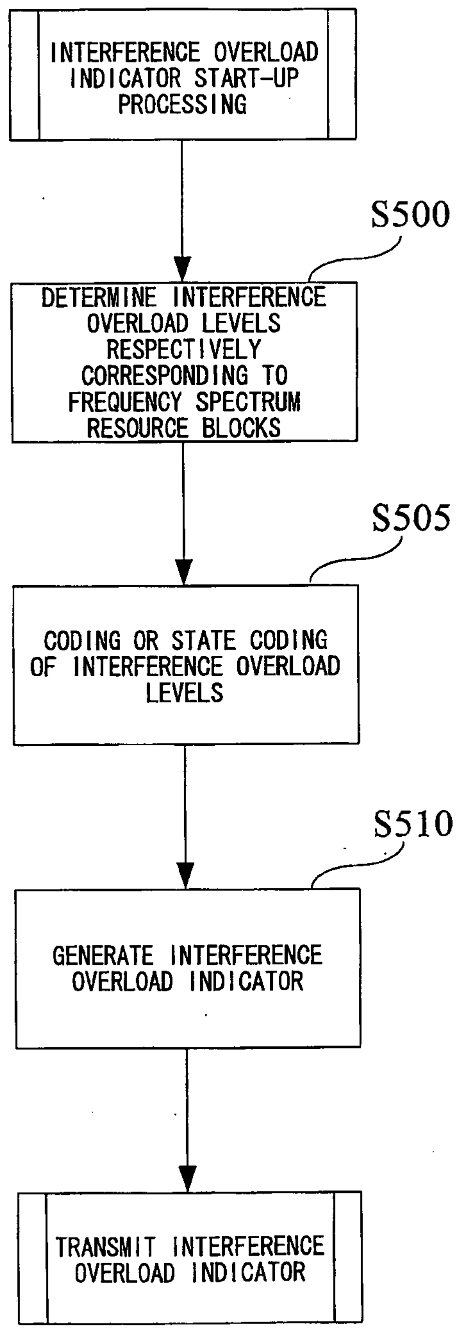
INTERFERENCE OVERLOAD INDICATOR START-UP PROCESSING
S500
DETERMINE INTERFERENCE OVERLOAD LEVELS RESPECTIVELY CORRESPONDING TO FREQUENCY SPECTRUM RESOURCE BLOCKS
S505
CODING OR STATE CODING OF INTERFERENCE OVERLOAD LEVELS
S510
GENERATE INTERFERENCE OVERLOAD INDICATOR
TRANSMIT INTERFERENCE OVERLOAD INDICATOR

FIG. 3

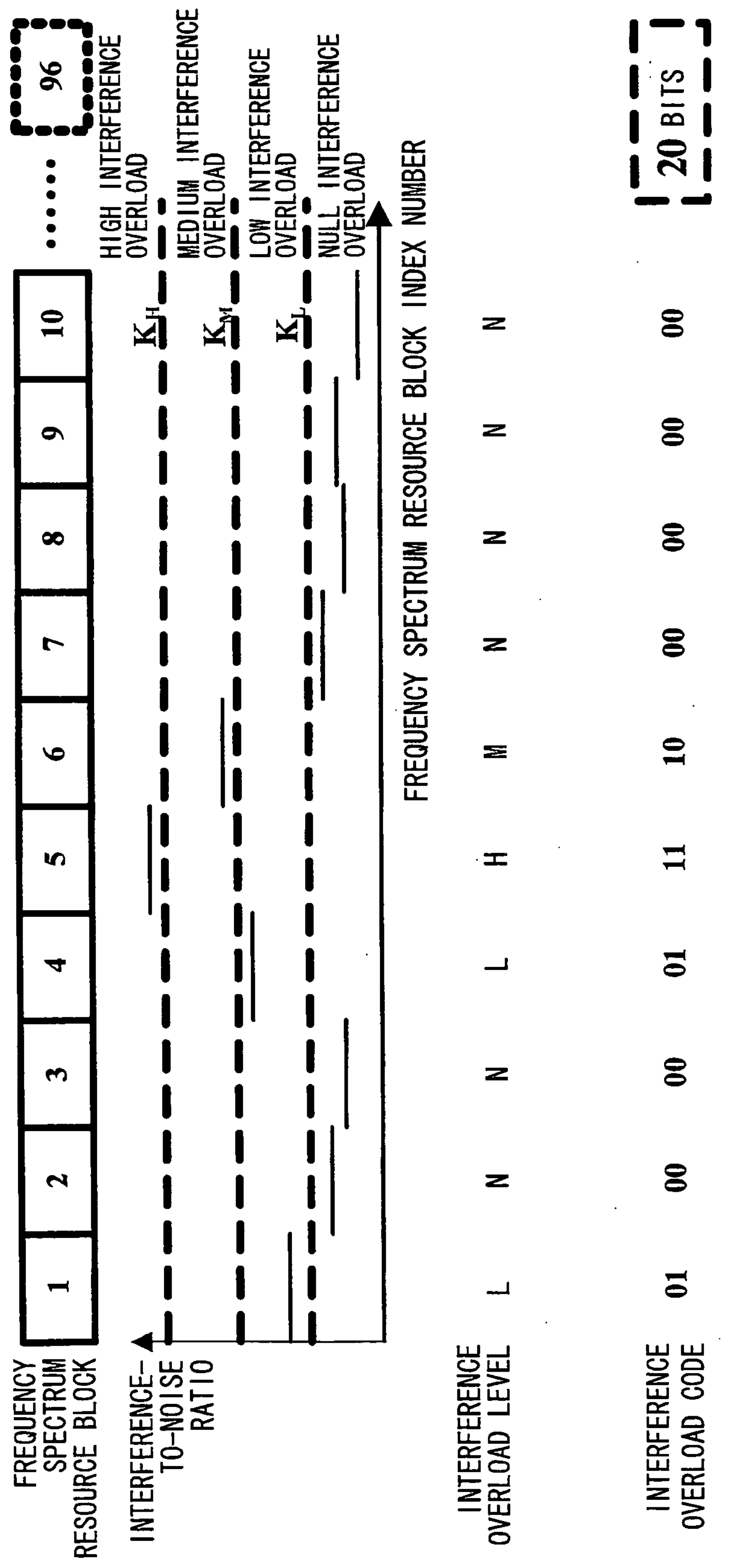
FREQUENCY SPECTRUM RESOURCE BLOCK
1
2
3
4
5
6
7
8
9
10
96
INTERFERENCE-TO-NOISE RATIO
HIGH INTERFERENCE OVERLOAD
MEDIUM INTERFERENCE OVERLOAD
LOW INTERFERENCE OVERLOAD
NULL INTERFERENCE OVERLOAD
$K_H$
$K_M$
$K_L$
FREQUENCY SPECTRUM RESOURCE BLOCK INDEX NUMBER
INTERFERENCE OVERLOAD LEVEL
L
N
N
L
H
M
N
N
N
N
INTERFERENCE OVERLOAD CODE
01
00
00
01
11
10
00
00
00
00
20 BITS

FIG. 4

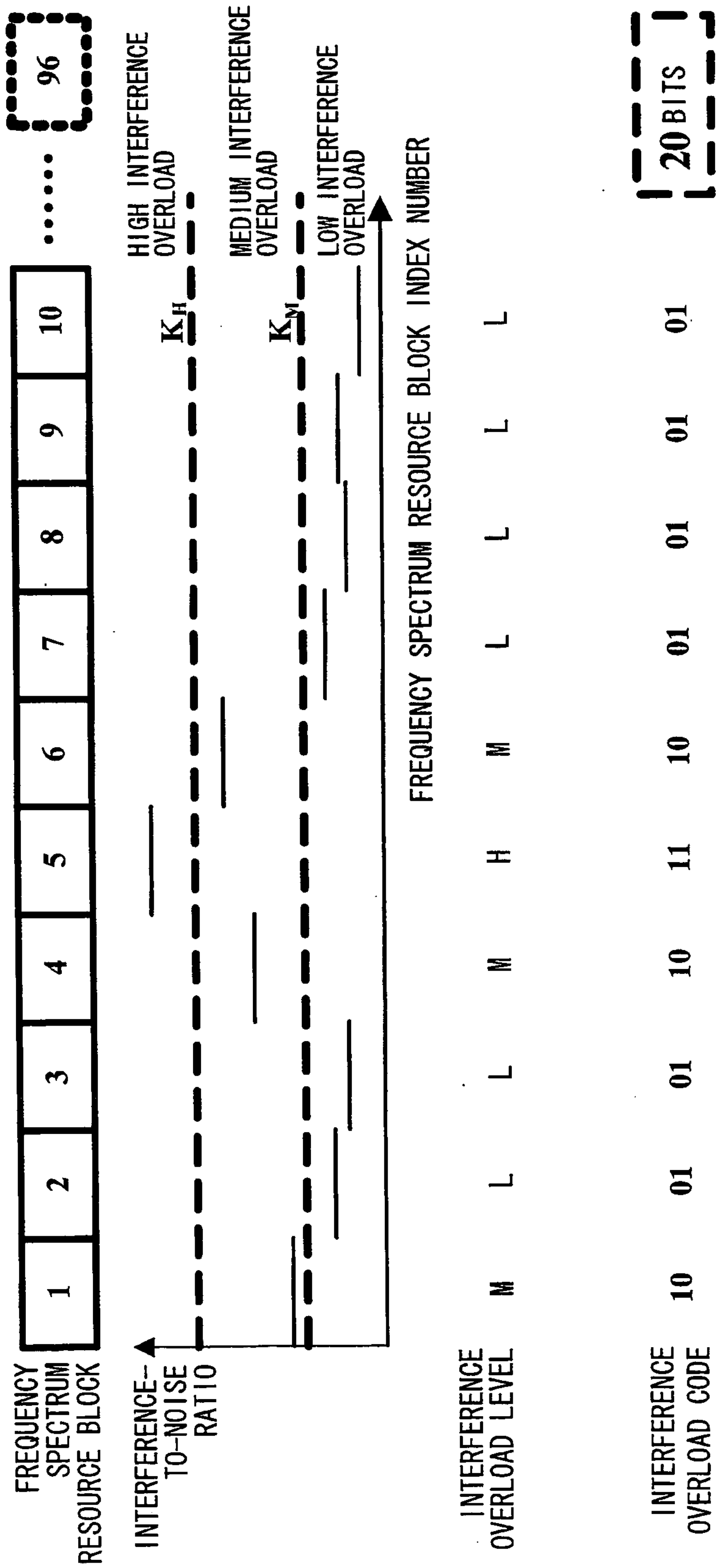
FREQUENCY SPECTRUM RESOURCE BLOCK
1
2
3
4
5
6
7
8
9
10
......
96
INTERFERENCE-TO-NOISE RATIO
HIGH INTERFERENCE OVERLOAD
$K_H$
MEDIUM INTERFERENCE OVERLOAD
$K_M$
LOW INTERFERENCE OVERLOAD
FREQUENCY SPECTRUM RESOURCE BLOCK INDEX NUMBER
INTERFERENCE OVERLOAD LEVEL
M L L M H M L L L L
INTERFERENCE OVERLOAD CODE
10 01 01 10 11 10 01 01 01 01
20 BITS

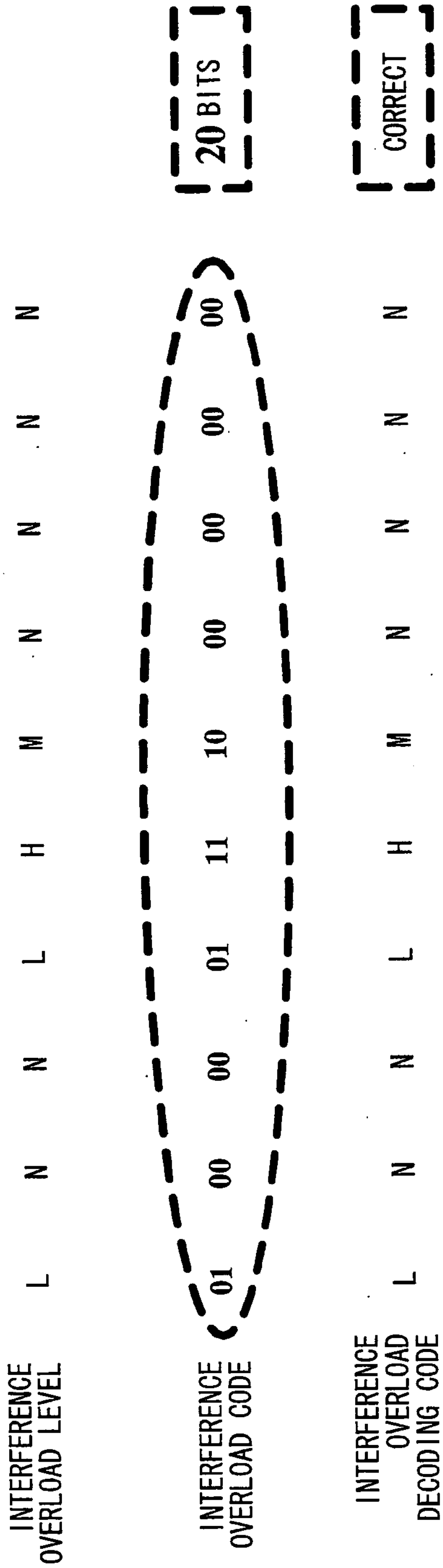
INTERFERENCE OVERLOAD LEVEL
L N N L H M N N N N
INTERFERENCE OVERLOAD CODE
01 00 00 01 11 10 00 00 00 00
20 BITS
INTERFERENCE OVERLOAD DECODING CODE
L N N L H M N N N N
CORRECT

FIG. 5

FIG. 6

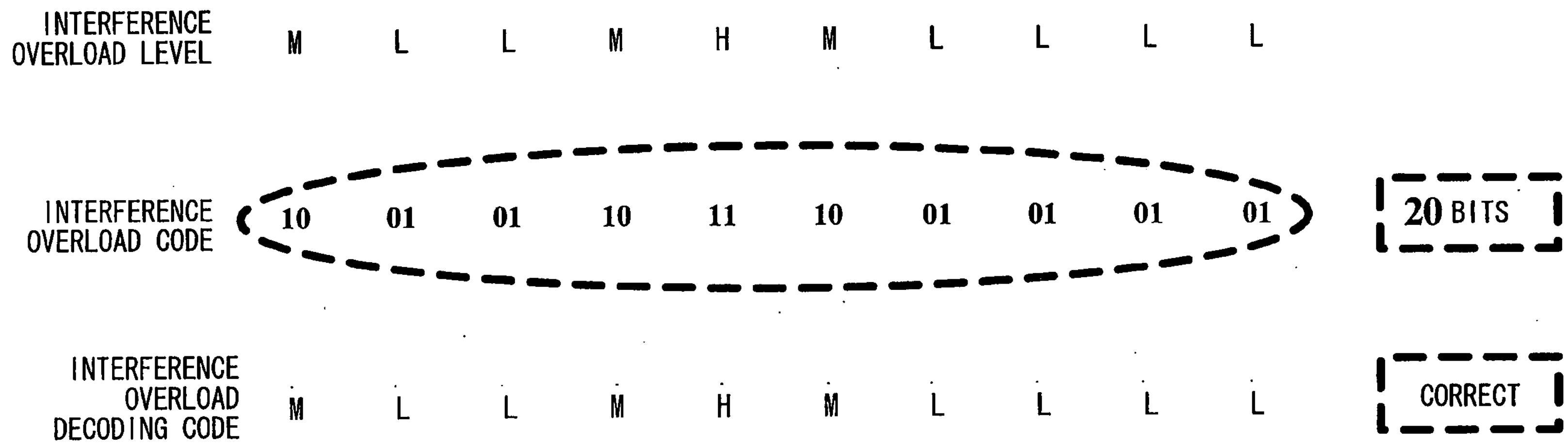
INTERFERENCE OVERLOAD LEVEL
M L L M H M L L L L
INTERFERENCE OVERLOAD CODE
10 01 01 10 11 10 01 01 01 01
20 BITS
INTERFERENCE OVERLOAD DECODING CODE
M L L M H M L L L L
CORRECT

FIG. 7

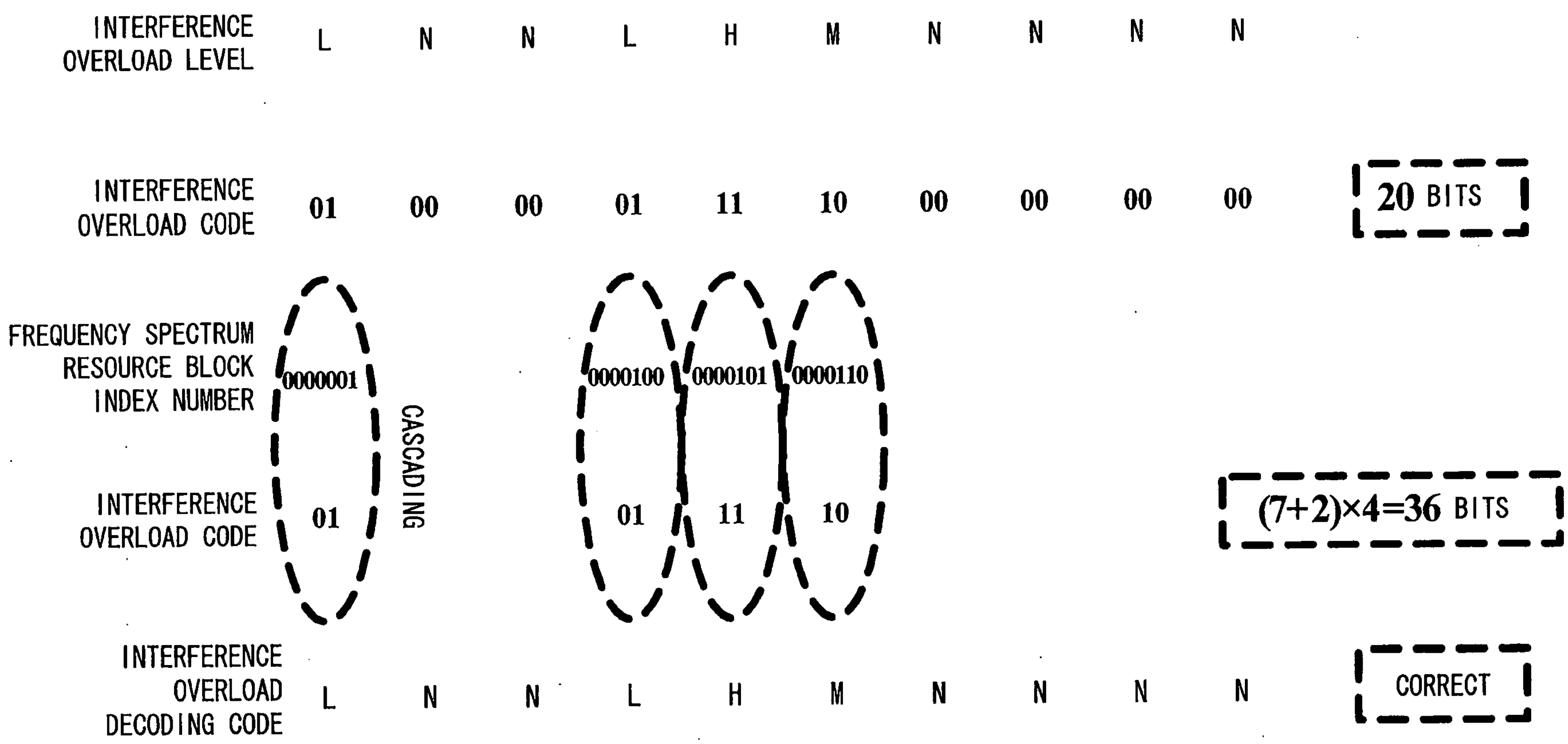
INTERFERENCE OVERLOAD LEVEL
L N N L H M N N N N
INTERFERENCE OVERLOAD CODE
01 00 00 01 11 10 00 00 00 00
20 BITS
FREQUENCY SPECTRUM RESOURCE BLOCK INDEX NUMBER
0000001
0000100
0000101
0000110
INTERFERENCE OVERLOAD CODE
01
01
11
10
CASCADING
(7+2)×4=36 BITS
INTERFERENCE OVERLOAD DECODING CODE
L N N L H M N N N N
CORRECT

FIG. 8

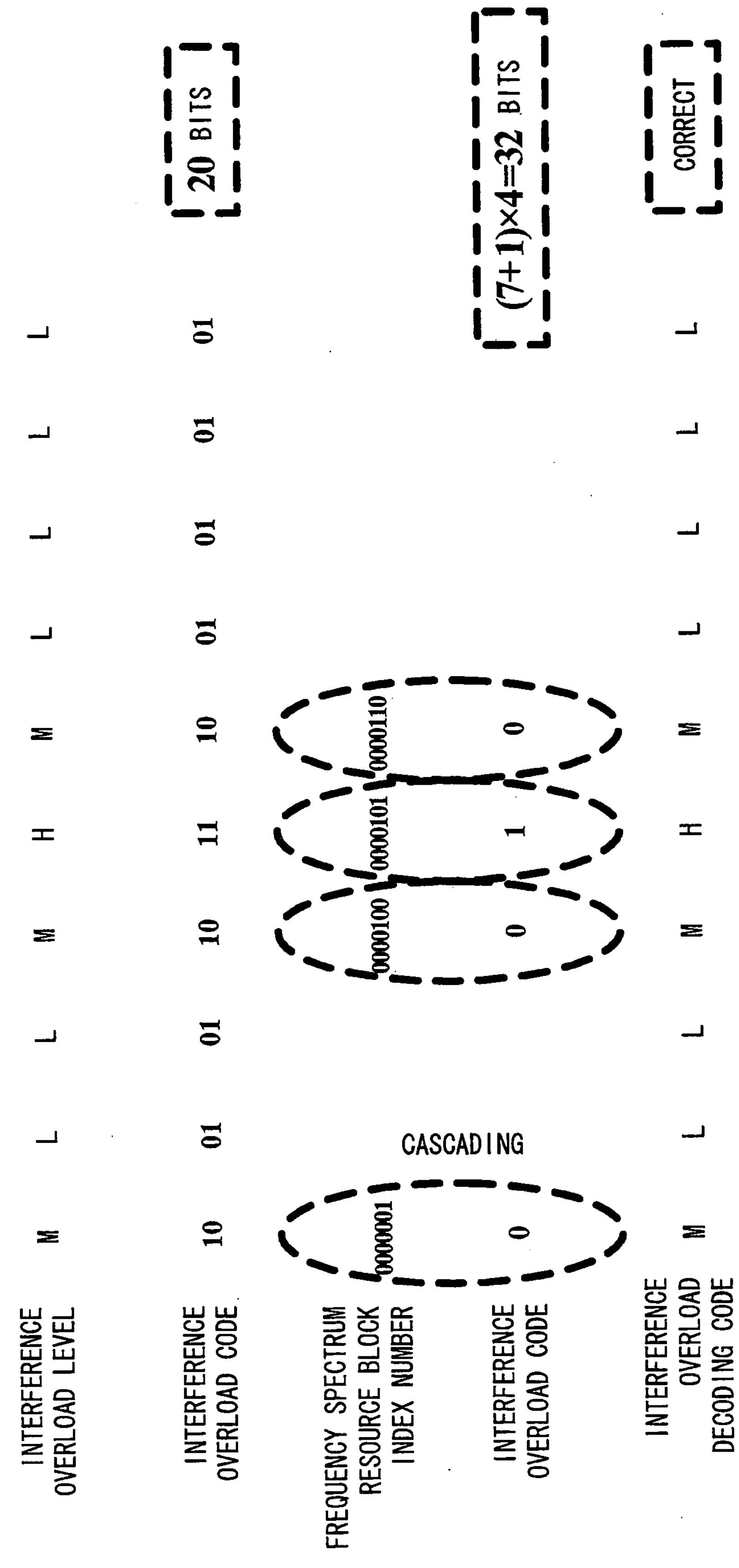
INTERFERENCE OVERLOAD LEVEL
M L L M H M L L L L
INTERFERENCE OVERLOAD CODE
10 01 01 10 11 10 01 01 01 01
20 BITS
FREQUENCY SPECTRUM RESOURCE BLOCK INDEX NUMBER
0000001 0000100 0000101 0000110
INTERFERENCE OVERLOAD CODE
0 0 1 0
CASCADING
(7+1)×4=32 BITS
INTERFERENCE OVERLOAD DECODING CODE
M L L M H M L L L L
CORRECT

FIG. 9

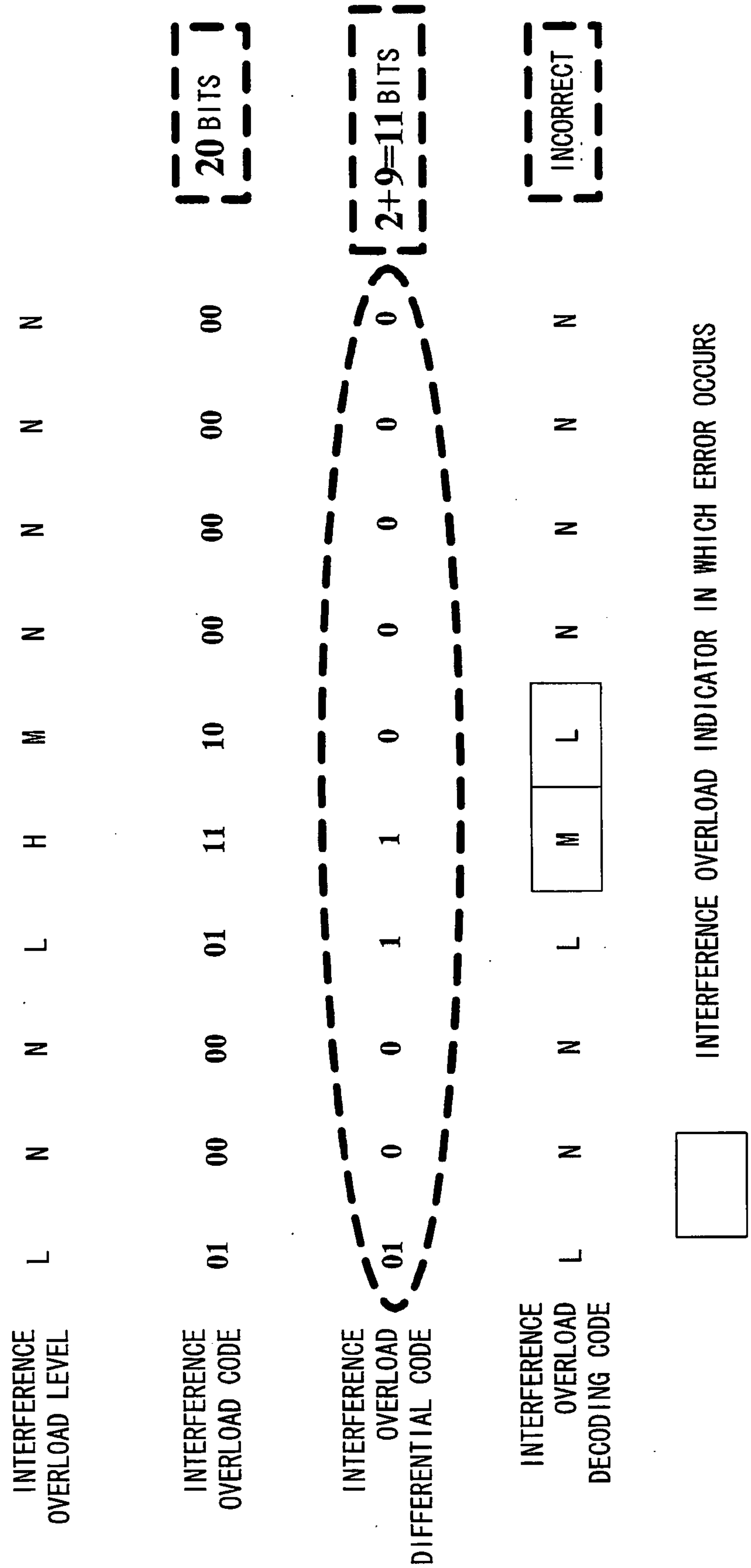
INTERFERENCE OVERLOAD LEVEL
L N N L H M N N N N
INTERFERENCE OVERLOAD CODE
01 00 00 01 11 10 00 00 00 00
20 BITS
INTERFERENCE OVERLOAD DIFFERENTIAL CODE
01 0 0 1 1 0 0 0 0 0
2+9=11 BITS
INTERFERENCE OVERLOAD DECODING CODE
L N N L M L N N N N
INCORRECT
INTERFERENCE OVERLOAD INDICATOR IN WHICH ERROR OCCURS

FIG. 10

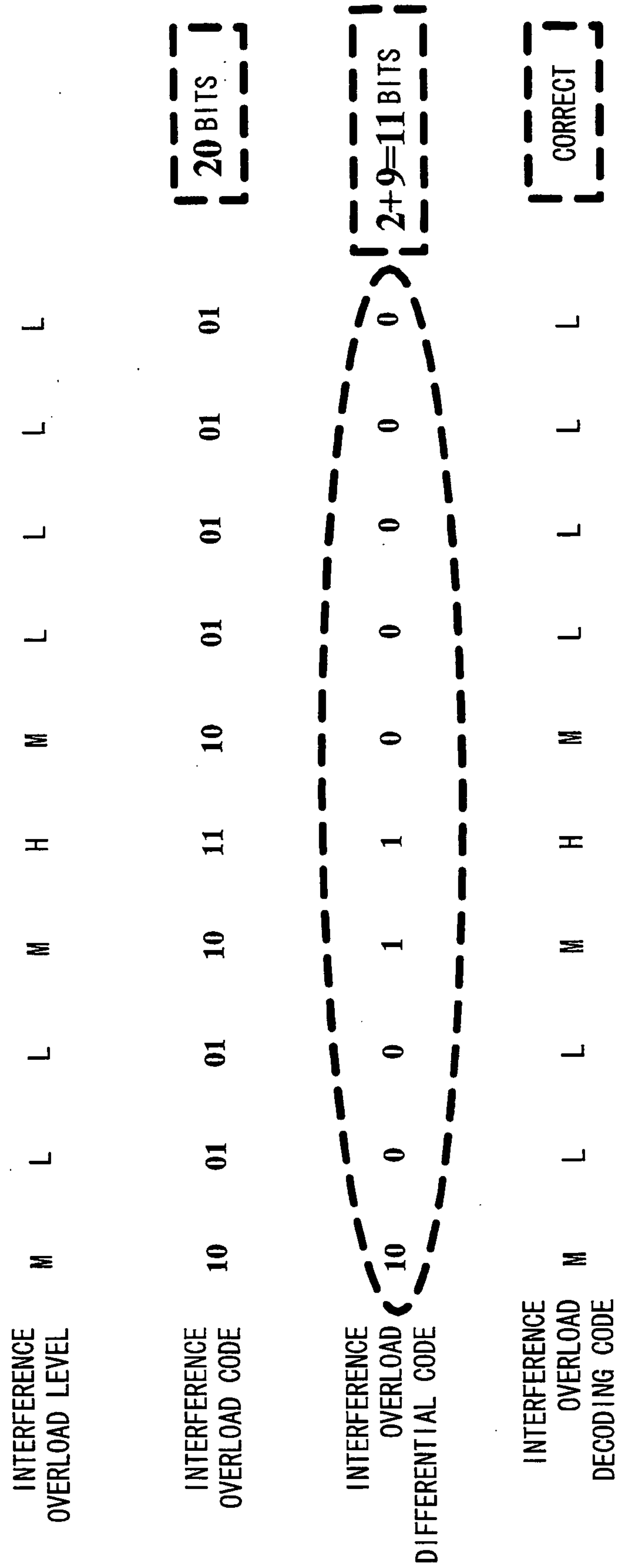
INTERFERENCE OVERLOAD LEVEL
M L L M H M L L L L
INTERFERENCE OVERLOAD CODE
10 01 01 10 11 10 01 01 01 01
20 BITS
INTERFERENCE OVERLOAD DIFFERENTIAL CODE
10 0 0 1 1 0 0 0 0 0
2+9=11 BITS
INTERFERENCE OVERLOAD DECODING CODE
M L L M H M L L L L
CORRECT

FIG. 11

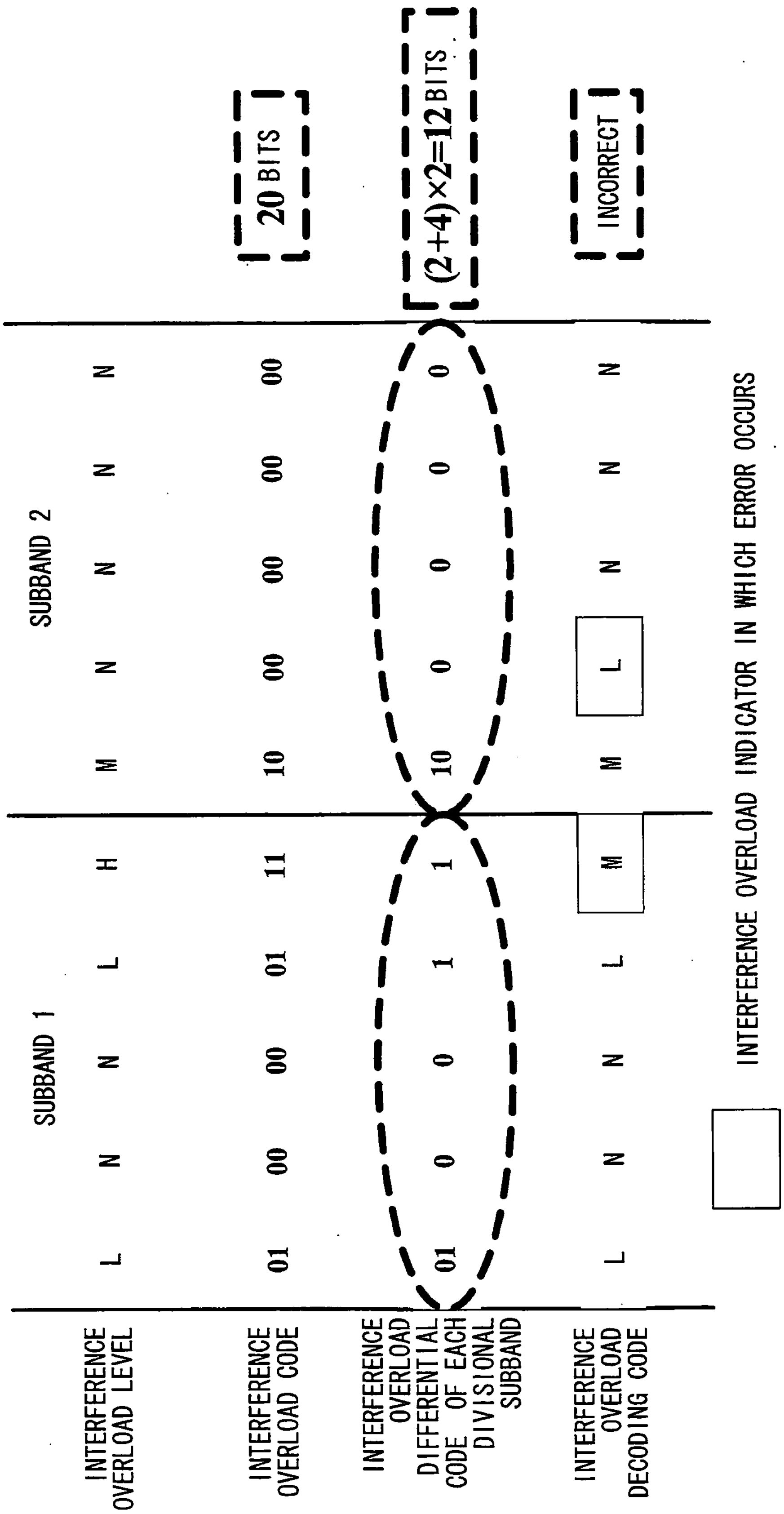
SUBBAND 1
SUBBAND 2
INTERFERENCE OVERLOAD LEVEL
L N N L H M N N N N
INTERFERENCE OVERLOAD CODE
01 00 00 01 11 10 00 00 00 00
20 BITS
INTERFERENCE OVERLOAD DIFFERENTIAL CODE OF EACH DIVISIONAL SUBBAND
01 0 0 1 1 10 0 0 0 0
(2+4)×2=12 BITS
INTERFERENCE OVERLOAD DECODING CODE
L N N L M M L N N N
INCORRECT
INTERFERENCE OVERLOAD INDICATOR IN WHICH ERROR OCCURS

FIG. 12

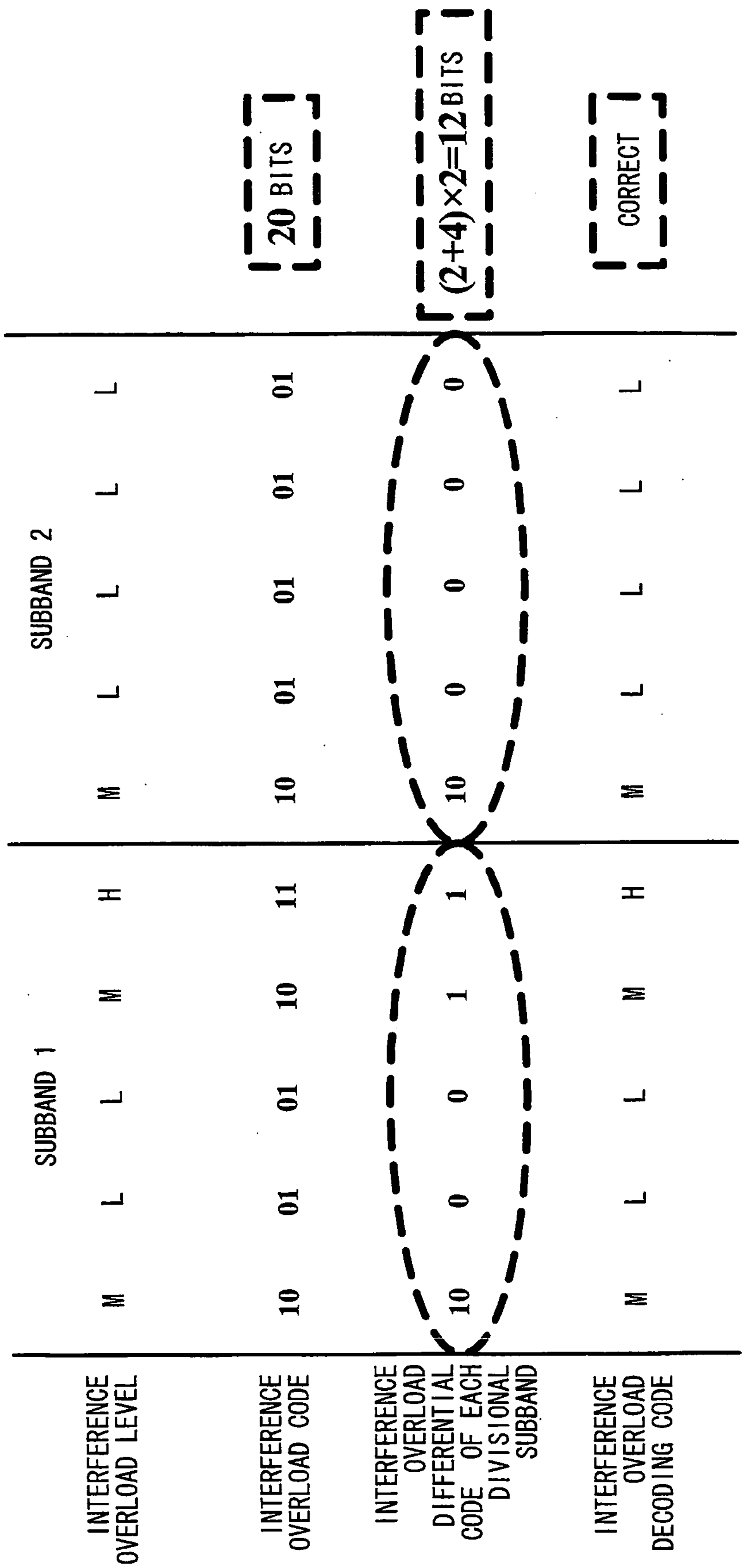
INTERFERENCE OVERLOAD LEVEL
INTERFERENCE OVERLOAD CODE
INTERFERENCE OVERLOAD DIFFERENTIAL CODE OF EACH DIVISIONAL SUBBAND
INTERFERENCE OVERLOAD DECODING CODE
SUBBAND 1
SUBBAND 2
M L L M H M L L L L
10 01 01 10 11 10 01 01 01 01
10 0 0 1 1 10 0 0 0 0
M L L M H M L L L L
20 BITS
(2+4)×2=12 BITS
CORRECT

FIG. 13

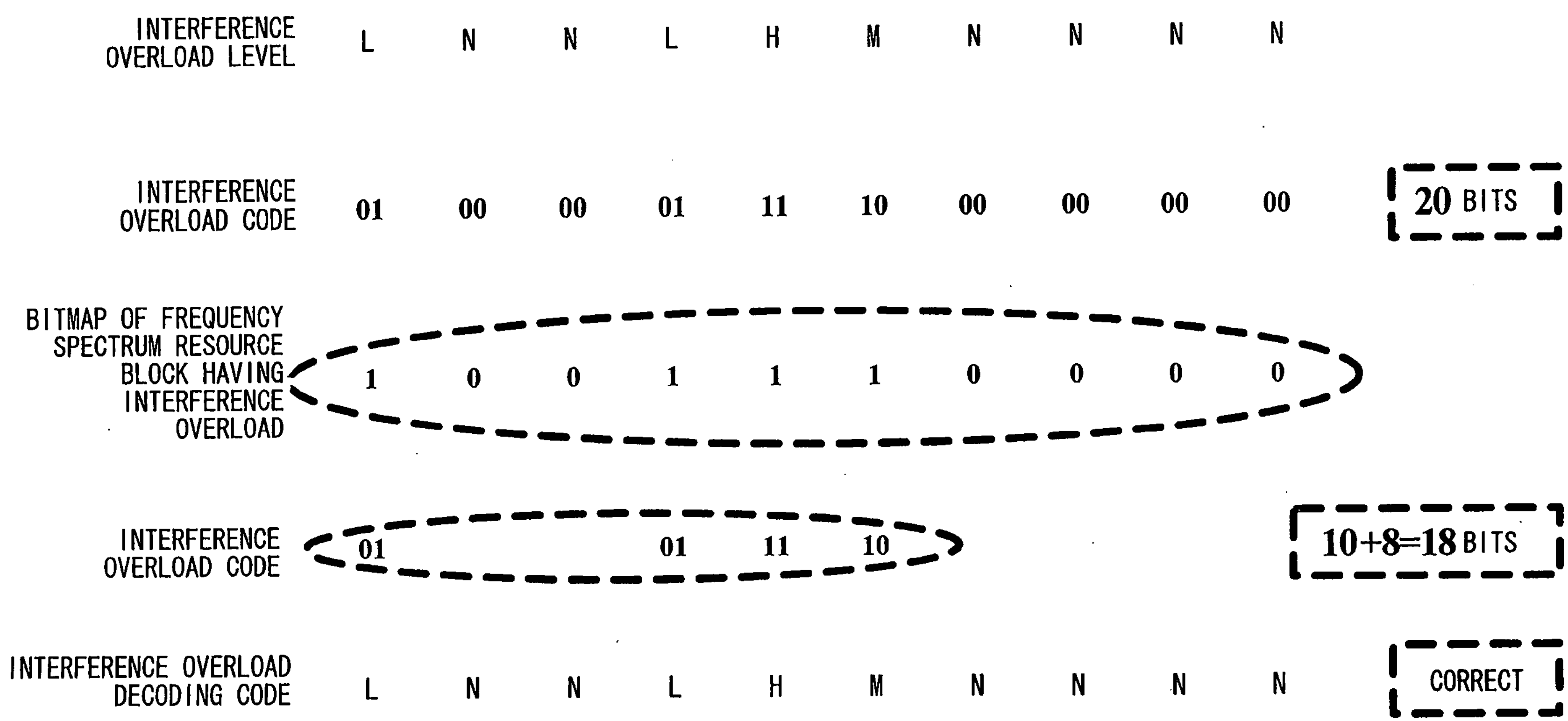
INTERFERENCE OVERLOAD LEVEL
L N N L H M N N N N
INTERFERENCE OVERLOAD CODE
01 00 00 01 11 10 00 00 00 00
20 BITS
BITMAP OF FREQUENCY SPECTRUM RESOURCE BLOCK HAVING INTERFERENCE OVERLOAD
1 0 0 1 1 1 0 0 0 0
INTERFERENCE OVERLOAD CODE
01 01 11 10
10+8=18 BITS
INTERFERENCE OVERLOAD DECODING CODE
L N N L H M N N N N
CORRECT

FIG. 14

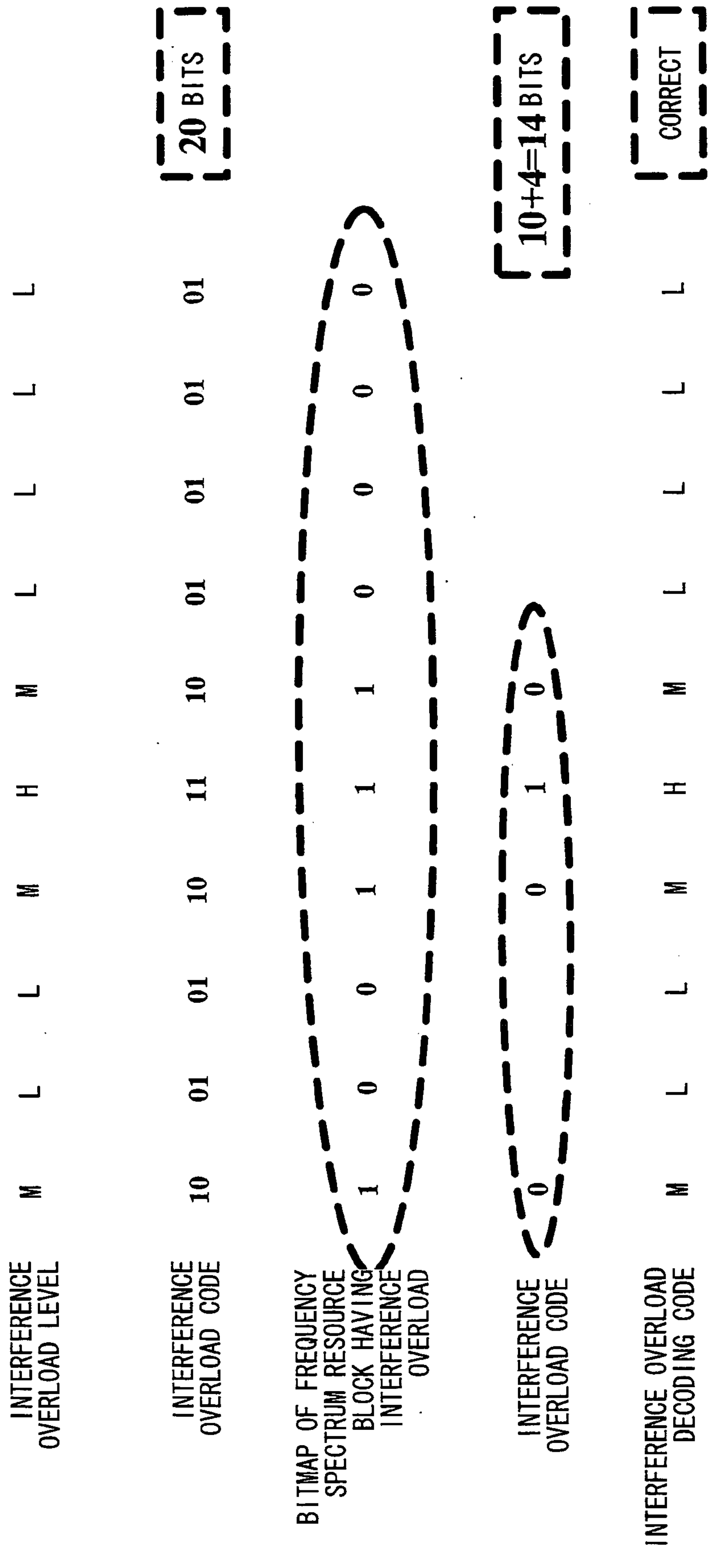
INTERFERENCE OVERLOAD LEVEL
M L L M H M L L L L
INTERFERENCE OVERLOAD CODE
10 01 01 10 11 10 01 01 01 01
20 BITS
BITMAP OF FREQUENCY SPECTRUM RESOURCE BLOCK HAVING INTERFERENCE OVERLOAD
1 0 0 1 1 1 0 0 0 0
INTERFERENCE OVERLOAD CODE
0 0 1 0
10+4=14 BITS
INTERFERENCE OVERLOAD DECODING CODE
M L L M H M L L L L
CORRECT

FIG. 15

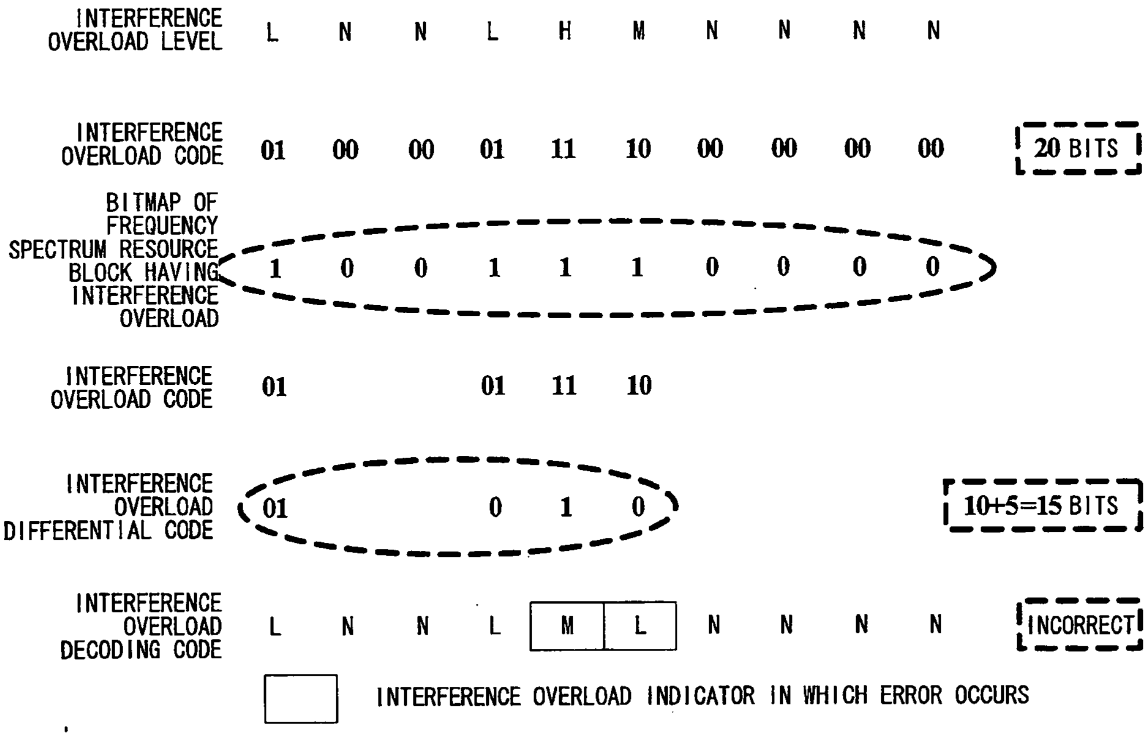
INTERFERENCE OVERLOAD LEVEL
L N N L H M N N N N
INTERFERENCE OVERLOAD CODE
01 00 00 01 11 10 00 00 00 00
20 BITS
BITMAP OF FREQUENCY SPECTRUM RESOURCE BLOCK HAVING INTERFERENCE OVERLOAD
1 0 0 1 1 1 0 0 0 0
INTERFERENCE OVERLOAD CODE
01 01 11 10
INTERFERENCE OVERLOAD DIFFERENTIAL CODE
01 0 1 0
10+5=15 BITS
INTERFERENCE OVERLOAD DECODING CODE
L N N L M L N N N N
INCORRECT
INTERFERENCE OVERLOAD INDICATOR IN WHICH ERROR OCCURS

FIG. 16

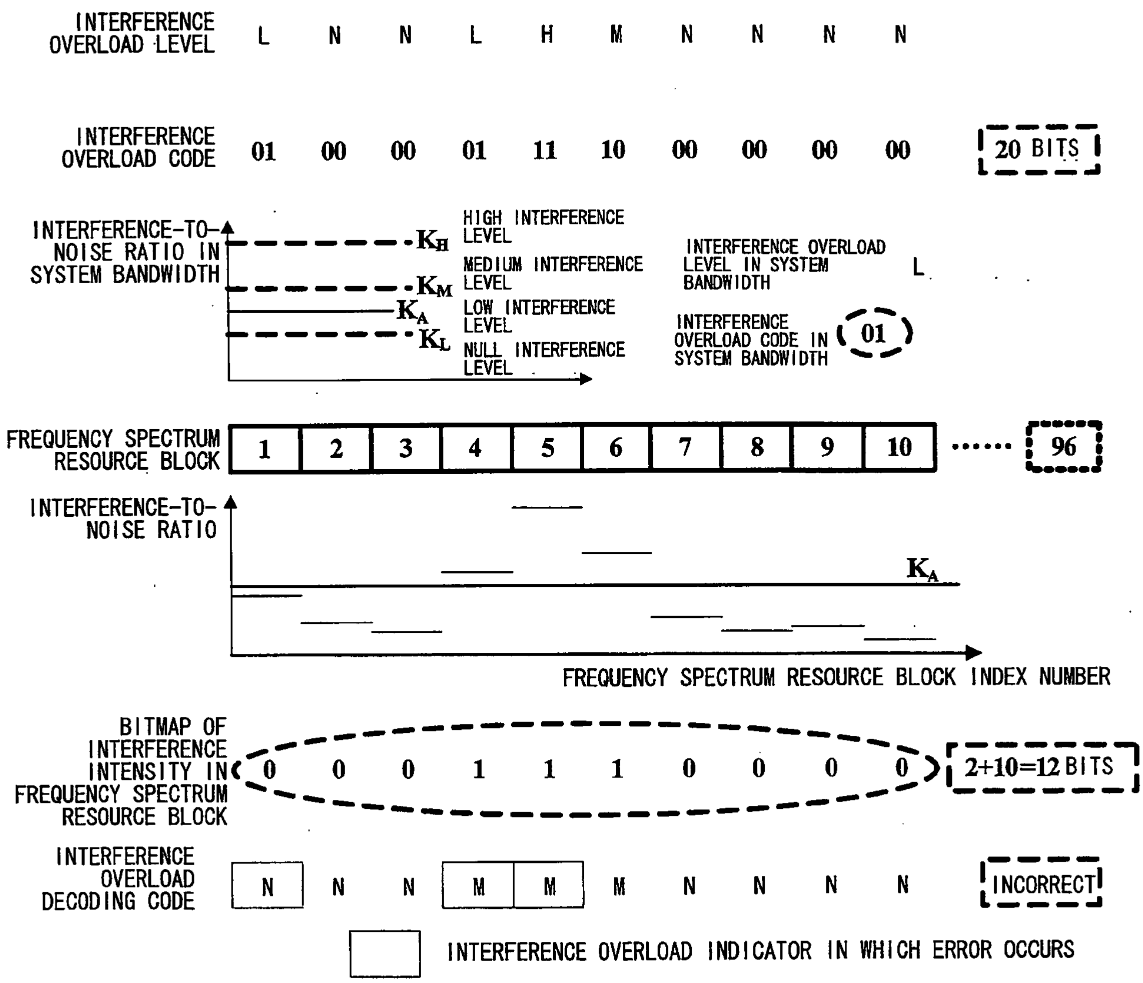
INTERFERENCE OVERLOAD LEVEL
L N N L H M N N N N
INTERFERENCE OVERLOAD CODE
01 00 00 01 11 10 00 00 00 00
20 BITS
INTERFERENCE-TO-NOISE RATIO IN SYSTEM BANDWIDTH
$K_H$
$K_M$
$K_A$
$K_L$
HIGH INTERFERENCE LEVEL
MEDIUM INTERFERENCE LEVEL
LOW INTERFERENCE LEVEL
NULL INTERFERENCE LEVEL
INTERFERENCE OVERLOAD LEVEL IN SYSTEM BANDWIDTH
L
INTERFERENCE OVERLOAD CODE IN SYSTEM BANDWIDTH
01
FREQUENCY SPECTRUM RESOURCE BLOCK
1 2 3 4 5 6 7 8 9 10 ...... 96
INTERFERENCE-TO-NOISE RATIO
$K_A$
FREQUENCY SPECTRUM RESOURCE BLOCK INDEX NUMBER
BITMAP OF INTERFERENCE INTENSITY IN FREQUENCY SPECTRUM RESOURCE BLOCK
0 0 0 1 1 1 0 0 0 0
2+10=12 BITS
INTERFERENCE OVERLOAD DECODING CODE
N N N M M M N N N N
INCORRECT
INTERFERENCE OVERLOAD INDICATOR IN WHICH ERROR OCCURS

FIG. 17

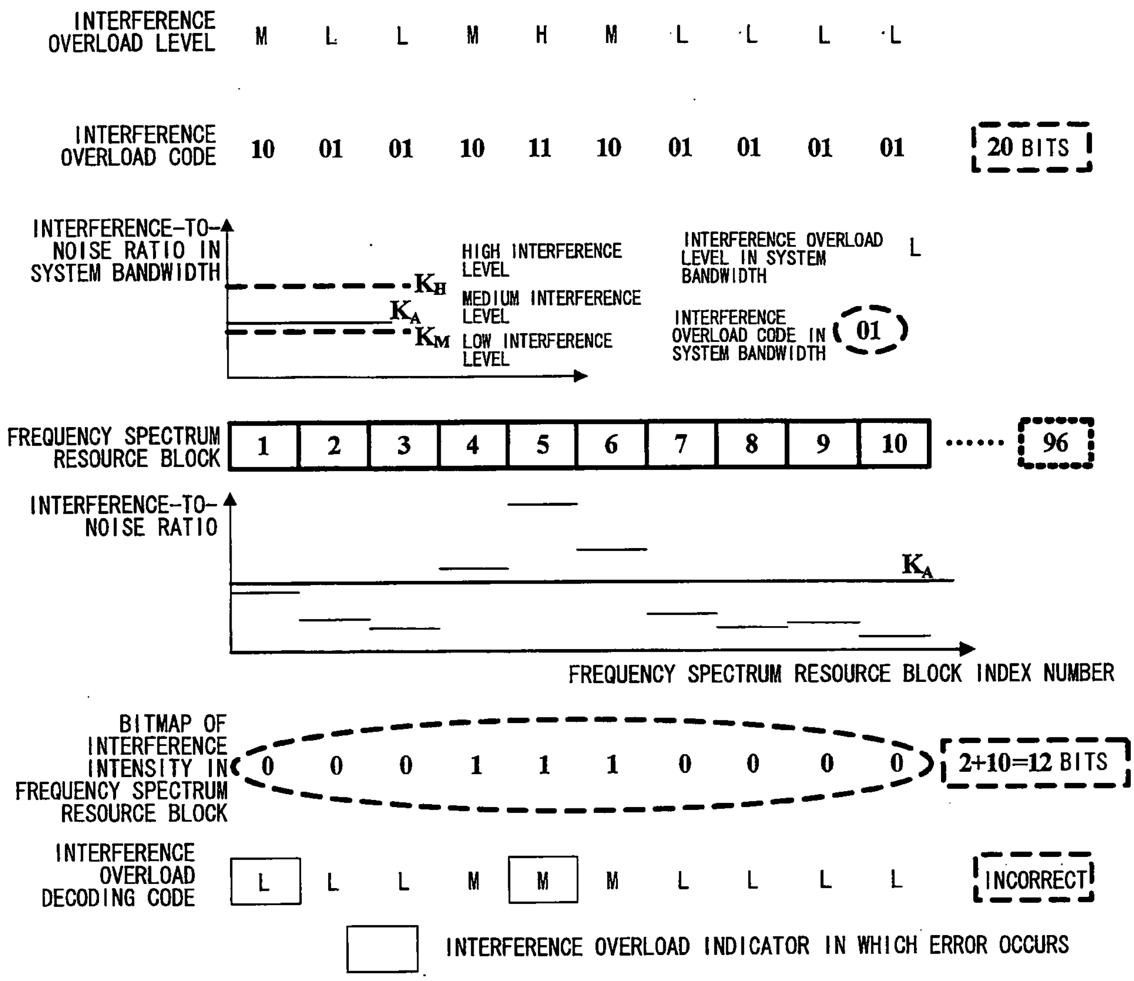

INTERFERENCE OVERLOAD LEVEL
M L L M H M L L L L
INTERFERENCE OVERLOAD CODE
10 01 01 10 11 10 01 01 01 01
20 BITS
INTERFERENCE-TO-NOISE RATIO IN SYSTEM BANDWIDTH
$K_H$
$K_A$
$K_M$
HIGH INTERFERENCE LEVEL
MEDIUM INTERFERENCE LEVEL
LOW INTERFERENCE LEVEL
INTERFERENCE OVERLOAD LEVEL IN SYSTEM BANDWIDTH
L
INTERFERENCE OVERLOAD CODE IN SYSTEM BANDWIDTH
01
FREQUENCY SPECTRUM RESOURCE BLOCK
1 2 3 4 5 6 7 8 9 10 ...... 96
INTERFERENCE-TO-NOISE RATIO
$K_A$
FREQUENCY SPECTRUM RESOURCE BLOCK INDEX NUMBER
BITMAP OF INTERFERENCE INTENSITY IN FREQUENCY SPECTRUM RESOURCE BLOCK
0 0 0 1 1 1 0 0 0 0
2+10=12 BITS
INTERFERENCE OVERLOAD DECODING CODE
L L L M M M L L L L
INCORRECT
INTERFERENCE OVERLOAD INDICATOR IN WHICH ERROR OCCURS

FIG. 18

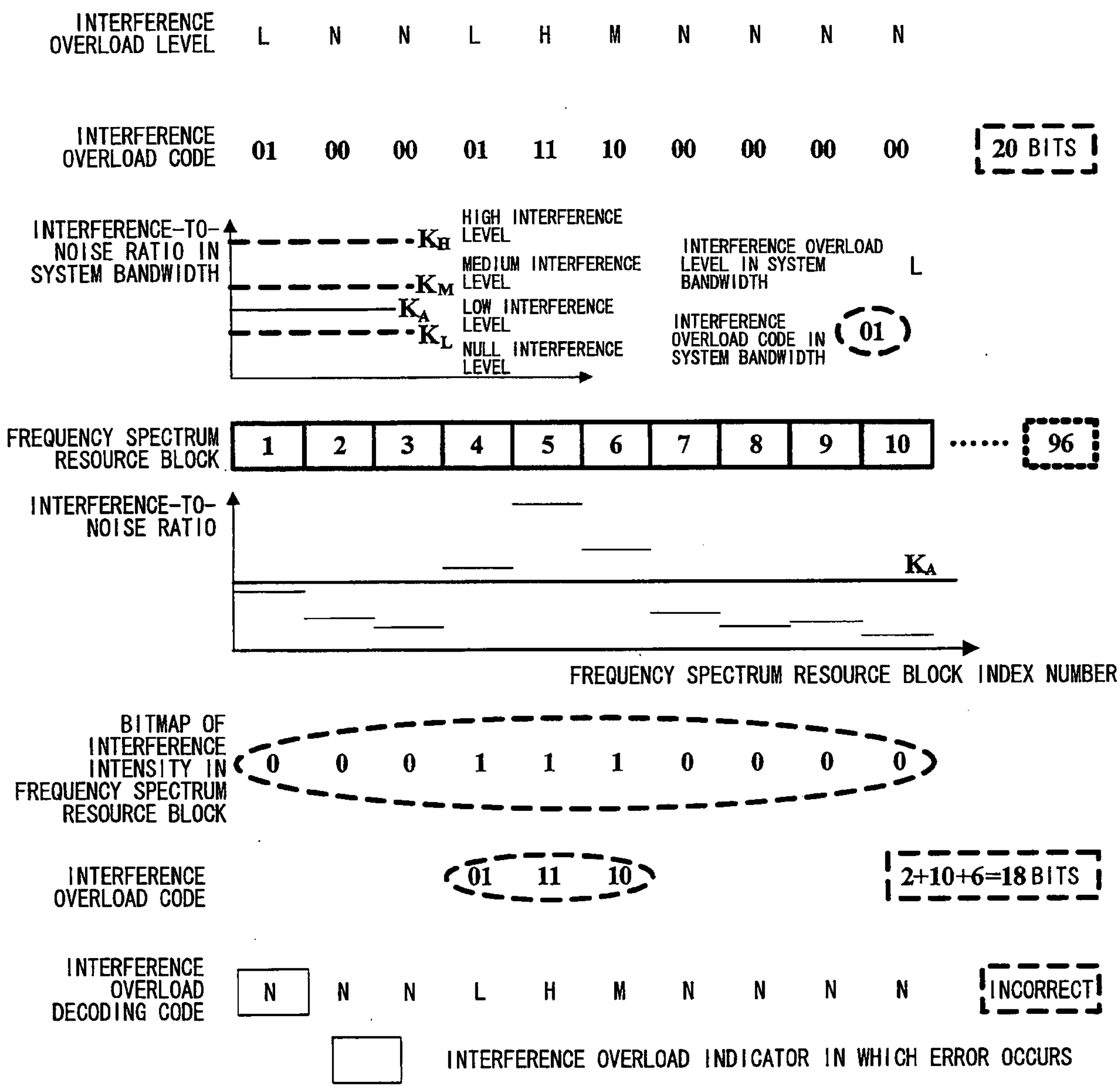
INTERFERENCE OVERLOAD LEVEL
L N N L H M N N N N
INTERFERENCE OVERLOAD CODE
01 00 00 01 11 10 00 00 00 00
20 BITS
INTERFERENCE-TO-NOISE RATIO IN SYSTEM BANDWIDTH
$K_H$
HIGH INTERFERENCE LEVEL
$K_M$
MEDIUM INTERFERENCE LEVEL
$K_A$
$K_L$
LOW INTERFERENCE LEVEL
NULL INTERFERENCE LEVEL
INTERFERENCE OVERLOAD LEVEL IN SYSTEM BANDWIDTH
L
INTERFERENCE OVERLOAD CODE IN SYSTEM BANDWIDTH
01
FREQUENCY SPECTRUM RESOURCE BLOCK
1 2 3 4 5 6 7 8 9 10 ...... 96
INTERFERENCE-TO-NOISE RATIO
$K_A$
FREQUENCY SPECTRUM RESOURCE BLOCK INDEX NUMBER
BITMAP OF INTERFERENCE INTENSITY IN FREQUENCY SPECTRUM RESOURCE BLOCK
0 0 0 1 1 1 0 0 0 0
INTERFERENCE OVERLOAD CODE
01 11 10
2+10+6=18 BITS
INTERFERENCE OVERLOAD DECODING CODE
N N N L H M N N N N
INCORRECT
INTERFERENCE OVERLOAD INDICATOR IN WHICH ERROR OCCURS

FIG. 19

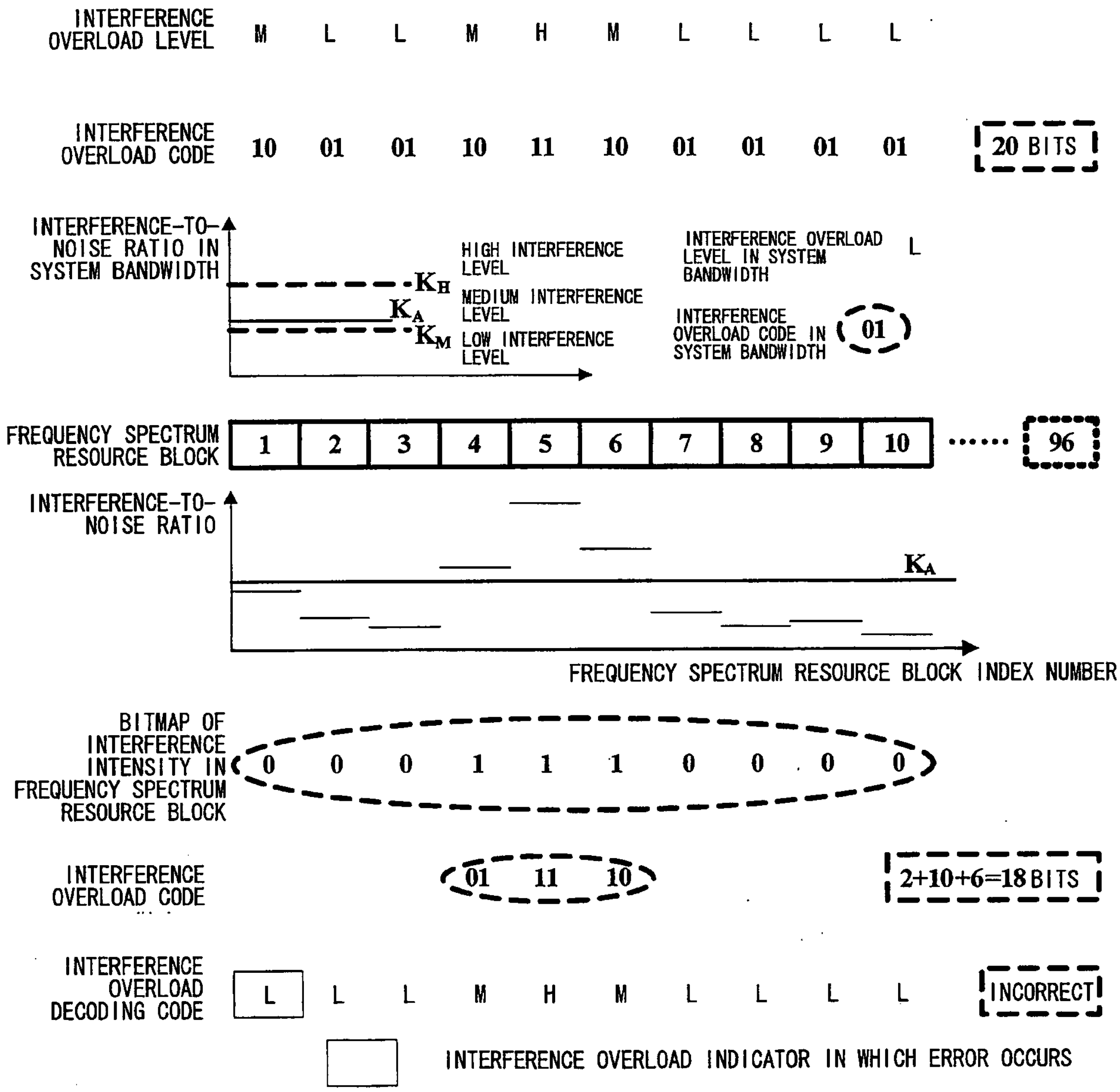
INTERFERENCE OVERLOAD LEVEL
M L L M H M L L L L
INTERFERENCE OVERLOAD CODE
10 01 01 10 11 10 01 01 01 01
20 BITS
INTERFERENCE-TO-NOISE RATIO IN SYSTEM BANDWIDTH
$K_H$
$K_A$
$K_M$
HIGH INTERFERENCE LEVEL
MEDIUM INTERFERENCE LEVEL
LOW INTERFERENCE LEVEL
INTERFERENCE OVERLOAD LEVEL IN SYSTEM BANDWIDTH
L
INTERFERENCE OVERLOAD CODE IN SYSTEM BANDWIDTH
01
FREQUENCY SPECTRUM RESOURCE BLOCK
1 2 3 4 5 6 7 8 9 10 ······ 96
INTERFERENCE-TO-NOISE RATIO
$K_A$
FREQUENCY SPECTRUM RESOURCE BLOCK INDEX NUMBER
BITMAP OF INTERFERENCE INTENSITY IN FREQUENCY SPECTRUM RESOURCE BLOCK
0 0 0 1 1 1 0 0 0 0
INTERFERENCE OVERLOAD CODE
01 11 10
2+10+6=18 BITS
INTERFERENCE OVERLOAD DECODING CODE
L L L M H M L L L L
INCORRECT
INTERFERENCE OVERLOAD INDICATOR IN WHICH ERROR OCCURS

FIG. 20

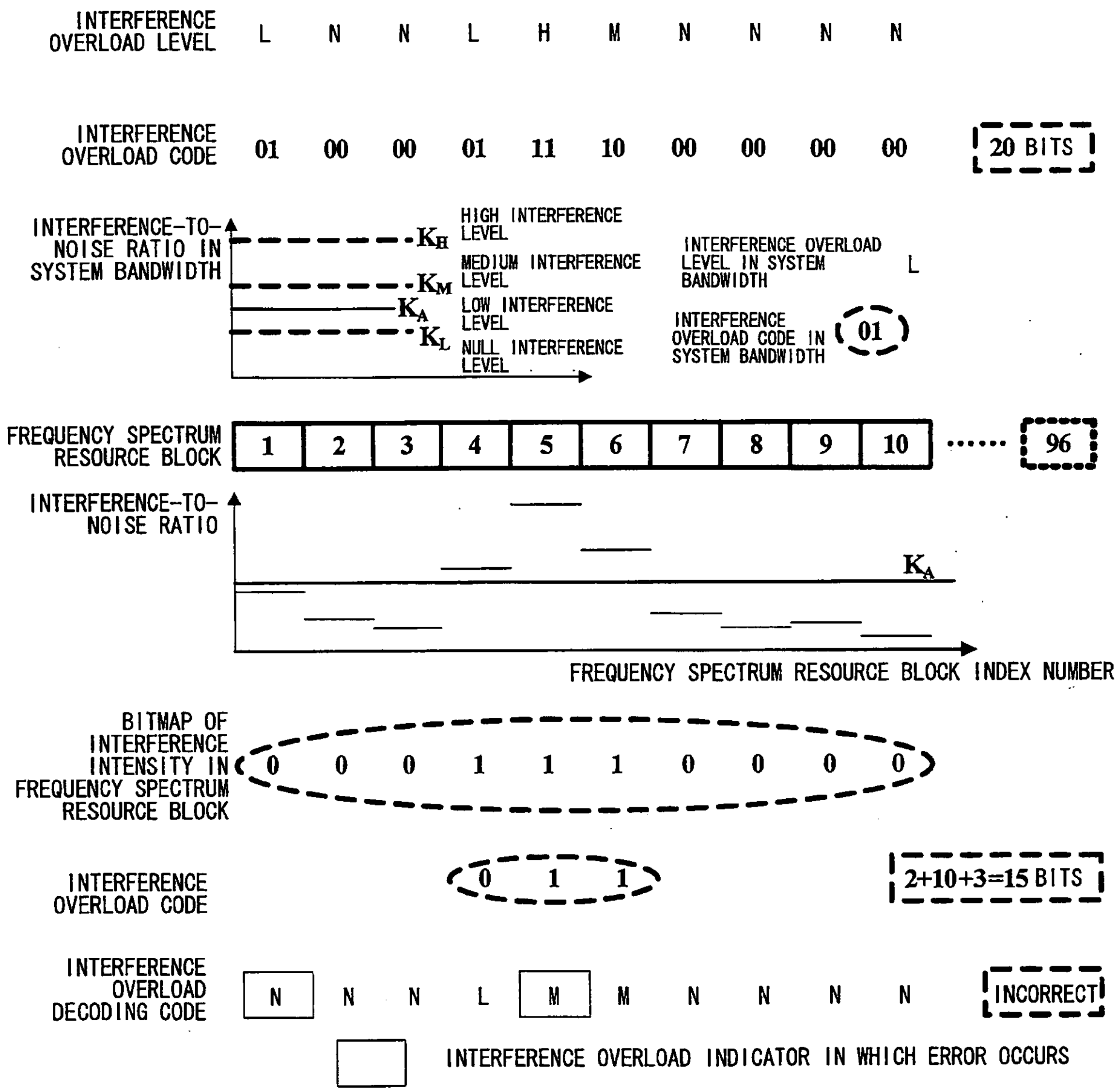
INTERFERENCE OVERLOAD LEVEL
L N N L H M N N N N
INTERFERENCE OVERLOAD CODE
01 00 00 01 11 10 00 00 00 00
20 BITS
INTERFERENCE-TO-NOISE RATIO IN SYSTEM BANDWIDTH
KH
KM
KA
KL
HIGH INTERFERENCE LEVEL
MEDIUM INTERFERENCE LEVEL
LOW INTERFERENCE LEVEL
NULL INTERFERENCE LEVEL
INTERFERENCE OVERLOAD LEVEL IN SYSTEM BANDWIDTH
L
INTERFERENCE OVERLOAD CODE IN SYSTEM BANDWIDTH
01
FREQUENCY SPECTRUM RESOURCE BLOCK
1 2 3 4 5 6 7 8 9 10 ...... 96
INTERFERENCE-TO-NOISE RATIO
KA
FREQUENCY SPECTRUM RESOURCE BLOCK INDEX NUMBER
BITMAP OF INTERFERENCE INTENSITY IN FREQUENCY SPECTRUM RESOURCE BLOCK
0 0 0 1 1 1 0 0 0 0
INTERFERENCE OVERLOAD CODE
0 1 1
2+10+3=15 BITS
INTERFERENCE OVERLOAD DECODING CODE
N N N L M M N N N N
INCORRECT
INTERFERENCE OVERLOAD INDICATOR IN WHICH ERROR OCCURS

FIG. 21

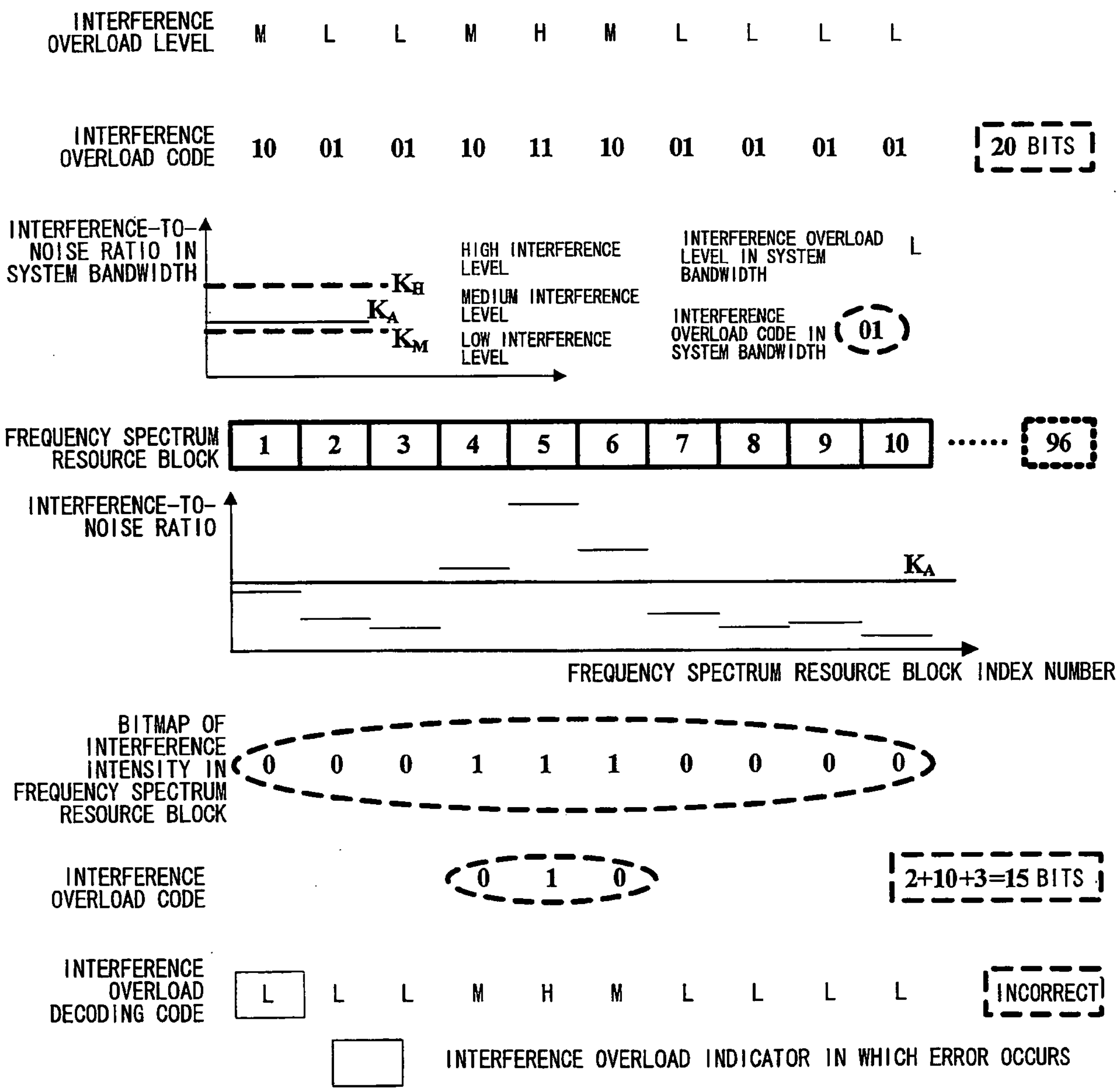
INTERFERENCE OVERLOAD LEVEL
M L L M H M L L L L
INTERFERENCE OVERLOAD CODE
10 01 01 10 11 10 01 01 01 01
20 BITS
INTERFERENCE-TO-NOISE RATIO IN SYSTEM BANDWIDTH
$K_H$
$K_A$
$K_M$
HIGH INTERFERENCE LEVEL
MEDIUM INTERFERENCE LEVEL
LOW INTERFERENCE LEVEL
INTERFERENCE OVERLOAD LEVEL IN SYSTEM BANDWIDTH
L
INTERFERENCE OVERLOAD CODE IN SYSTEM BANDWIDTH
01
FREQUENCY SPECTRUM RESOURCE BLOCK
1 2 3 4 5 6 7 8 9 10 ...... 96
INTERFERENCE-TO-NOISE RATIO
$K_A$
FREQUENCY SPECTRUM RESOURCE BLOCK INDEX NUMBER
BITMAP OF INTERFERENCE INTENSITY IN FREQUENCY SPECTRUM RESOURCE BLOCK
0 0 0 1 1 1 0 0 0 0
INTERFERENCE OVERLOAD CODE
0 1 0
2+10+3=15 BITS
INTERFERENCE OVERLOAD DECODING CODE
L L L M H M L L L L
INCORRECT
INTERFERENCE OVERLOAD INDICATOR IN WHICH ERROR OCCURS

FIG. 22

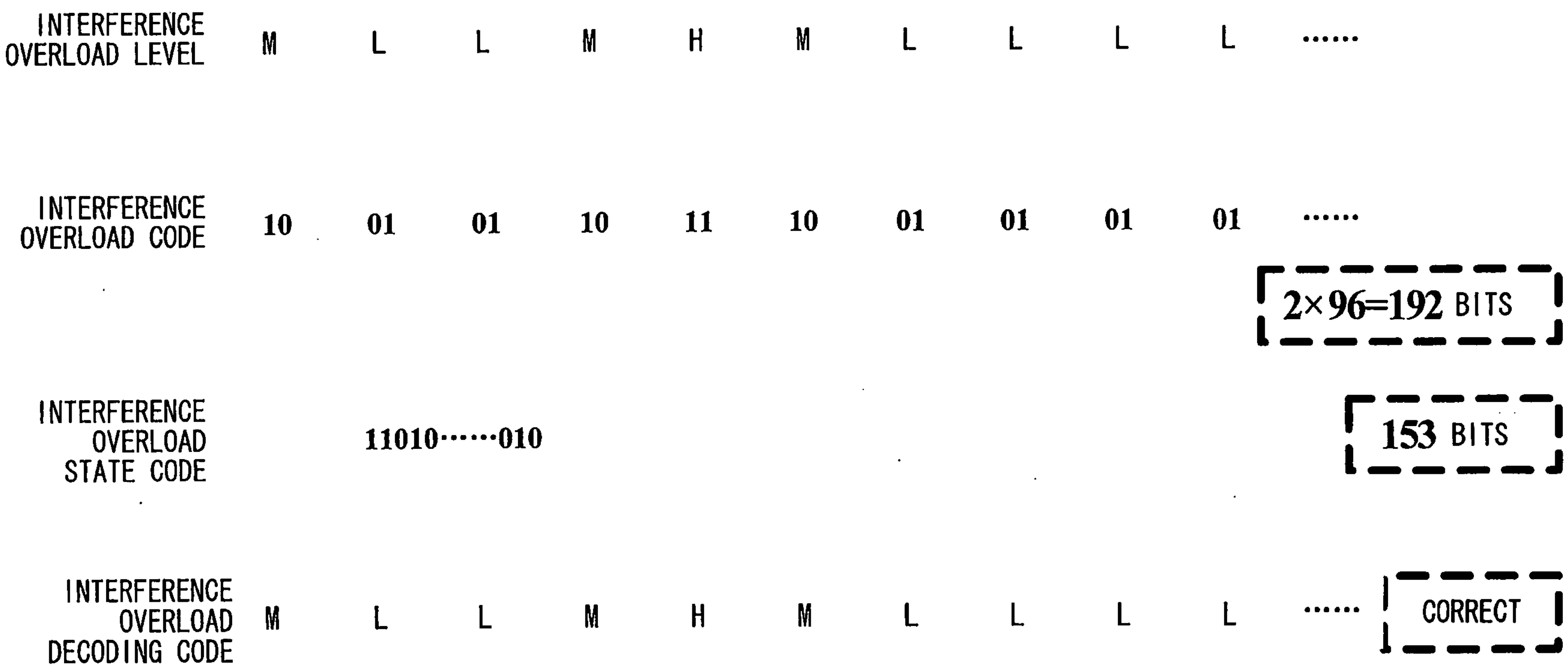
INTERFERENCE OVERLOAD LEVEL
M L L M H M L L L L ......
INTERFERENCE OVERLOAD CODE
10 01 01 10 11 10 01 01 01 01 ......
2×96=192 BITS
INTERFERENCE OVERLOAD STATE CODE
11010......010
153 BITS
INTERFERENCE OVERLOAD DECODING CODE
M L L M H M L L L L ......
CORRECT

FIG. 23

| | SUBBAND 1 | | SUBBAND 2 | | SUBBAND 3 | | SUBBAND 4 | | SUBBAND 5 | | | |
|---|---|---|---|---|---|---|---|---|---|---|---|---|
| INTERFERENCE OVERLOAD LEVEL | M | L | L | M | H | M | L | L | L | L | ...... | |
| INTERFERENCE OVERLOAD CODE | 10 | 01 | 01 | 10 | 11 | 10 | 01 | 01 | 01 | 01 | ...... | 2×96=192 BITS |
| INTERFERENCE OVERLOAD STATE CODE | 0011 | | 0001 | | 0111 | | 0000 | | 0000 | | | 4×48=192 BITS |
| INTERFERENCE OVERLOAD DECODING CODE | M | L | L | M | H | M | L | L | L | L | ...... | CORRECT |

FIG. 24

| | SUBBAND 1 | | SUBBAND 2 | | SUBBAND 3 | | SUBBAND 4 | | SUBBAND 5 | | | |
|---|---|---|---|---|---|---|---|---|---|---|---|---|
| INTERFERENCE OVERLOAD LEVEL | M | L | L | M | H | M | L | L | L | L | ...... | |
| INTERFERENCE OVERLOAD CODE | 10 | 01 | 01 | 10 | 11 | 10 | 01 | 01 | 01 | 01 | ...... | 2×96=192 BITS |
| INTERFERENCE OVERLOAD STATE CODE | 010 | | 000 | | 110 | | 000 | | 000 | | | 3×48=144 BITS |
| INTERFERENCE OVERLOAD DECODING CODE | M | L | L | M | H | M | L | M | L | M | ...... | INCORRECT |

□ INTERFERENCE OVERLOAD INDICATOR IN WHICH ERROR OCCURS

**INTERNATIONAL SEARCH REPORT**

International application No.
PCT/JP2009/055503

A. CLASSIFICATION OF SUBJECT MATTER
*H04W52/54*(2009.01)i, *H04W28/12*(2009.01)i, *H04W52/24*(2009.01)i

According to International Patent Classification (IPC) or to both national classification and IPC

B. FIELDS SEARCHED

Minimum documentation searched (classification system followed by classification symbols)
H04W4/00-H04W99/00, H04B7/24-H04B7/26

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | Alcatel-Lucent, 6.3.3 Inter-Cell Interference Coordination, 3GPP R1-080447, 3GPP, 2008.01.14 | 1-62 |
| A | Telecom Italia et al., 6.4.3 Inter-cell Interference Coordination, 3GPP R1-075050, 3GPP, 2007.11.05 | 1-62 |
| A | Qualcomm Europe, 6.3.3 Details on inter-cell interference coordination, 3GPP R1-080491, 3GPP, 2007.01.14 | 1-62 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18 May, 2009 (18.05.09) | 26 May, 2009 (26.05.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- Uplink ICIC and usage of OI for overload coordination. *3GPP, R1-074891*
- Uplink Inter-Cell Power Control: X2 Messages. *3GPP, R1-080751,* 11 February 2008